# EUROPEAN PATENT APPLICATION

(11) **EP 3 960 593 A1**
(43) Date of publication of application: **02.03.2022**
(21) Application number: 21191893.3
(22) Date of filing: 18.08.2021
(51) Int. Cl.: B62D 55/14, B62D 55/24, B62D 55/32, G01M 17/03

(54) **MONITORING OF TRACK SYSTEM FOR TRACTION OF A VEHICLE**

(30) Priority: 18.08.2020 US 202063067161 P
(71) Applicant: Camso Inc., Magog, Québec J1X 0E6 (CA)
(72) Inventor: Desmarais, Gérard, 9000 GENT (BE); Price, Trail, FRANKLIN, 37067 (US); Lavoie, Patrick, ORFORD, J1X 7H5 (CA); Moysan, Julien, FARNHAM, J2N 2P9 (CA)
(74) Representative: Plasseraud IP

(57) **Abstract**

A vehicle with a track system including a track for traction of the vehicle on a ground can be monitored (e.g., during operation of the vehicle) to obtain information regarding the vehicle, including information regarding the track system, such as a temperature and/or another characteristic of a wheel of the track system sensed by a sensor of that wheel and/or a temperature and/or another characteristic of the track sensed by a sensor of the track, which can be used to inform a user (e.g., an operator of the vehicle), assessing wear, vibration, and/or other aspects of the track system, evaluating use (e.g., a duty cycle), performance, and/or other aspects of the vehicle, and/or control the vehicle (e.g., a speed of the vehicle), for properly aligning the track and/or other purposes. This may be useful, for example, to help prevent rapid wear or other deterioration of the track and/or for various other reasons.

## Description

### FIELD

This disclosure relates generally to off-road vehicles comprising track systems (e.g., agricultural vehicles, industrial vehicles, etc.) and, more particularly, to monitoring track systems for traction of vehicles.

### BACKGROUND

Off-road vehicles, including agricultural vehicles (e.g., tractors, harvesters, combines, etc.), construction vehicles (e.g., loaders, excavators, bulldozers, etc.), and forestry vehicles (e.g., feller-bunchers, knuckleboom loaders, etc.), military vehicles (e.g., combat engineering vehicles (CEVs), etc.), snowmobiles, and all-terrain vehicles (ATVs), may comprise track systems to enhance their traction and floatation on soft, slippery, and/or irregular grounds (e.g., soil, mud, etc.).

In use, a track system, which comprises a track moving around a track-engaging assembly (e.g., including wheels), may experience various effects that can affect its performance, durability, etc. For example, the track may sometimes be poorly aligned with the track-engaging assembly, and this may lead to premature wear of the track, detracking, etc. In some cases, poor alignment of the track may generate heat which can be damageable. For instance, if too much heat is accumulated in it, the track may get damaged and eventually blowout.

Due to harsh environments and a moving nature of tracks and other components of track systems, it may be difficult to readily and reliably assess alignment or other aspects of their track during use.

For these and other reasons, improvements for track systems of vehicles would be welcomed.

### SUMMARY

According to various aspects of this disclosure, a vehicle comprising a track system including a track for traction of the vehicle on a ground can be monitored (e.g., during operation of the vehicle) to obtain information regarding the vehicle, including information regarding the track system, such as a temperature and/or another characteristic of a wheel of the track system sensed by a sensor of that wheel and/or a temperature and/or another characteristic of the track sensed by a sensor of the track, which can be used to inform a user (e.g., an operator of the vehicle) and/or control the vehicle (e.g., a speed of the vehicle), for properly aligning the track, assessing wear, vibration, and/or other aspects of the track system, evaluating use (e.g., a duty cycle), performance, and/or other aspects of the vehicle, and/or other purposes. This may be useful, for example, to help prevent rapid wear or other deterioration of the track and/or for various other reasons.

For example, according to an aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels; and a processing apparatus configured to generate a signal relating to alignment of the track based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels, the given one of the wheels comprising a rigid body comprising a hub portion, a rim portion, and a radially-extending portion between the hub portion and the rim portion, the sensor being mountable to the rigid body of the given one of the wheels; and a processing apparatus configured to generate a signal relating to alignment of the track based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The wheels include a front idler wheel and a rear idler wheel spaced from one another in a longitudinal direction of the track system. The monitoring system comprises: a sensor configured to sense a characteristic of a given one of the front idler wheel and the rear idler wheel; and a processing apparatus configured to generate a signal relating to alignment of the track based on the characteristic of the given one of the front idler wheel and the rear idler wheel.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track comprises a plurality of wheel-contacting projections projecting from the inner surface of the track. The monitoring system comprises: a sensor configured to sense a characteristic of a given one of the wheels, the given one of the wheels comprising a projection-contacting region configured to contact respective ones of the wheel-contacting projections of the track, the sensor being located in the projection-contacting region of the given one of the wheels; and a processing apparatus configured to generate a signal relating to alignment of the track based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track comprises a plurality of wheel-contacting projections projecting from the inner surface of the track. The monitoring system comprises: a sensor configured to sense a characteristic of a given one of the wheels, the sensor being located on the given one of the wheels within a distance from a periphery of the given one of the wheels that is no more than a height of an individual one of the wheel-contacting projections of the track; and a processing apparatus configured to generate a signal relating to alignment of the track based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a first sensor configured to sense a characteristic of a first one of the wheels; a second sensor configured to sense a characteristic of a second one of the wheels; and a processing apparatus configured to generate a signal relating to alignment of the track based on the characteristic of the first one of the wheels and the characteristic of the second one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels, the sensor comprising a quick connector configured to connect the sensor to and disconnect the sensor from a connecting part of the given one of the wheels; and a processing apparatus configured to generate a signal relating to alignment of the track based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels, the sensor comprising a connector configured to toollessly connect the sensor to and toollessly disconnect the sensor from a connecting part of the given one of the wheels; and a processing apparatus configured to generate a signal relating to alignment of the track based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels, the sensor comprising a magnetic element configured to magnetically connect the sensor to a connecting part of the given one of the wheels; and a processing apparatus configured to generate a signal relating to alignment of the track based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of the track system, the sensor comprising a quick connector configured to connect the sensor to and disconnect the sensor from a connecting part of the track system; and a processing apparatus configured to generate a signal relating to alignment of the track based on the characteristic of the track system.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of the track system, the sensor comprising a connector configured to toollessly connect the sensor to and toollessly disconnect the sensor from a connecting part of the track system; and a processing apparatus configured to generate a signal relating to alignment of the track based on the characteristic of the track system. According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of the track system; and a processing apparatus configured to generate a signal based on the characteristic of the track system and notifying a user of a magnitude of an adjustment to be made to adjust alignment of the track.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a first sensor configured to sense a characteristic of a first component of the track system; a second sensor configured to sense a characteristic of a second component of the track system; and a processing apparatus configured to generate a signal relating to alignment of the track based the characteristic of the first component of the track system and the characteristic of the second component of the track system.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a first sensor configured to sense a characteristic of a first one of the track systems; a second sensor configured to sense a characteristic of a second one of the track systems; and a processing apparatus configured to generate a signal relating to alignment of at least one of the track of the first one of the track systems and the track of the second one of the track systems based on the characteristic of the first one of the track systems and the characteristic of the second one of the track systems.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor being configured to interact with a processing apparatus configured to generate a signal relating to alignment of the track based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the given one of the wheels comprising a rigid body comprising a hub portion, a rim portion, and a radially-extending portion between the hub portion and the rim portion, the sensor being mounted to the rigid body of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track, the wheels including a front idler wheel and a rear idler wheel spaced from one another in a longitudinal direction of the track system; and a sensor mounted to a given one of the front idler wheel and the rear idler wheel and configured to sense a characteristic of the given one of the front idler wheel and the rear idler wheel.

According to another aspect of this disclosure, there is provided a track system for traction of a vehicle. The track system comprises: a track comprising a ground-engaging outer surface, an inner surface opposite to the ground-engaging outer surface, and a plurality of wheel-contacting projections projecting from the inner surface of the track; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the given one of the wheels comprising a projection-contacting region configured to contact respective ones of the wheel-contacting projections of the track, the sensor being located in the projection-contacting region of the given one of the wheels.

According to another aspect of this disclosure, there is provided a track system for traction of a vehicle. The track system comprises: a track comprising a ground-engaging outer surface, an inner surface opposite to the ground-engaging outer surface, and a plurality of wheel-contacting projections projecting from the inner surface of the track; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor being located on the given one of the wheels within a distance from a periphery of the given one of the wheels that is no more than a height of an individual one of the wheel-contacting projections of the track.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; a first sensor configured to sense a characteristic of a first one of the wheels and a second sensor configured to sense a characteristic of a second one of the wheels, the first sensor and the second sensor being configured to interact with a processing apparatus configured to generate a signal relating to alignment of the track based on the characteristic of the first one of the wheels and the characteristic of the second one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor comprising a quick connector configured to connect the sensor to and disconnect the sensor from a connecting part of the given one of the wheels, the sensor being configured to interact with a processing apparatus configured to generate a signal relating to alignment of the track based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor comprising a connector configured to toollessly connect the sensor to and toollessly disconnect the sensor from a connecting part of the given one of the wheels, the sensor being configured to interact with a processing apparatus configured to generate a signal relating to alignment of the track based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor comprising a magnetic element configured to magnetically connect the sensor to a connecting part of the given one of the wheels, the sensor being configured to interact with a processing apparatus configured to generate a signal relating to alignment of the track based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of the track system, the sensor comprising a quick connector configured to connect the sensor to and disconnect the sensor from a connecting part of the track system, the sensor being configured to interact with a processing apparatus configured to generate a signal relating to alignment of the track based on the characteristic of the track system.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of the track system, the sensor comprising a connector configured to toollessly connect the sensor to and toollessly disconnect the sensor from a connecting part of the track system, the sensor being configured to interact with a processing apparatus configured to generate a signal relating to alignment of the track based on the characteristic of the track system.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of the track system, the sensor being configured to interact with a processing apparatus configured to generate a signal based on the characteristic of the track system and notifying a user of a magnitude of an adjustment to be made to adjust alignment of the track.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; a first sensor configured to sense a characteristic of a first component of the track system; and a second sensor configured to sense a characteristic of a second component of the track system. The first sensor and the second sensor are configured to interact with a processing apparatus configured to generate a signal relating to alignment of the track based the characteristic of the first component of the track system and the characteristic of the second component of the track system.

According to another aspect of this disclosure, there is provided set of track systems for traction of a vehicle. Each track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of the track system. The sensors of the track systems are configured to interact with a processing apparatus configured to generate a signal relating to alignment of at least one of the track of a first one of the track systems and the track of a second one of the track systems based on the characteristic of the first one of the track systems and the characteristic of the second one of the track systems.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor being configured to interact with a processing apparatus configured to generate a signal relating to alignment of the track based on the characteristic of the wheel.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor mounted to the rigid body and configured to sense a characteristic of the wheel.

According to another aspect of this disclosure, there is provided a wheel for a track system for traction of a vehicle. The track system comprises a track that comprises a ground-engaging outer surface, an inner surface opposite to the ground-engaging outer surface, and a plurality of wheel-contacting projections projecting from the inner surface of the track. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the wheel comprising a projection-contacting region configured to contact respective ones of the wheel-contacting projections of the track, the sensor being located in the projection-contacting region of the wheel.

According to another aspect of this disclosure, there is provided a wheel for a track system for traction of a vehicle. The track system comprises a track that comprises a ground-engaging outer surface, an inner surface opposite to the ground-engaging outer surface, and a plurality of wheel-contacting projections projecting from the inner surface of the track. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor being located on the wheel within a distance from a periphery of the wheel that is no more than a height of an individual one of the wheel-contacting projections of the track.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor comprising a quick connector configured to connect the sensor to and disconnect the sensor from the rigid body of the wheel, the sensor being configured to interact with a processing apparatus configured to generate a signal relating to alignment of the track based on the characteristic of the wheel.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor comprising a connector configured to toollessly connect the sensor to and toollessly disconnect the sensor from the rigid body of the wheel, the sensor being configured to interact with a processing apparatus configured to generate a signal relating to alignment of the track based on the characteristic of the wheel.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor comprising a magnetic element configured to magnetically connect the sensor to the rigid body of the wheel, the sensor being configured to interact with a processing apparatus configured to generate a signal relating to alignment of the track based on the characteristic of the wheel.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels; and generating a signal relating to alignment of the track based on the characteristic of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly com comprises prising a plurality of wheels for engaging the track. The track is elastomeric to flex around the track-engaging assembly. The method comprises: using a sensor to sense a characteristic of a given one of the wheels, the given one of the wheels comprising a rigid body comprising a hub portion, a rim portion, and a radially-extending portion between the hub portion and the rim portion, the sensor being mounted to the rigid body of the given one of the wheels; and generating a signal relating to alignment of the track based on the characteristic of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The wheels include a front idler wheel and a rear idler wheel spaced from one another in a longitudinal direction of the track system. The method comprises: using a sensor to sense a characteristic of a given one of the front idler wheel and the rear idler wheel; and generating a signal relating to alignment of the track based on the characteristic of the given one of the front idler wheel and the rear idler wheel.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track comprises a plurality of wheel-contacting projections projecting from the inner surface of the track. The method comprises: using a sensor to sense a characteristic of a given one of the wheels, the given one of the wheels comprising a projection-contacting region configured to contact respective ones of the wheel-contacting projections of the track, the sensor being located in the projection-contacting region of the given one of the wheels; and generating a signal relating to alignment of the track based on the characteristic of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track comprises a plurality of wheel-contacting projections projecting from the inner surface of the track. The method comprises: using a sensor to sense a characteristic of a given one of the wheels, the sensor being located on the given one of the wheels within a distance from a periphery of the given one of the wheels that is no more than a height of an individual one of the wheel-contacting projections of the track; and generating a signal relating to alignment of the track based on the characteristic of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a first sensor to sense a characteristic of a first one of the wheels; using a second sensor to sense a characteristic of a second one of the wheels; and generating a signal relating to alignment of the track based on the characteristic of the first one of the wheels and the characteristic of the second one of the wheels.

According to another aspect of this disclosure, there is provided a method for monitoring a vehicle comprising a track. The track comprises a ground-engaging outer surface and an inner surface opposite to the ground-engaging outer surface and being mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels, the sensor comprising a quick connector configured to connect the sensor to and disconnect the sensor from a connecting part of the given one of the wheels; and generating a signal relating to alignment of the track based on the characteristic of the given one of the wheels.

According to another aspect of this disclosure, there is provided a method for monitoring a vehicle comprising a track. The track comprises a ground-engaging outer surface and an inner surface opposite to the ground-engaging outer surface and being mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels, the sensor comprising a connector configured to toollessly connect the sensor to and toollessly disconnect the sensor from a connecting part of the given one of the wheels; and generating a signal relating to alignment of the track based on the characteristic of the given one of the wheels.

According to another aspect of this disclosure, there is provided a method for monitoring a vehicle comprising a track. The track comprises a ground-engaging outer surface and an inner surface opposite to the ground-engaging outer surface and being mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels, the sensor comprising a magnetic element configured to magnetically connect the sensor to a connecting part of the given one of the wheels; and generating a signal relating to alignment of the track based on the characteristic of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of the track system, the sensor comprising a quick connector configured to connect the sensor to and disconnect the sensor from a connecting part of the track system; and generating a signal relating to alignment of the track based on the characteristic of the track system.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of the track system, the sensor comprising a connector configured to toollessly connect the sensor to and toollessly disconnect the sensor from a connecting part of the track system; and generating a signal relating to alignment of the track based on the characteristic of the track system.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of the track system; and generating a signal based on the characteristic of the track system and notifying a user of a magnitude of an adjustment to be made to adjust alignment of the track.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a first sensor configured to sense a characteristic of a first component of the track system; using a second sensor configured to sense a characteristic of a second component of the track system; and generating a signal relating to alignment of the track based the characteristic of the first component of the track system and the characteristic of the second component of the track system.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a first sensor configured to sense a characteristic of a first one of the track systems; using a second sensor configured to sense a characteristic of a second one of the track systems; and generating a signal relating to alignment of at least one of the track of the first one of the track systems and the track of the second one of the track systems based on the characteristic of the first one of the track systems and the characteristic of the second one of the track systems.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a temperature sensor configured to sense a temperature of a given one of the wheels; and a processing apparatus configured to generate a signal relating to alignment of the track based on the temperature of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a temperature sensor configured to sense a temperature of a given one of the wheels, the given one of the wheels comprising a rigid body comprising a hub portion, a rim portion, and a radially-extending portion between the hub portion and the rim portion, the temperature sensor being mountable to the rigid body of the given one of the wheels; and a processing apparatus configured to generate a signal relating to alignment of the track based on the temperature of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The wheels include a front idler wheel and a rear idler wheel spaced from one another in a longitudinal direction of the track system. The monitoring system comprises: a temperature sensor configured to sense a temperature of a given one of the front idler wheel and the rear idler wheel; and a processing apparatus configured to generate a signal relating to alignment of the track based on the temperature of the given one of the front idler wheel and the rear idler wheel.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track comprises a plurality of wheel-contacting projections projecting from the inner surface of the track. The monitoring system comprises: a temperature sensor configured to sense a temperature of a given one of the wheels, the given one of the wheels comprising a projection-contacting region configured to contact respective ones of the wheel-contacting projections of the track, the temperature sensor being located in the projection-contacting region of the given one of the wheels; and a processing apparatus configured to generate a signal relating to alignment of the track based on the temperature of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track comprises a plurality of wheel-contacting projections projecting from the inner surface of the track. The monitoring system comprises: a temperature sensor configured to sense a temperature of a given one of the wheels, the temperature sensor being located on the given one of the wheels within a distance from a periphery of the given one of the wheels that is no more than a height of an individual one of the wheel-contacting projections of the track; and a processing apparatus configured to generate a signal relating to alignment of the track based on the temperature of the given one of the wheels.

According to another aspect of this disclosure, there is provided a monitoring system for a vehicle comprising a track for traction of the vehicle on a ground. The track comprising a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a first temperature sensor configured to sense a temperature of a first one of the wheels; a second temperature sensor configured to sense a temperature of a second one of the wheels; and a processing apparatus configured to generate a signal relating to alignment of the track based on the temperature of the first one of the wheels and the temperature of the second one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a temperature sensor configured to sense a temperature of a given one of the wheels, the temperature sensor comprising a quick connector configured to connect the sensor to and disconnect the temperature sensor from a connecting part of the given one of the wheels; and a processing apparatus configured to generate a signal relating to alignment of the track based on the temperature of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a temperature sensor configured to sense a temperature of a given one of the wheels, the temperature sensor comprising a connector configured to toollessly connect the temperature sensor to and toollessly disconnect the temperature sensor from a connecting part of the given one of the wheels; and a processing apparatus configured to generate a signal relating to alignment of the track based on the temperature of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a temperature sensor configured to sense a temperature of a given one of the wheels, the temperature sensor comprising a magnetic element configured to magnetically connect the temperature sensor to a connecting part of the given one of the wheels; and a processing apparatus configured to generate a signal relating to alignment of the track based on the temperature of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a temperature sensor configured to sense a temperature of the track system, the temperature sensor comprising a quick connector configured to connect the temperature sensor to and disconnect the temperature sensor from a connecting part of the track system; and a processing apparatus configured to generate a signal relating to alignment of the track based on the temperature of the track system.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a temperature sensor configured to sense a temperature of the track system, the temperature sensor comprising a connector configured to toollessly connect the temperature sensor to and toollessly disconnect the temperature sensor from a connecting part of the track system; and a processing apparatus configured to generate a signal relating to alignment of the track based on the temperature of the track system.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a temperature sensor configured to sense a temperature of the track system; and a processing apparatus configured to generate a signal based on the temperature of the track system and notifying a user of a magnitude of an adjustment to be made to adjust alignment of the track.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a first temperature sensor configured to sense a temperature of a first component of the track system; a second temperature sensor configured to sense a temperature of a second component of the track system; and a processing apparatus configured to generate a signal relating to alignment of the track based the temperature of the first component of the track system and the temperature of the second component of the track system.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a first temperature sensor configured to sense a temperature of a first one of the track systems; a second temperature sensor configured to sense a temperature of a second one of the track systems; and a processing apparatus configured to generate a signal relating to alignment of at least one of the track of the first one of the track systems and the track of the second one of the track systems based on the temperature of the first one of the track systems and the temperature of the second one of the track systems.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of a given one of the wheels, the temperature sensor being configured to interact with a processing apparatus configured to generate a signal relating to alignment of the track based on the temperature of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of a given one of the wheels, the given one of the wheels comprising a rigid body comprising a hub portion, a rim portion, and a radially-extending portion between the hub portion and the rim portion, the temperature sensor being mounted to the rigid body of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track, the wheels including a front idler wheel and a rear idler wheel spaced from one another in a longitudinal direction of the track system; and a temperature sensor mounted to a given one of the front idler wheel and the rear idler wheel and configured to sense a temperature of the given one of the front idler wheel and the rear idler wheel.

According to another aspect of this disclosure, there is provided a track system for traction of a vehicle. The track system comprises: a track comprising a ground-engaging outer surface, an inner surface opposite to the ground-engaging outer surface, and a plurality of wheel-contacting projections projecting from the inner surface of the track; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of a given one of the wheels, the given one of the wheels comprising a projection-contacting region configured to contact respective ones of the wheel-contacting projections of the track, the temperature sensor being located in the projection-contacting region of the given one of the wheels.

According to another aspect of this disclosure, there is provided a track system for traction of a vehicle. The track system comprises: a track comprising a ground-engaging outer surface, an inner surface opposite to the ground-engaging outer surface, and a plurality of wheel-contacting projections projecting from the inner surface of the track; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of a given one of the wheels, the temperature sensor being located on the given one of the wheels within a distance from a periphery of the given one of the wheels that is no more than a height of an individual one of the wheel-contacting projections of the track.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; a first temperature sensor configured to sense a temperature of a first one of the wheels and a second temperature sensor configured to sense a temperature of a second one of the wheels, the first temperature sensor and the second temperature sensor being configured to interact with a processing apparatus configured to generate a signal relating to alignment of the track based on the temperature of the first one of the wheels and the temperature of the second one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of a given one of the wheels, the temperature sensor comprising a quick connector configured to connect the temperature sensor to and disconnect the temperature sensor from a connecting part of the given one of the wheels, the temperature sensor being configured to interact with a processing apparatus configured to generate a signal relating to alignment of the track based on the temperature of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of a given one of the wheels, the temperature sensor comprising a connector configured to toollessly connect the temperature sensor to and toollessly disconnect the temperature sensor from a connecting part of the given one of the wheels, the temperature sensor being configured to interact with a processing apparatus configured to generate a signal relating to alignment of the track based on the temperature of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of a given one of the wheels, the temperature sensor comprising a magnetic element configured to magnetically connect the temperature sensor to a connecting part of the given one of the wheels, the temperature sensor being configured to interact with a processing apparatus configured to generate a signal relating to alignment of the track based on the temperature of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of the track system, the temperature sensor comprising a quick connector configured to connect the temperature sensor to and disconnect the temperature sensor from a connecting part of the track system, the temperature sensor being configured to interact with a processing apparatus configured to generate a signal relating to alignment of the track based on the temperature of the track system.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of the track system, the temperature sensor comprising a connector configured to toollessly connect the temperature sensor to and toollessly disconnect the temperature sensor from a connecting part of the track system, the temperature sensor being configured to interact with a processing apparatus configured to generate a signal relating to alignment of the track based on the temperature of the track system.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of the track system, the temperature sensor being configured to interact with a processing apparatus configured to generate a signal based on the temperature of the track system and notifying a user of a magnitude of an adjustment to be made to adjust alignment of the track.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; a first temperature sensor configured to sense a temperature of a first component of the track system; and a second temperature sensor configured to sense a temperature of a second component of the track system. The first temperature sensor and the second temperature sensor are configured to interact with a processing apparatus configured to generate a signal relating to alignment of the track based the temperature of the first component of the track system and the temperature of the second component of the track system.

According to another aspect of this disclosure, there is provided a set of track systems for traction of a vehicle. Each track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a temperature sensor configured to sense a temperature of the track system. The temperature sensors of the track systems are configured to interact with a processing apparatus configured to generate a signal relating to alignment of at least one of the track of a first one of the track systems and the track of a second one of the track systems based on the temperature of the first one of the track systems and the temperature of the second one of the track systems.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly, the track being elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a temperature sensor configured to sense a temperature of the wheel, the temperature sensor being configured to interact with a processing apparatus configured to generate a signal relating to alignment of the track based on the temperature of the wheel.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a temperature sensor mounted to the rigid body and configured to sense a temperature of the wheel.

According to another aspect of this disclosure, there is provided a wheel for a track system for traction of a vehicle. The track system comprises a track that comprises a ground-engaging outer surface, an inner surface opposite to the ground-engaging outer surface, and a plurality of wheel-contacting projections projecting from the inner surface of the track. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a temperature sensor configured to sense a temperature of the wheel, the wheel comprising a projection-contacting region configured to contact respective ones of the wheel-contacting projections of the track, the temperature sensor being located in the projection-contacting region of the wheel.

According to another aspect of this disclosure, there is provided a wheel for a track system for traction of a vehicle. The track system comprises a track that comprises a ground-engaging outer surface, an inner surface opposite to the ground-engaging outer surface, and a plurality of wheel-contacting projections projecting from the inner surface of the track. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a temperature sensor configured to sense a temperature of the wheel, the temperature sensor being located on the wheel within a distance from a periphery of the wheel that is no more than a height of an individual one of the wheel-contacting projections of the track.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly, the track being elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a temperature sensor configured to sense a temperature of the wheel, the temperature sensor comprising a quick connector configured to connect the temperature sensor to and disconnect the temperature sensor from the rigid body of the wheel, the temperature sensor being configured to interact with a processing apparatus configured to generate a signal relating to alignment of the track based on the temperature of the wheel.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly, the track being elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a temperature sensor configured to sense a temperature of the wheel, the temperature sensor comprising a connector configured to toollessly connect the temperature sensor to and toollessly disconnect the temperature sensor from the rigid body of the wheel, the temperature sensor being configured to interact with a processing apparatus configured to generate a signal relating to alignment of the track based on the temperature of the wheel.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly, the track being elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a temperature sensor configured to sense a temperature of the wheel, the temperature sensor comprising a magnetic element configured to magnetically connect the temperature sensor to the rigid body of the wheel, the temperature sensor being configured to interact with a processing apparatus configured to generate a signal relating to alignment of the track based on the temperature of the wheel.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a temperature sensor to sense a temperature of a given one of the wheels; and generating a signal relating to alignment of the track based on the temperature of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a temperature sensor to sense a temperature of a given one of the wheels, the given one of the wheels comprising a rigid body comprising a hub portion, a rim portion, and a radially-extending portion between the hub portion and the rim portion, the temperature sensor being mounted to the rigid body of the given one of the wheels; and generating a signal relating to alignment of the track based on the temperature of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The wheels include a front idler wheel and a rear idler wheel spaced from one another in a longitudinal direction of the track system. The method comprises: using a temperature sensor to sense a temperature of a given one of the front idler wheel and the rear idler wheel; and generating a signal relating to alignment of the track based on the temperature of the given one of the front idler wheel and the rear idler wheel.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track comprises a plurality of wheel-contacting projections projecting from the inner surface of the track. The method comprises: using a temperature sensor to sense a temperature of a given one of the wheels, the given one of the wheels comprising a projection-contacting region configured to contact respective ones of the wheel-contacting projections of the track, the temperature sensor being located in the projection-contacting region of the given one of the wheels; and generating a signal relating to alignment of the track based on the temperature of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track comprises a plurality of wheel-contacting projections projecting from the inner surface of the track. The method comprises: using a temperature sensor to sense a temperature of a given one of the wheels, the temperature sensor being located on the given one of the wheels within a distance from a periphery of the given one of the wheels that is no more than a height of an individual one of the wheel-contacting projections of the track; and generating a signal relating to alignment of the track based on the temperature of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a first temperature sensor to sense a temperature of a first one of the wheels; using a second temperature sensor to sense a temperature of a second one of the wheels; and generating a signal relating to alignment of the track based on the temperature of the first one of the wheels and the temperature of the second one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a temperature sensor to sense a temperature of a given one of the wheels, the temperature sensor comprising a quick connector configured to connect the temperature sensor to and disconnect the temperature sensor from a connecting part of the given one of the wheels; and generating a signal relating to alignment of the track based on the temperature of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a temperature sensor to sense a temperature of a given one of the wheels, the temperature sensor comprising a connector configured to toollessly connect the temperature sensor to and toollessly disconnect the temperature sensor from a connecting part of the given one of the wheels; and generating a signal relating to alignment of the track based on the temperature of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a temperature sensor to sense a temperature of a given one of the wheels, the temperature sensor comprising a magnetic element configured to magnetically connect the temperature sensor to a connecting part of the given one of the wheels; and generating a signal relating to alignment of the track based on the temperature of the given one of the wheels.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a temperature sensor to sense a temperature of the track system, the temperature sensor comprising a quick connector configured to connect the temperature sensor to and disconnect the temperature sensor from a connecting part of the track system; and generating a signal relating to alignment of the track based on the temperature of the track system.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a temperature sensor to sense a temperature of the track system, the temperature sensor comprising a connector configured to toollessly connect the temperature sensor to and toollessly disconnect the temperature sensor from a connecting part of the track system; and generating a signal relating to alignment of the track based on the temperature of the track system.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a temperature sensor to sense a temperature of the track system; and generating a signal based on the temperature of the track system and notifying a user of a magnitude of an adjustment to be made to adjust alignment of the track.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a first temperature sensor configured to sense a temperature of a first component of the track system; using a second temperature sensor configured to sense a temperature of a second component of the track system; and generating a signal relating to alignment of the track based the temperature of the first component of the track system and the temperature of the second component of the track system.

According to another aspect of this disclosure, there is provided a method for monitoring a vehicle comprising a track. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a first temperature sensor configured to sense a temperature of a first one of the track systems; using a second temperature sensor configured to sense a temperature of a second one of the track systems; and generating a signal relating to alignment of at least one of the track of the first one of the track systems and the track of the second one of the track systems based on the temperature of the first one of the track systems and the temperature of the second one of the track systems.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels; and a processing apparatus configured to generate a signal indicative of wear of the track system based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor being configured to interact with a processing apparatus configured to generate a signal indicative of wear of the track system based on the characteristic of the given one of the wheels.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor being configured to interact with a processing apparatus configured to generate a signal indicative of wear of the track system based on the characteristic of the wheel.

According to another aspect of this disclosure, there is provided a method for monitoring a vehicle comprising a track system. The track system comprises a track that comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels; and generating a signal indicative of wear of the track system based on the characteristic of the given one of the wheels.

According to another aspect of this disclosure, there is provided a monitoring system for a vehicle comprising a track for traction of the vehicle on a ground. The track comprising a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels; and a processing apparatus configured to generate a signal indicative of slip of the track relative to the ground based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor being configured to interact with a processing apparatus configured to generate a signal indicative of slip of the track relative to the ground based on the characteristic of the given one of the wheels.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor being configured to interact with a processing apparatus configured to generate a signal indicative of slip of the track relative to the ground based on the characteristic of the wheel.

According to another aspect of this disclosure, there is provided a method for monitoring a vehicle comprising a track system. The track system comprises a track that comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels; and generating a signal indicative of slip of the track relative to the ground based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels; and a processing apparatus configured to generate a signal relating to vibration of the given one of the wheels based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor being configured to interact with a processing apparatus configured to generate a signal relating to vibration of the given one of the wheels based on the characteristic of the given one of the wheels.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor being configured to interact with a processing apparatus configured to generate a signal relating to vibration of the wheel based on the characteristic of the wheel.

According to another aspect of this disclosure, there is provided a method for monitoring a vehicle comprising a track system. The track system comprises a track that comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels; and generating a signal relating to vibration of the given one of the wheels based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels; and a processing apparatus configured to generate a signal indicative of power output of the vehicle based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly. The track is elastomeric to flex around the track-engaging assembly. The track-engaging assembly comprises a plurality of wheels for engaging the track. The track system comprises a sensor configured to sense a characteristic of a given one of the wheels, the sensor being configured to interact with a processing apparatus configured to generate a signal indicative of power output of the vehicle based on the characteristic of the given one of the wheels.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor being configured to interact with a processing apparatus configured to generate a signal indicative of power output of the vehicle based on the characteristic of the wheel.

According to another aspect of this disclosure, there is provided a method for monitoring a vehicle comprising a track system. The track system comprises a track that comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels; and generating a signal indicative of power output of the vehicle based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The monitoring system comprises: a sensor configured to sense a characteristic of a given one of the wheels; and a processing apparatus configured to generate a signal indicative of loading on the vehicle based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor being configured to interact with a processing apparatus configured to generate a signal indicative of loading on the vehicle based on the characteristic of the given one of the wheels.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor being configured to interact with a processing apparatus configured to generate a signal indicative of loading on the vehicle based on the characteristic of the wheel.

According to another aspect of this disclosure, there is provided a method for monitoring a vehicle comprising a track system. The track system comprises a track that comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels; and generating a signal indicative of loading on the vehicle based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track system comprises a frame supporting the wheels. The track is elastomeric to flex around the track-engaging assembly. The monitoring system comprises: a sensor configured to sense a characteristic of a given one of the wheels; and a processing apparatus configured to generate a signal relating to the frame of the track system based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; a frame supporting the wheels; and a sensor configured to sense a characteristic of a given one of the wheels, the sensor being configured to interact with a processing apparatus configured to generate a signal relating to the frame of the track system based on the characteristic of the given one of the wheels.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The track system comprises a frame configured to support the wheels. The wheel comprises: a rigid body comprising a hub portion, a rim portion, and a radially-extending portion between the hub portion and the rim portion; and a sensor configured to sense a characteristic of the wheel, the sensor being configured to interact with a processing apparatus configured to generate a signal relating to the frame of the track system based on the characteristic of the wheel.

According to another aspect of this disclosure, there is provided a method for monitoring a vehicle comprising a track system. The track system comprises a track that comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The track system comprises a frame supporting the wheels. The method comprises: using a sensor to sense a characteristic of a given one of the wheels; and generating a signal relating to the frame of the track system based on the characteristic of the given one of the wheels.

According to another aspect of this disclosure, there is provided a monitoring system for a vehicle comprising a track for traction of the vehicle on a ground. The track comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track system comprises a frame supporting the wheels. The track is elastomeric to flex around the track-engaging assembly. The monitoring system comprises: a sensor configured to sense a characteristic of a given one of the wheels; and a processing apparatus configured to generate a signal relating to a duty cycle of the vehicle based on the characteristic of the given one of the wheels.

According to another aspect of this disclosure, there is provided a track system for traction of a vehicle. The track system comprises: a track comprising a ground-engaging outer surface and an inner surface opposite to the ground-engaging outer surface; a track-engaging assembly configured to move the track around the track-engaging assembly, the track being elastomeric to flex around the track-engaging assembly, the track-engaging assembly comprising a plurality of wheels for engaging the track; and a sensor configured to sense a characteristic of a given one of the wheels, the sensor being configured to interact with a processing apparatus configured to generate a signal relating to a duty cycle of the vehicle based on the characteristic of the given one of the wheels.

According to another aspect of this disclosure, there is provided a wheel for a track system for traction of a vehicle. The track system comprises a track that comprises a ground-engaging outer surface and an inner surface opposite to the ground-engaging outer surface. The track system comprises a track-engaging assembly configured to move the track around the track-engaging assembly. The track is elastomeric to flex around the track-engaging assembly. The wheel is configured to be one of a plurality of wheels of the track-engaging assembly. The wheel comprises: a rigid body comprising a hub portion, a rim portion, and a radially-extending portion between the hub portion and the rim portion; and a sensor configured to sense a characteristic of the wheel, the sensor being configured to interact with a processing apparatus configured to generate a signal relating to a duty cycle of the vehicle based on the characteristic of the wheel.

According to another aspect of this disclosure, there is provided a method for monitoring a vehicle comprising a track system. The track system comprises a track that comprises a ground-engaging outer surface and an inner surface opposite to the ground-engaging outer surface and is mounted around a track-engaging assembly configured to move the track around the track-engaging assembly. The track-engaging assembly comprises a plurality of wheels for engaging the track. The track is elastomeric to flex around the track-engaging assembly. The method comprises: using a sensor to sense a characteristic of a given one of the wheels; and generating a signal relating to a duty cycle of the vehicle based on the characteristic of the given one of the wheels.

These and other aspects of this disclosure will now become apparent to those of ordinary skill in the art upon review of a description of embodiments that follows in conjunction with accompanying drawings.

### BRIEF DESCRIPTION OF DRAWINGS

A detailed description of embodiments is provided below, by way of example only, with reference to the accompanying drawings, in which:
Figure 1 shows an example of an agricultural vehicle comprising a track system in accordance with an embodiment;
Figure 2 shows a side view of a track of the track system;
Figures 3 and 4 show a plan view and a side view of the track;
Figure 5 shows an inside view of the track;
Figure 6 shows a cross-sectional view of the track;
Figure 7 shows a perspective view of a wheel-contacting projection of the track;
Figure 8A and 8B show respectively leading idler wheels and trailing idler wheels of a track-engaging assembly of the track system;
Figure 9 shows an alignment mechanism of the track-engaging assembly of the track system;

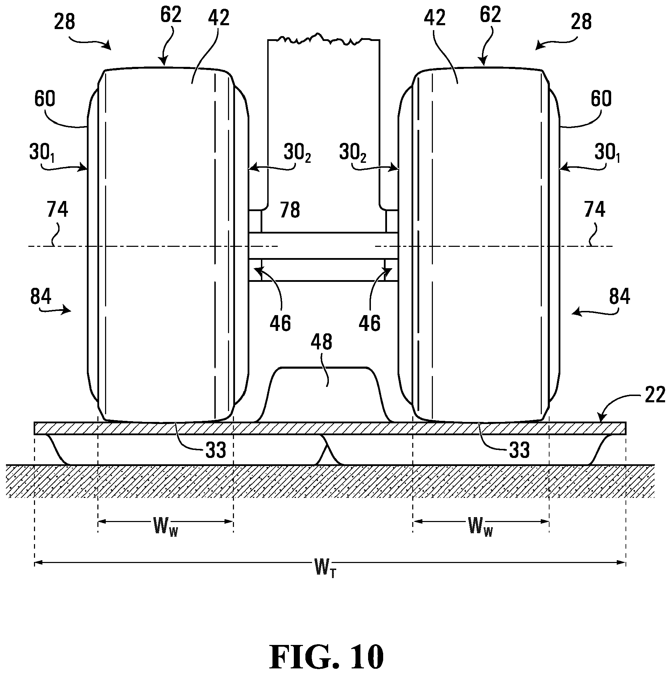

Figure 10 shows mid-rollers of the track-engaging assembly of the track system;
Figures 11 to 13 show a perspective view, a side view and a detailed side view of one of the idler wheels of the track-engaging assembly;
Figure 14 is a block diagram of a monitoring system of the tracked vehicle comprising sensors and a processing apparatus in accordance with an embodiment;
Figure 15A is a block diagram of the processing apparatus;
Figure 15B is a block diagram of an interface of the processing apparatus;
Figures 16 to 19 show variants of the monitoring system;
Figure 20 shows a user interface of the tracked vehicle;
Figures 21 to 23 show an embodiment of the monitoring system wherein the monitoring system communicates with a communication device;
Figures 24 to 29 show examples of data generated by the monitoring system in comparison with reference data stored in memory

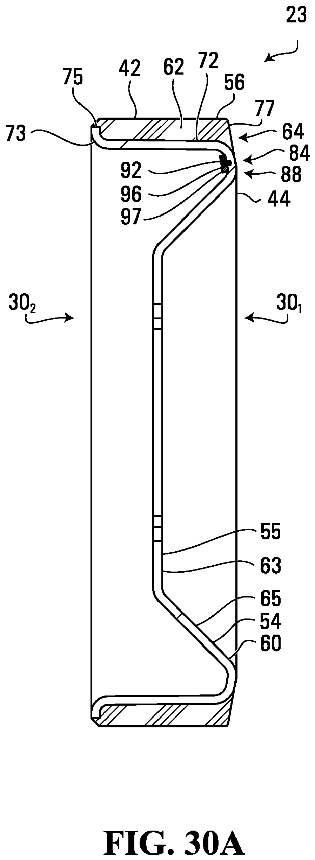

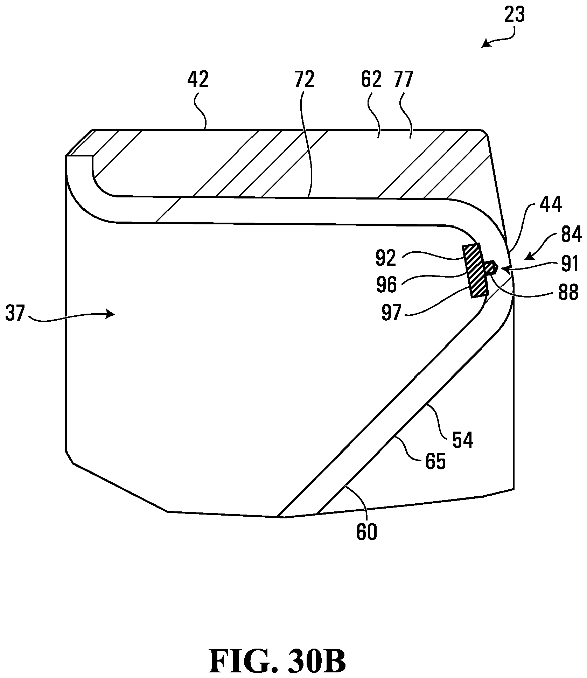

Figures 30A and 30B show variants of the idler wheel;

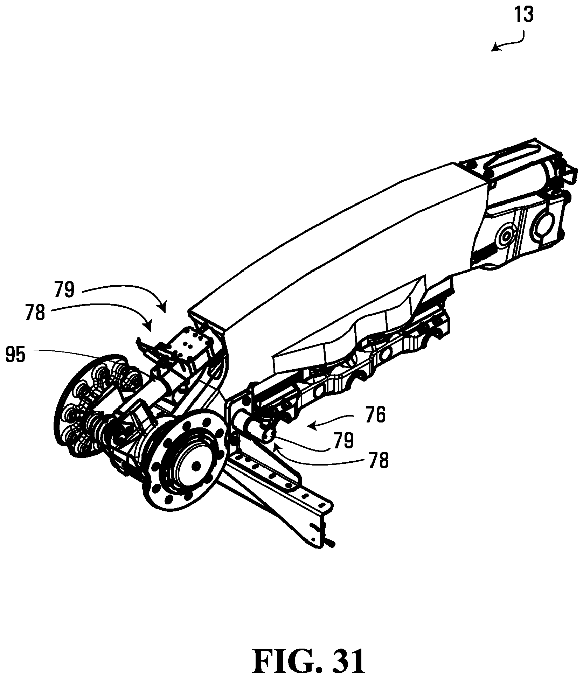

Figure 31 shows a variant of the alignment mechanism;

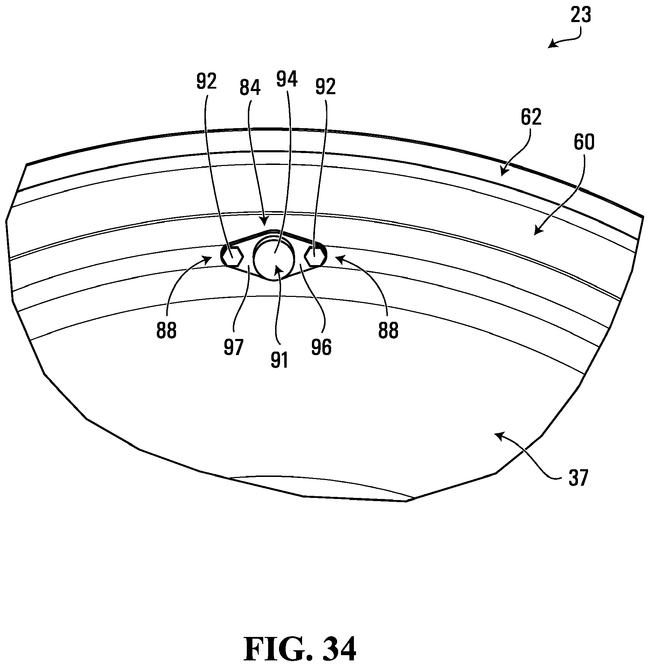

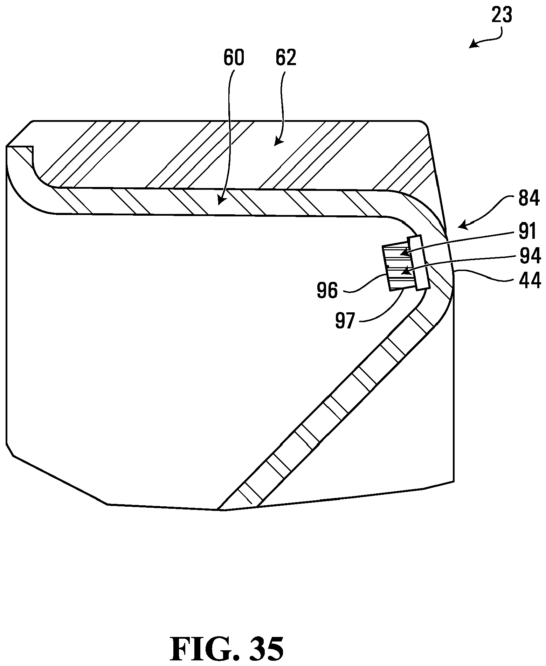

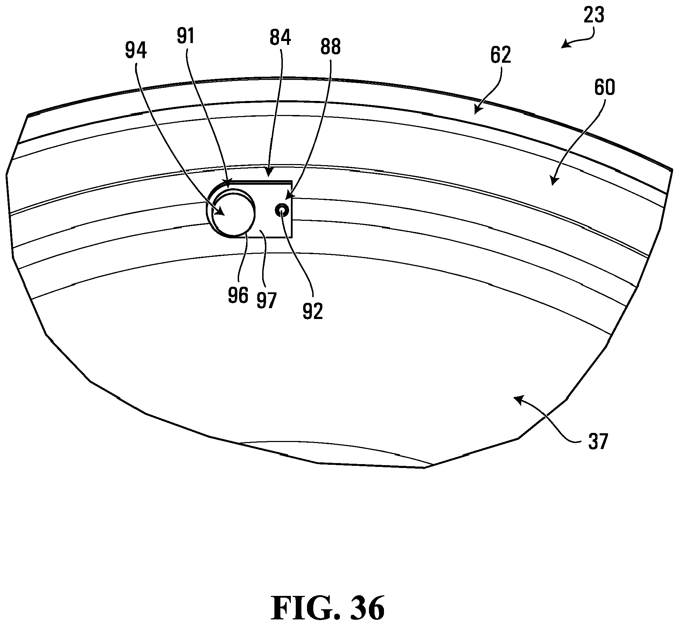

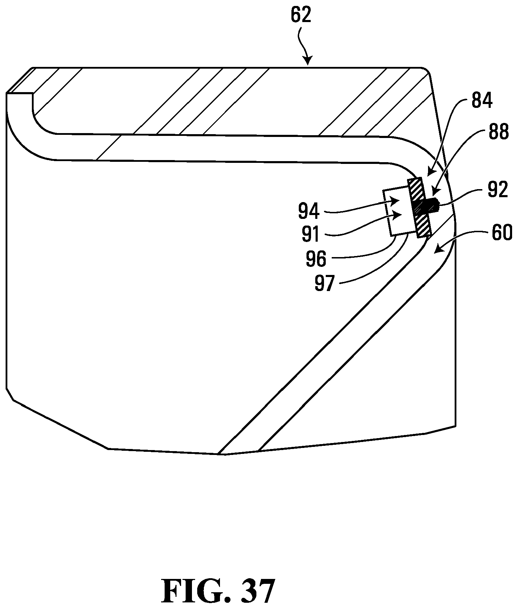

Figures 32 to 42 show variants of the idler wheel;
Figures 43 to 48 show variants of the track;
Figure 49 to 52E show variants of a track system comprising a drive wheel with a sensor;
Figures 53 and 54 show variants of the tracked vehicle; and
Figure 55 shows a trailed vehicle configured to be attached to the agricultural vehicle of Figures 1, 53 or 54.

It is to be expressly understood that the description and drawings are only for purposes of illustrating certain embodiments and are an aid for understanding. They are not intended to be and should not be limiting.

### DETAILED DESCRIPTION OF EMBODIMENTS

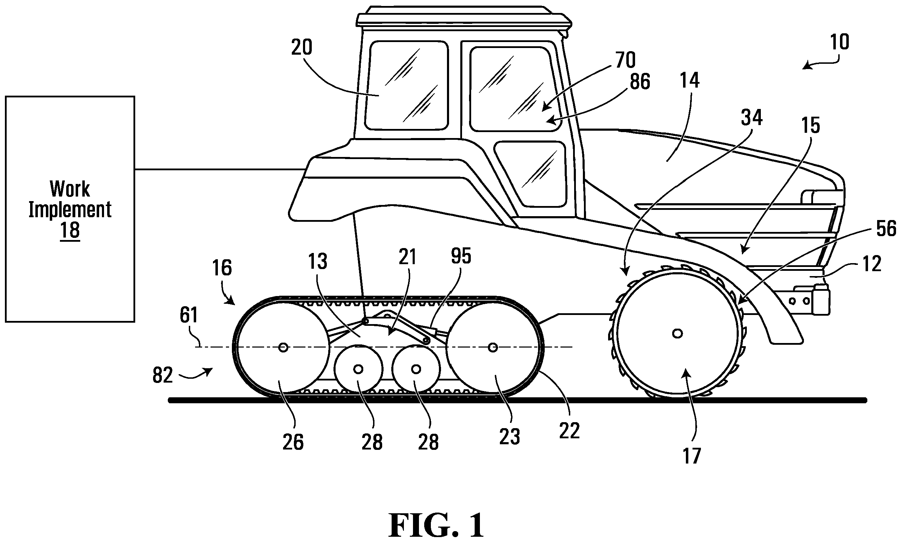

Figure 1 shows an embodiment of a vehicle 10 comprising track systems 16 including tracks 22 for traction of the vehicle 10 on a ground. In this embodiment, the vehicle 10 is a heavy-duty work vehicle for performing agricultural, construction or other industrial work. More particularly, in this embodiment, the vehicle 10 is an agricultural vehicle for performing agricultural work. In other examples, the agricultural vehicle 10 may be a harvester, a planter, or any other type of agricultural vehicle.

In this embodiment, the vehicle 10 comprises a frame 12, a powertrain 15, ground-engaging traction devices 17, a steering mechanism 18, a suspension 34, and an operator cabin 20 that enable a user to move the vehicle 10 on the ground, including on an agricultural field and possibly on a paved road (e.g., between agricultural fields), using the track systems 16 and perform work using a work implement 13. In this embodiment, the ground-engaging traction devices 17 include the track systems 16, which are located in a rear of the vehicle 10, and ground-engaging wheel assemblies 50 (e.g., tires on wheels), which are located in a front of the vehicle 10.

As further discussed below, in this embodiment, the agricultural vehicle 10 including the track systems 16 can be monitored (e.g., during operation of the agricultural vehicle 10) to obtain information regarding the agricultural vehicle 10, including information regarding the track systems 16, such as temperatures and/or other characteristics of wheels of the track systems 16 sensed by sensors of these wheels and/or temperatures and/or other characteristics of the tracks 22 sensed by sensors of the tracks 22, assessing wear, vibration, and/or other aspects of the track systems 16, evaluating use (e.g., a duty cycle), performance, and/or other aspects of the vehicle 10, which can be used to inform a user (e.g., the operator) and/or control the agricultural vehicle 10 (e.g., a speed of the agricultural vehicle 10), for properly aligning the tracks 22 and/or other purposes. This may be useful, for example, to help prevent rapid wear or other deterioration of the tracks 22 and/or for various other reasons.

The powertrain 15 is configured for generating motive power and transmitting motive power to respective ones of the ground-engaging traction devices 17 of the vehicle 10 to propel the agricultural vehicle 10 on the ground. To that end, the powertrain 15 comprises a prime mover 14, which is a source of motive power that comprises one or more motors. For example, in this embodiment, the prime mover 14 comprises an internal combustion engine. In other embodiments, the prime mover 14 may comprise another type of motor (e.g., an electric motor) or a combination of different types of motor (e.g., an internal combustion engine and an electric motor). The prime mover 14 is in a driving relationship with the respective ones of the ground-engaging traction devices 17. That is, the powertrain 15 transmits motive power generated by the prime mover 14 to the respective ones of the ground-engaging traction devices 17 in order to drive (i.e., impart motion to) them. The powertrain 15 may transmit power from the prime mover 14 to the respective ones of the ground-engaging traction devices 17 in any suitable way. In this embodiment, the powertrain 15 comprises a transmission between the prime mover 14 and final drive axles 56 for transmitting motive power from the prime mover 14 to respective ones of the ground-engaging traction devices 17. The transmission may be an automatic transmission (e.g., a continuously variable transmission (CVT)) or any other suitable type of transmission.

In this embodiment, the ground-engaging wheel assemblies 50 are rotatable by power derived from the prime mover 14 to drive the vehicle 10. That is, power generated by the prime mover 14 and delivered over the powertrain 15 of the agricultural vehicle 10 can rotate a final drive axle 56, which causes rotation of the ground-engaging wheel assemblies 50, which in turn imparts motion to the vehicle 10. In this example, the ground-engaging wheel assemblies are disposed at the front of the vehicle 10 and are in front of the track systems 16. In other embodiments, the track systems 16 may also or instead receive power generated by the prime mover 14 and delivered over the powertrain 15 to propel the vehicle 10.

The work implement 18 is used to perform agricultural work. For example, in some embodiments, the work implement 18 may be a combine head, a cutter, a scraper, a tiller, or any other type of agricultural work implement.

The operator cabin 20 is where the operator sits and controls the agricultural vehicle 10. More particularly, the operator cabin 20 comprises a user interface 70 including a set of controls that allow the operator to steer the agricultural vehicle 10 on the ground and operate the work implement 18. For example, in this embodiment, the user interface 70 comprises an accelerator, a brake control, and a steering device that are operable by the operator to control motion of the agricultural vehicle 10 on the ground and operation of the work implement 18. The user interface 70 also comprises an instrument panel (e.g., a dashboard) which provides indicators (e.g., a speedometer indicator, a tachometer indicator, etc.) to convey information to the operator.

The track systems 16 engage the ground for traction of the agricultural vehicle 10. Each track system 16 comprises a track-engaging assembly 21 and a track 22 disposed around the track-engaging assembly 21. In this embodiment, the track-engaging assembly 21 comprises a plurality of track-contacting wheels which, in this example, includes front idler wheels 23, rear idler wheels 26 and a plurality of roller wheels 28. The track system 16 also comprises a frame 13 which supports various components of the track system 16, including the roller wheels 28. The track system 16 has a longitudinal axis 61 defining a longitudinal direction of the track system. The track system 16 has a first longitudinal end 57 and a second longitudinal end 59 that define a length of the track system 16. The track system 16 has a widthwise direction and a width that is defined by a width of the track 22. The track system 16 also has a height direction that is normal to its longitudinal direction and its widthwise direction.

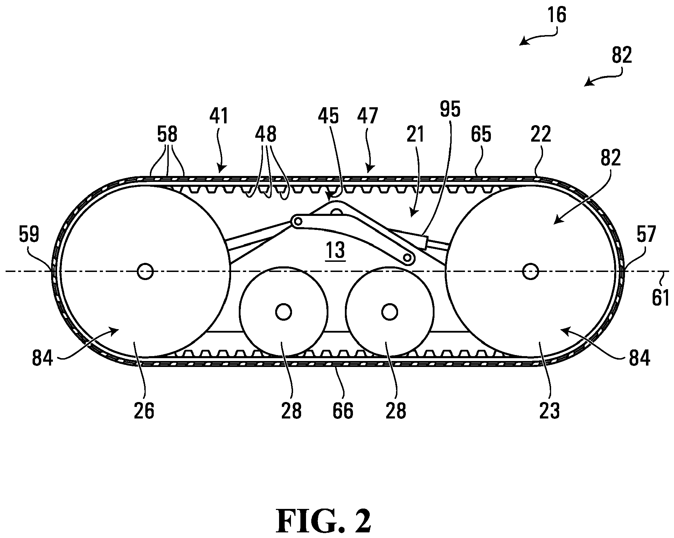

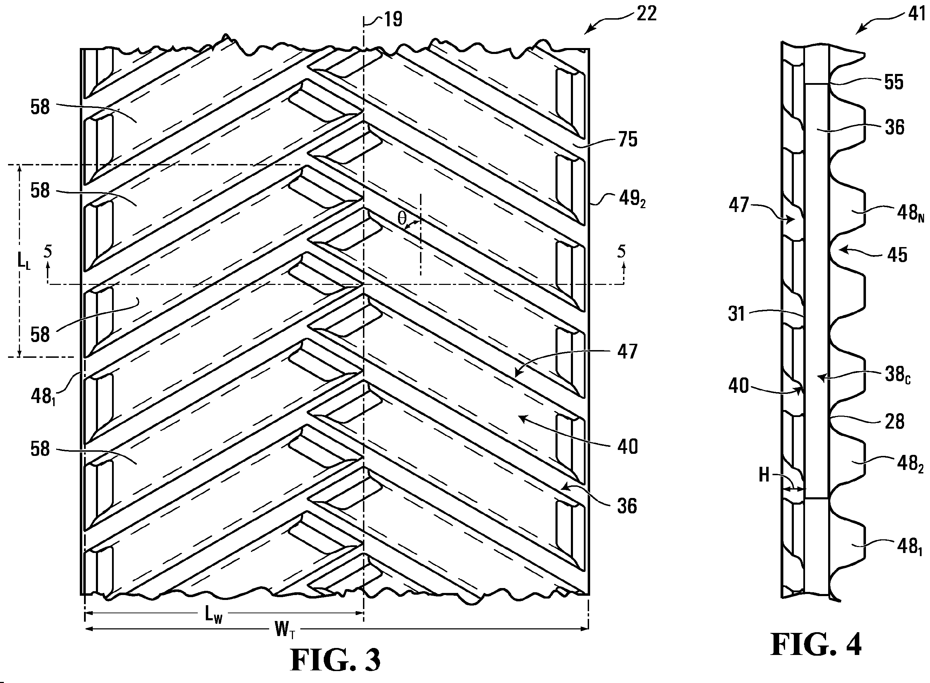

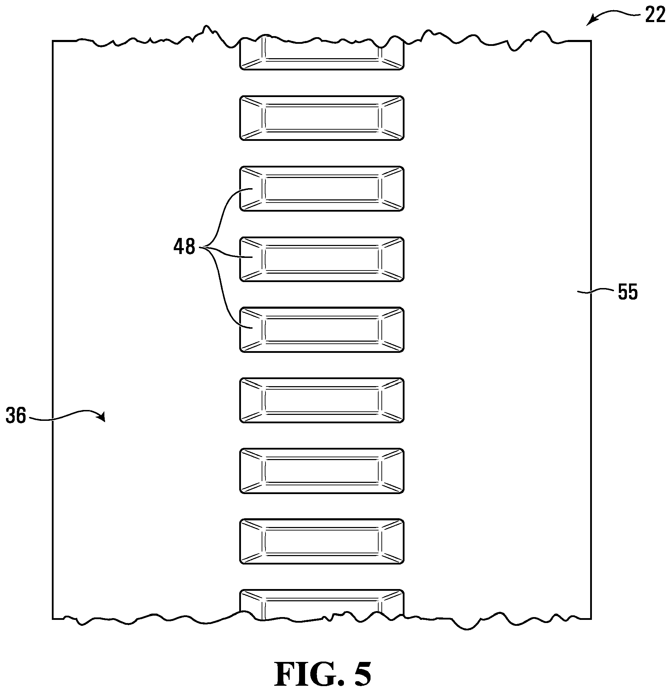

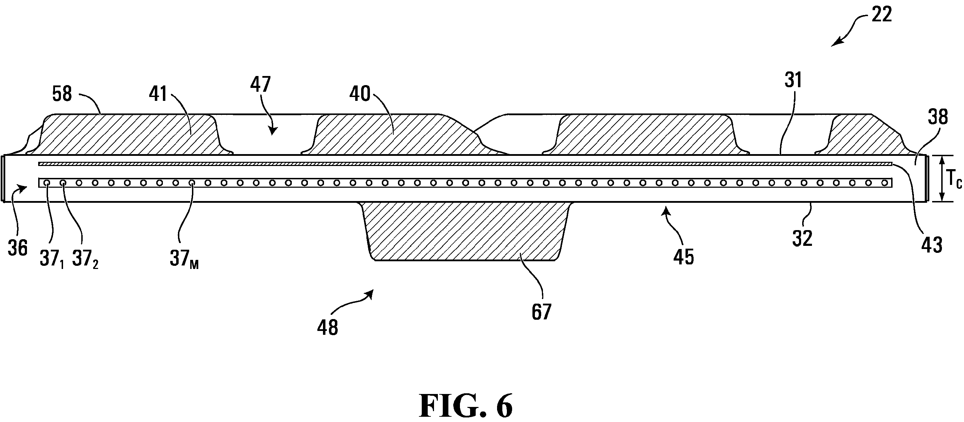

The track 22 engages the ground to provide traction to the agricultural vehicle 10. A length of the track 22 allows the track 22 to be mounted around the track-engaging assembly 21. In view of its closed configuration without ends that allows it to be disposed and moved around the track-engaging assembly 21, the track 22 can be referred to as an "endless" track. With additional reference to Figures 2 to 6, the track 22 comprises an inner side 45, a ground-engaging outer side 47, and lateral edges 49₁, 49₂. The inner side 45 faces the wheels 23, 26, 28, while the ground-engaging outer side 47 engages the ground. A top run 65 of the track 22 extends between the longitudinal ends 57, 59 of the track system 16 and over the wheels 23, 26, 28, while a bottom run 66 of the track 22 extends between the longitudinal ends 57, 59 of the track system 16 and under the wheels 23, 26, 28. The track 22 has a longitudinal axis 19 which defines a longitudinal direction of the track 22 (i.e., a direction generally parallel to its longitudinal axis) and transversal directions of the track 22 (i.e., directions transverse to its longitudinal axis), including a widthwise direction of the track 22 (i.e., a lateral direction generally perpendicular to its longitudinal axis). The track 22 has a thickness direction normal to its longitudinal and widthwise directions.

The track 22 is elastomeric, i.e., comprises elastomeric material, to be flexible around the track-engaging assembly 21. The elastomeric material of the track 22 can include any polymeric material with suitable elasticity. In this embodiment, the elastomeric material of the track 22 includes rubber. Various rubber compounds may be used and, in some cases, different rubber compounds may be present in different areas of the track 22. In other embodiments, the elastomeric material of the track 22 may include another elastomer in addition to or instead of rubber (e.g., polyurethane elastomer).

More particularly, the track 22 comprises an endless body 36 underlying its inner side 45 and ground-engaging outer side 47. In view of its underlying nature, the body 36 will be referred to as a "carcass". The carcass 36 is elastomeric in that it comprises elastomeric material 38 which allows the carcass 36 to elastically change in shape and thus the track 22 to flex as it is in motion around the track-engaging assembly 21. The carcass 36 comprises an inner surface 32 and a ground-engaging outer surface 31 that are opposite one another.

In this embodiment, the carcass 36 comprises a plurality of reinforcements embedded in its elastomeric material 38. These reinforcements can take on various forms.

For example, in this embodiment, the carcass 36 comprises a layer of reinforcing cables 37₁-37_{M} that are adjacent to one another and extend generally in the longitudinal direction of the track 22 to enhance strength in tension of the track 22 along its longitudinal direction. In this case, each of the reinforcing cables 37₁-37_{M} is a cord including a plurality of strands (e.g., textile fibers or metallic wires). In other cases, each of the reinforcing cables 37₁-37_{M} may be another type of cable and may be made of any material suitably flexible along the cable's longitudinal axis (e.g., fibers or wires of metal, plastic or composite material).

As another example, in this embodiment, the carcass 36 comprises a layer of reinforcing fabric 43. The reinforcing fabric 43 comprises thin pliable material made usually by weaving, felting, knitting, interlacing, or otherwise crossing natural or synthetic elongated fabric elements, such as fibers, filaments, strands and/or others, such that some elongated fabric elements extend transversally to the longitudinal direction of the track 22 to have a reinforcing effect in a transversal direction of the track 22. For instance, the reinforcing fabric 43 may comprise a ply of reinforcing woven fibers (e.g., nylon fibers or other synthetic fibers).

The carcass 36 may be molded into shape in a molding process during which the rubber 38 is cured. For example, in this embodiment, a mold may be used to consolidate layers of rubber providing the rubber 38 of the carcass 36, the reinforcing cables 37₁-37_{M} and the layer of reinforcing fabric 43.

In this embodiment, the track 22 is a one-piece "jointless" track such that the carcass 36 is a one-piece jointless carcass. In other embodiments, the track 22 may be a "jointed" track (i.e., having at least one joint connecting adjacent parts of the track 22) such that the carcass 36 is a jointed carcass (i.e., which has adjacent parts connected by the at least one joint). For example, in some embodiments, the track 22 may comprise a plurality of track sections interconnected to one another at a plurality of joints, in which case each of these track sections includes a respective part of the carcass 36. In other embodiments, the track 22 may be a one-piece track that can be closed like a belt with connectors at both of its longitudinal ends to form a joint.

The inner side 45 of the track 22 comprises an inner surface 55 of the carcass 36 and a plurality of wheel-contacting projections 48 that project from the inner surface 55 and are positioned to contact at least some of the wheels 23, 24, 26, 28 to do at least one of driving (i.e., imparting motion to) the track 22 and guiding the track 22. The wheel-contacting projections 48 can be referred to as "wheel-contacting lugs". Furthermore, since each of them is used to do at least one of driving the track 22 and guiding the track 22, the wheel-contacting lugs 48 can be referred to as "drive/guide projections" or "drive/guide lugs". In some examples of implementation, a drive/guide lug 48 may interact with a drive wheel 24 to drive the track 22, in which case the drive/guide lug 48 is a drive lug. In other examples of implementation, a drive/guide lug 48 may interact with the front and rear idler wheels 23, 26 and/or the roller wheels 28 to guide the track 22 to maintain proper track alignment and prevent de-tracking without being used to drive the track 22, in which case the drive/guide lug 48 is a guide lug. In yet other examples of implementation, a drive/guide lug 48 may both (i) interact with the drive wheel 24 to drive the track and (ii) interact with the idler wheels 23, 26 and/or the roller wheels 28 to guide the track 22 to maintain proper track alignment and prevent de-tracking, in which case the drive/guide lug 48 is both a drive lug and a guide lug.

In this embodiment, the drive/guide lugs 48 interact with the drive wheel 24 in order to cause the track 22 to be driven, and also interact with the idler wheels 23, 26 and the roller wheels 28 in order to guide the track 22 as it is driven by the drive wheel 24 to maintain proper track alignment and prevent de-tracking. The drive/guide lugs 48 are thus used to both drive the track 22 and guide the track 22 in this embodiment.

In this example of implementation, the drive/guide lugs 48 are arranged in a single row disposed longitudinally along the inner side 45 of the track 22. The drive/guide lugs 48 may be arranged in other manners in other examples of implementation (e.g., in a plurality of rows that are spaced apart along the widthwise direction of the track 22).

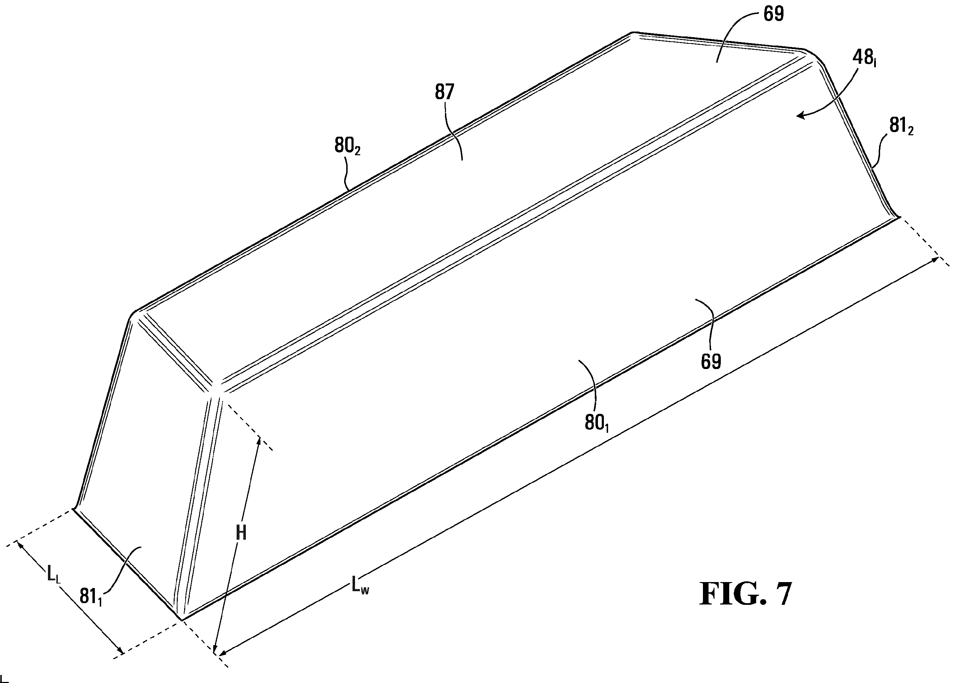

The drive/guide lugs 48 may have any suitable shape. With additional reference to Figure 7, each drive/guide lug 48 has a periphery 69 which, in this embodiment, includes a front surface 80₁, a rear surface 80₂, two lateral surfaces 81₁, 81₂, and a top surface 86. The front surface 80₁ and the rear surface 80₂ are opposed to one another along the longitudinal direction of the track 22. In this embodiment where the drive/guide lug 48 is used to drive the track 22, each of the front surface 80₁ and the rear surface 80₂ constitutes a drive surface which can be contacted by a drive member of the drive wheel 24 that pushes against it to impart motion to the track 22. The two lateral surfaces 81₁, 81₂ are laterally opposed and may contact the roller wheels 28, the drive wheel 24 and/or the idler wheel 26 such as to prevent excessive lateral movement of the track 22 relative the wheels and to thus prevent de-tracking. Although it has a certain shape in this embodiment, the periphery 69 of the drive/guide lug 48 may have various other shapes in other embodiments (e.g., the front surface 80₁, the rear surface 80₂, and/or the side surfaces 81₁, 81₂ may be curved).

Each drive/guide lug 48 has a front-to-rear dimension *L_{L}* in the longitudinal direction of the endless track 22 and a side-to-side dimension *L_{w}* in the widthwise direction of the endless track 22. In some cases, the front-to-rear dimension *L_{L}* may be a width of the drive/guide lug 48 while the side-to-side dimension *L_{W}* may be a length of the drive/guide lug 48. In other cases, the front-to-rear dimension *L_{L}* may be a length of the drive/guide lug 48 while the side-to-side dimension *L_{W}* may be a width of the drive/guide lug 48. In yet other cases, the front-to-rear dimension *L_{L}* and the side-to-side dimension *L_{W}* may be substantially the same. The drive/guide lug 48 also has a height H.

In this embodiment, the drive/guide lug 48 is configured to pass between respective pairs of the idler wheels 23, 26 and/or the roller wheels 28 when they are aligned with one another, such that the lateral surfaces 81₁, 81₂ of each drive/guide lug 48 face respecting ones of the idler wheels 23, 26 and/or the roller wheels 28 when they are aligned with one another.

In this embodiment, each drive/guide lug 48 is an elastomeric drive/guide lug in that it comprises elastomeric material 67. The elastomeric material 67 can be any polymeric material with suitable elasticity. More particularly, in this embodiment, the elastomeric material 67 includes rubber. Various rubber compounds may be used and, in some cases, different rubber compounds may be present in different areas of the drive/guide lug 48. In other embodiments, the elastomeric material 67 may include another elastomer in addition to or instead of rubber (e.g., polyurethane elastomer). The drive/guide lugs 48 may be provided on the inner side 45 in various ways. For example, in this embodiment, the drive/guide lugs 48 are provided on the inner side 45 by being molded with the carcass 36.

The ground-engaging outer side 47 comprises a ground-engaging outer surface 75 of the carcass 36 and a tread pattern 40 to enhance traction on the ground. The tread pattern 40 comprises a plurality of traction projections 58 projecting from the ground-engaging outer surface 75, spaced apart in the longitudinal direction of the track 22 and engaging the ground to enhance traction. The traction projections 58 may be referred to as "tread projections" or "traction lugs".

The traction lugs 58 may have any suitable shape. In this embodiment, each of the traction lugs 58 has an elongated shape and is angled, i.e., defines an oblique angle θ (i.e., an angle that is not a right angle or a multiple of a right angle), relative to the longitudinal direction of the track 22. The traction lugs 58 may have various other shapes in other examples (e.g., curved shapes, shapes with straight parts and curved parts, etc.).

In this embodiment, each traction lug 58 is an elastomeric traction lug in that it comprises elastomeric material 41. The elastomeric material 41 can be any polymeric material with suitable elasticity. More particularly, in this embodiment, the elastomeric material 41 includes rubber. Various rubber compounds may be used and, in some cases, different rubber compounds may be present in different areas of the traction lug 58. In other embodiments, the elastomeric material 41 may include another elastomer in addition to or instead of rubber (e.g., polyurethane elastomer). The traction lugs 58 may be provided on the ground-engaging outer side 27 in various ways. For example, in this embodiment, the traction lugs 58 are provided on the ground-engaging outer side 27 by being molded with the carcass 36.

The carcass 36 has a thickness T_{c}, measured from its inner surface 32 to its ground-engaging outer surface 31, which is relatively large in this embodiment. For example, in some embodiments, the thickness T_{c} of the carcass 36 may be at least than 20 mm, in some cases at least 25 mm, in some cases at least 30 mm, in some cases at least 35 mm, and in some cases even more (e.g., 40 mm or more). The thickness T_{c} of the carcass 36 may have any other suitable value in other embodiments.

The track 22 may be constructed in various other manners in other embodiments. For example, in some embodiments, the track 22 may have recesses or holes that interact with a drive wheel 24 in order to cause the track 22 to be driven (e.g., in which case the guide lugs 48 may be used only to guide the track 22 without being used to drive the track 22, i.e., they may be "guide lugs" only), and/or the ground-engaging outer side 47 of the track 22 may comprise various patterns of traction lugs.

In this embodiment, with additional reference to Figure 2, the track system 16 may comprise a tensioning mechanism 95 for tensioning the track 22 and controlling the tension of the track 22. For instance, in this embodiment, the tensioning mechanism 95 comprises an actuator mounted at one end to the frame 13 of the track system 16 and at another end to a hub of the front idler wheels 23. This allows the tensioning mechanism 95 to modify a distance between the front idler wheels 23 and the rear idler wheels 26 in the longitudinal direction of the track system 16.

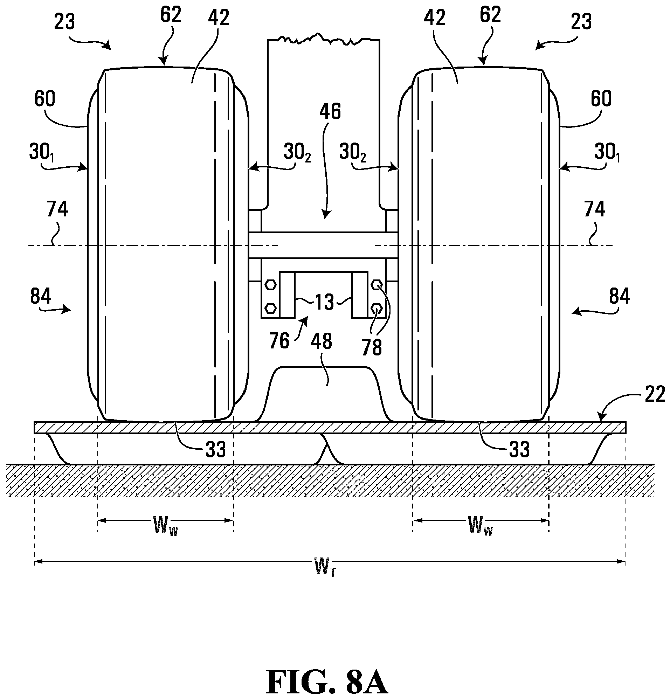

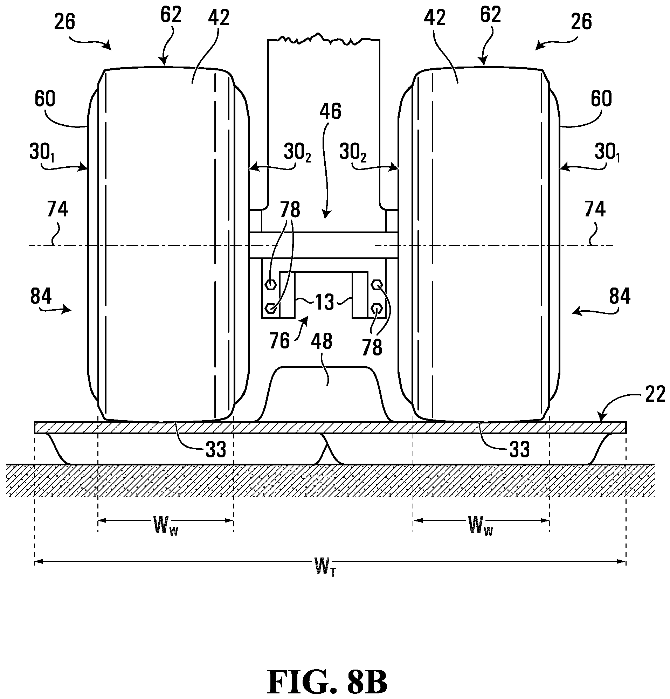

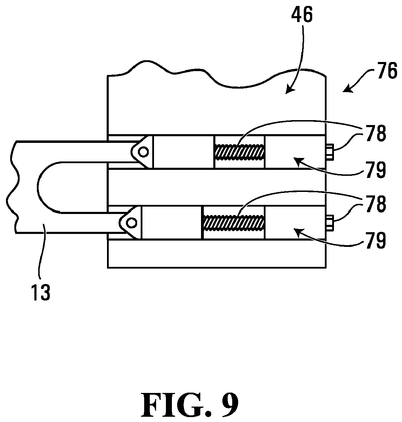

In this embodiment, as shown in Figures 8A, 8B and 9, the track system 16 may comprise an alignment mechanism 76 for adjusting the idler wheels 23, 26 relative to the track 22 and ensure proper alignment of the track 22 relative to the track-engaging assembly 21. For instance, in this embodiment, the alignment mechanism 76 comprises an adjusting element 78 and an actuator 79 acting on the adjusting element 78. The adjusting element 78 may be of any suitable kind and may comprise, for example, a lever, a nut and/or a screw. The actuator 79 may comprise an electromechanical device, a fluidic (e.g., hydraulic) device, and/or any other suitable type of actuating device that can be controlled (e.g., manually and/or via signaling) to act on the adjusting element 78 for functionality of the alignment mechanism 76.

The idler wheels 23, 26 and the roller wheels 28 are not driven by power supplied by the prime mover 14, but are rather used to do at least one of supporting part of the weight of the agricultural vehicle 10 on the ground via the track 22, guiding the track 22, and tensioning the track 22. More particularly, in this embodiment, the front idler wheels 23 are leading idler wheels which maintain the track 22 in tension and help to support part of the weight of the agricultural vehicle 10 on the ground via the track 22, and the rear idler wheels 23 are trailing idler wheels which contribute to maintaining the track 22 in tension and help to support part of the weight of the agricultural vehicle 10 on the ground via the track 22. The roller wheels 28 roll on a rolling path 33 of the inner side 45 of the track 22 along the bottom run 66 of the track 22 to apply the bottom run 66 on the ground. In this case, as they are located between frontmost and rearmost ones of the wheels of the track system 16, the roller wheels 28 can be referred to as "mid-rollers".

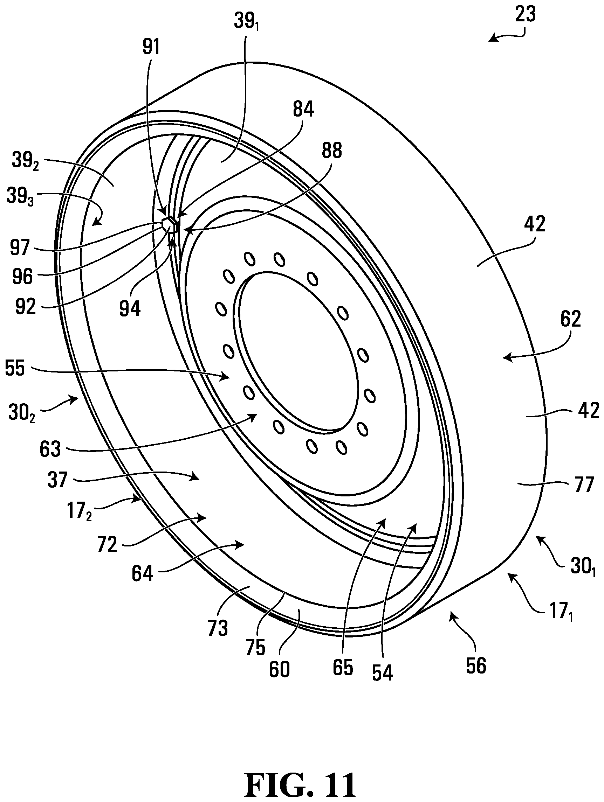

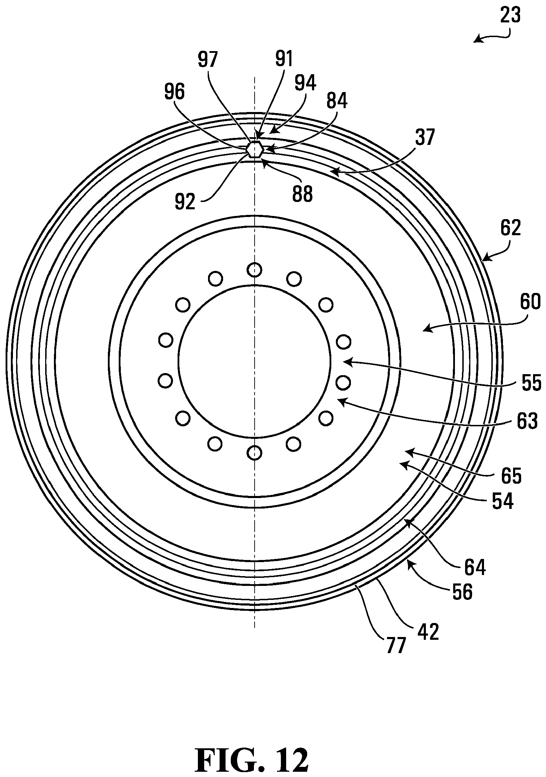

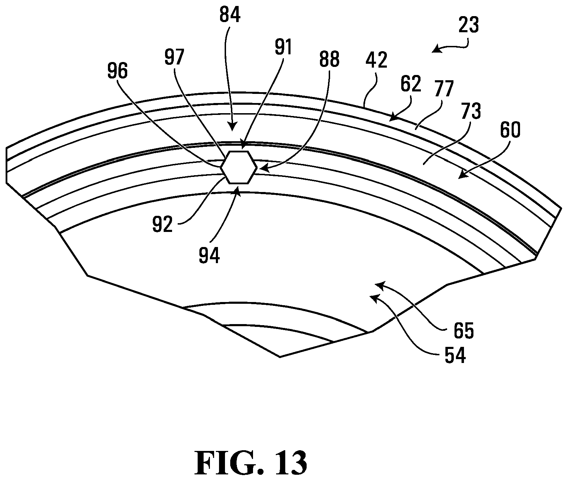

With additional reference to Figures 11 to 13, each one of the idler wheels 23, 26 and mid-rollers 28 comprises a hub portion 55, a rim portion 56, and a radially-extending portion 54 between the hub portion 55 and the rim portion 56. The hub portion 55 is an inner portion of the idler wheel 23, 26 or mid-roller 28 which is associated with a hub 46 receiving an axle for the idler wheel 23, 26 or mid-roller 28. The rim portion 56 is an outer portion of the idler wheel 23, 26 or mid-roller 28 which contacts the inner side 45 of the track 22 and defines a periphery 62 and a circumferential surface of the idler wheel 23, 26 or mid-roller 28. The radially-extending portion 54 is an intermediate portion of the idler wheel 23, 26 or mid-roller 28 which extends radially between the hub portion 55 and the rim portion 56.

Each one of the idler wheels 23, 26 and mid-rollers 28 comprises a pair of lateral sides 30₁, 30₂ opposite one another and a peripheral side between the lateral sides 30₁, 30₂. Each of the lateral sides 301, 30₂ comprises a lateral surface 44 and the peripheral side comprises a circumferential surface 42. The circumferential surface 42 rolls on the inner side 45 of the track 22. More particularly, in this embodiment, the inner side 45 of the track 22 comprises a rolling path 33 on which the idler wheels 23, 26 and the mid-rollers 28 roll. The rolling path 33 is delimited by some of the drive/guide lugs 48 such that, as the idler wheels 23, 26 rolls, these drive/guide lugs 48 pass next to the idler wheels 23, 26. Each idler wheel 23, 26 and mid-roller 28 may have an axis of rotation 74, a widthwise direction defining a width W_{w} of the idler wheel 23, 26 or mid-roller 28, a radial direction, and a circumferential direction.

Each one of the idler wheels 23, 26 and mid-rollers 28 may contact a drive/guide lug 48 of the track 22 adjacent to it during motion of the track 22. More particularly, in this embodiment, the lateral side 30₂ of each one of the idler wheels 23, 26 and mid-rollers 28 faces the drive/guide lug 48, and comprises a projection-contacting portion 35 that can contact a respective drive/guide lug 48 when the idler wheel 23, 26 or mid-roller 28 contacts the drive/guide lug 48 as the drive/guide lug 48 passes next to the idler wheel 23, 26 or mid-roller 28. The projection-contacting portion 35, which will be referred to as a "lug-contacting portion", has a shape that depends on respective shapes of the idler wheel 23, 26 or mid-roller 28 and the drive/guide lug 48, but generally has a radial dimension *C* in a direction parallel to a radius R of the mid-roller 28 no greater than a height *H* of the drive/guide lug 48.

The circumferential surface of the idler wheels 23, 26 and mid-rollers 28 may have any suitable dimensions and may occupy a significant part of the width of the track 22. For example, in some embodiments, a ratio of the width of the circumferential surface over the width W_{w} of the idler wheel 23 may be at least 50%, in some embodiments at least 55%, in some embodiments at least 60%, in some embodiments at least 65%, in some embodiments at least 70%, in some embodiments at least 75%, in some embodiments at least 80%, in some embodiments at least 85%, in some embodiments at least 90%, in some embodiments at least 95%, in some embodiments even more (e.g. 99%, 100%), while in some embodiments the ratio of the width of the circumferential surface over the width W_{w} of the idler wheel 23 may be less than 95%, in some embodiments less than 85%, in some embodiments less than 75%, in some embodiments less than 65%, in some embodiments less than 60% and in some embodiments even less (e.g. less than 55%). In a similar fashion, in some embodiments, the circumferential surface of the idler wheel 23 may occupy a majority of a width of the rolling path 33 of the track 22, in some embodiments two thirds of the width of the rolling path 33, in some embodiments three quarters of the width of the rolling path 33 and in some embodiments even more (e.g., seven eights of the rolling path 33, an entirety of the rolling path 33, etc.).

More particularly, in this embodiment, each of the idler wheels 23, 26 and the mid-rollers 28 comprises a rigid body 60 and a covering 62 on the rigid body 60 to improve performance of the idler wheel 23, 26 or mid-roller 28, such as by improving contact between the idler wheel 23, 26 or mid-roller 28 and the inner side 45 of the track 22, enhancing an abrasion resistance of the idler wheel 23, 26 or mid-roller 28, and/or by absorbing vibrations.

The rigid body 60 is a core of the idler wheel 23, 26 or mid-roller 28 that imparts structural integrity to the idler wheel 23, 26 or mid-roller 28. The rigid body 60 of the idler wheel 23, 26 or mid-roller 28 has lateral sides 17₁, 17₂ opposite one another and a circumferential surface 72 between the lateral sides 17₁, 17₂. In this case, the lateral sides 17₁, 17₂ of the rigid body 60 constitute parts of the sides 301, 30₂ of the idler wheel 23, 26 or mid-roller 28, while the circumferential surface 72 of the rigid body 60 of the idler wheel 23, 26 or mid-roller 28 is covered by the covering 62. The rigid body 60 comprises a rim portion 64, a hub portion 63, and a radially-extending portion 65 between the rim portion 64 and the hub portion 63.

In this embodiment, the hub portion 63 of the rigid body 60 of each idler wheel 23, 26 or mid-roller 28 constitutes the hub portion 55 of the respective idler wheel 23, 26 or mid-roller 28. The hub portion 63 of the rigid body 60 is thus associated with the hub 46.

The rim portion 64 of the rigid body 60 of each idler wheel 23, 26 or mid-roller 28 is part of the rim portion 56 of the respective idler wheel 23, 26 or mid-roller 28. The rim portion 64 comprises the circumferential surface 72 and outer parts of the lateral sides 17₁, 17₂ of the rigid body 60 of the idler wheel 23, 26 or mid-roller 28. In this embodiment, the rim portion 64 comprises a shoulder turning radially inwardly to form a flange 73 such that the edge 75 of the rim portion 64 are located radially inward of the circumferential surface 72 of the rigid body 60. More particularly, in this example, the shoulder 15 turns radially inwardly by curving radially inward (e.g., such that the flange 75 "curls"). In other examples, the shoulder 15 may turn radially inward by being slanted or otherwise angled radially inward and/or may be partially curved radially inward and partially slanted or otherwise angled radially inward (i.e., may comprise one or more curved segments and one or more angled segments).The rim portion 64 may be configured in various other ways in other embodiments (e.g., the rim portion 64 may not comprise any shoulder).

In this embodiment, the circumferential surface 72 of the rigid body 60 is parallel to the widthwise direction of the respective idler wheel 23, 26 or mid-roller 28. That is, when viewed in cross section, the circumferential surface 72 of the rigid body 60 is flat.

The radially-extending portion 65 of the rigid body 60 of each idler wheel 23, 26 or mid-roller 28 constitutes the radially-extending portion 54 of the respective idler wheel 23, 26 or mid-roller 28. The radially-extending portion 65 interconnects the hub portion 63 and the rim portion 64. In this embodiment, the radially-extending portion 65 and the hub portion 63 of the rigid body 60 constitute a one-piece component that is secured (e.g., welded) to the rim portion 64 of the rigid body 60, which is another one-piece component. The one-piece component constituted by the radially-extending portion 65 and the hub portion 63 of the rigid body 60 may sometimes be referred to as a "disk". The radially-extending portion 65 may be configured in various other ways in other embodiments.

In this embodiment, the hub portion 63, the rim portion 64, and the radially-extending portion 65 of the rigid body 60 define an internal hollow space 37 of the respective idler wheel 23, 26 or mid-roller 28 delimited by internal surfaces 39₁-39₃ of the rigid body 60 of the respective idler wheel 23, 26 or mid-roller 28.

The rigid body 60 may be made of one or more materials. In some cases, the rigid body 60 may comprise a single material making up an entirety of the rigid body 60. In other cases, the rigid body 60 may comprise two or more different materials that make up different parts of the rigid body 60.

In this embodiment, the rigid body 60 is metallic, i.e., is at least mainly (i.e., mainly or entirely) made of a metallic material. The metallic material is selected to provide strength and rigidity to the idler wheel 23, 26 or mid-roller 28. For example, in this case, the metallic material comprises steel. In other cases, the metallic material may comprise another metal instead of steel. In other embodiments, the rigid body 60 may be at least mainly made of another type of material (e.g., composite material, polymeric material, or ceramic material). Also, in other embodiments, different parts of the rigid body 60 may be made of two or more materials (e.g., two types of steel).

Also, in this embodiment, at least part of the rigid body 60 is stamped into shape. That is, at least part of the rigid body 60 of the idler wheel 23, 26 or mid-roller 28 is formed by a stamping process. Notably, the rim portion 64, the hub portion 63 and the radially-extending portion 65 of the rigid body 60 may be stamped.

The rigid body 60 may comprise and/or be constituted of one or more stamped components. In this embodiment, the rim portion 64 of the rigid body 60 constitutes a first stamped component, while the hub portion 63 and the radially-extending portion 65 of the rigid body 60 of the wheel constitute a second one-piece component secured to the first one-piece component by any suitable means. For instance, the first stamped component and the second stamped component may be welded to one another (e.g., the second stamped component may be welded to the first stamped component or vice-versa).

The rigid body 60 of the idler wheels 23, 26 and the mid-rollers 28 may be manufactured in any other suitable way in other embodiments.

The covering 62 of each one of the idler wheels 23, 26 and mid-rollers 28 contacts the inner side 45 of the track 22 as the idler wheel 23, 26 or mid-roller 28 rolls on the inner side 45 of the track 22. The covering 62 includes at least part (i.e., some but less than all, or all) of the circumferential surface of the respective idler wheel 23, 26 or mid-roller 28. More specifically, in this embodiment, the covering 62 includes and thereby also defines the circumferential surface of the respective idler wheel 23, 26 or mid-roller 28 in its entirety. The covering 62 may also form at least part of one of the sides 301, 30₂ of the idler wheel 23, 26 or mid-roller 28 which faces a drive/guide lug 48 in other embodiments.

The covering 62 of each one of the idler wheels 23, 26 and mid-rollers 28 may covers at least part of the rigid body 60 of the respective idler wheel 23, 26 or mid-roller 28. In this embodiment, the covering 62 covers part of the rim portion 64 of the rigid body 60. More particularly, in this embodiment, the covering 62 covers the circumferential surface 72 of the rigid body 60.

The covering 62 of each one of the idler wheels 23, 26 and mid-rollers 28 may also define the circumferential surface and the periphery of the respective idler wheel 23, 26 or mid-roller 28. In this embodiment, the covering 62 comprises corners and an intermediate portion between the corners of the covering 62. More specifically, the intermediate portion of the covering 62 may comprise the circumferential surface 42 of the respective idler wheel 23, 26 or mid-roller 28.

In this embodiment, the covering 62 of each one of the idler wheels 23, 26 and mid-rollers 28 is generally centered over the respective idler wheel 23, 26 or mid-roller 28 such that the midpoint 99 of the covering 62 in the widthwise direction of the respective idler wheel 23, 26 or mid-roller 28 is the same as the midpoint of the respective idler wheel 23, 26 or mid-roller 28 in its widthwise direction.

The covering 62 may comprise and/or be constituted of an elastomeric material 77. In particular, in this embodiment, the elastomeric material is rubber.

In use, the idler wheels 23, 26 and the mid-rollers 28 are subject to friction, impacts and/or other loads that can affect their performance, the performance of the track 22, and/or the performance of the track assembly 16 as a whole. The idler wheels 23, 26 and the mid-rollers 28 may thus be designed to improve their performance, the performance of the track 22, and/or the performance of the track assembly 21 as a whole.

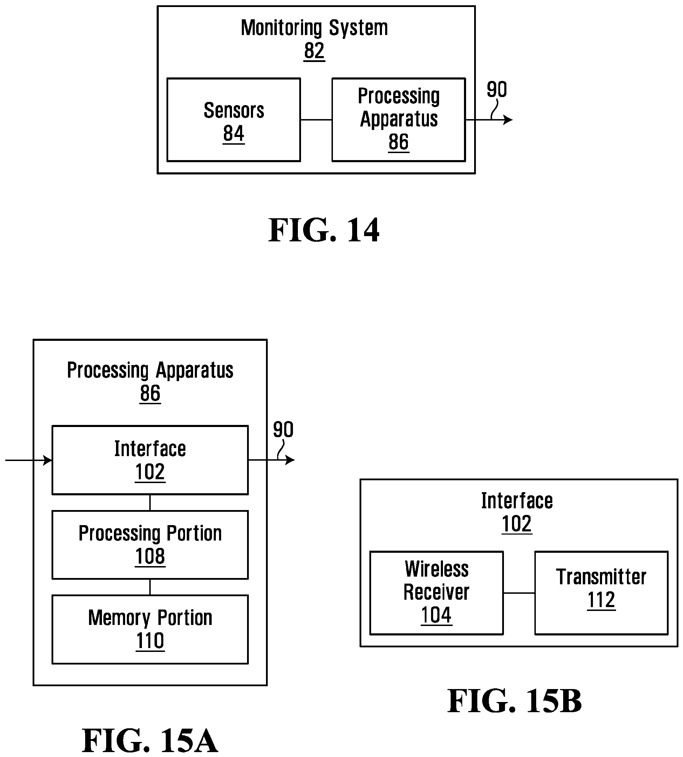

With additional reference to Figures 11 to 15B, in this embodiment, the vehicle 10 comprises a monitoring system 82 for monitoring the track systems 16 to obtain information about the track systems 16 which can be used for various purposes, such as, for example, to inform a user (e.g., the operator) and/or control the agricultural vehicle 10 based on a state of one or more of the track systems 16. Notably, in this embodiment, the monitoring system 82 is configured to monitor alignment of the track 22 of each track system 16. This may be useful, for example, to gain knowledge about the tracks 22 of the track systems 16, to help prevent rapid wear or other deterioration of the tracks 22 (e.g., blowout of one or more of the traction lugs 58), and/or to adapt the speed of the agricultural vehicle 10 in order to protect the tracks 22 while permitting the agricultural vehicle 10 to travel faster for short periods (e.g., when travelling on or crossing roads or other particular areas).

In particular, in this embodiment, the monitoring system 82 is configured to sense one or more characteristics (e.g., temperature, stress, strain, pressure, etc.) of one or more of the track-contacting wheels of the track-engaging assembly 21 of the track system 16, which includes the idler wheels 23, 26 and the mid-rollers 28 in this example, and to derive the information about the track system 16, which may be relevant for the alignment of the track 22. In some cases, such a characteristic of a given one of the track-contacting wheels may be indicative of a corresponding characteristic of the track 22, more specifically of a corresponding characteristic of at least some of the lugs 48 of the track 22. For example, in some cases, a temperature of a given one of the idler wheels 23, 26 and the mid-rollers 28 may be indicative of the temperature of the track 22, and more specifically of the temperature of at least some of the lugs 48 of the track 22. This may thus facilitate obtaining information about the track 22 without measuring it directly from the track 22.

In this embodiment, the monitoring system 82 comprises sensors 84 and a processing apparatus 86. Each sensor 84 may be configured to sense a characteristic of a respective one of the idler wheels 23, 26 and mid-rollers 28. The processing apparatus 86 may be configured to generate a signal 90 based on the characteristic of the respective one of the idler wheels 23, 26 and the mid-rollers 28 sensed by each of one or more of the sensors 84.

More particularly, in this embodiment, each of the idler wheels 23, 26 comprises a given one of the sensors 84, so that the signal 90 generated by the processing apparatus 86 is based on the characteristic of each of the idler wheels 23, 26 sensed by their sensors 84.

For conciseness, the sensor 84 of a given one of the front idler wheel 23 will be described below, but it should be understood that, in this embodiment, the sensor 84 of the other one of the front idler wheels 23 and the sensors 84 of the rear idler wheels 26 may be implemented in a similar fashion to the sensor 84 of the front idler wheel 23 described hereinbelow, the other one of the front idler wheels 23 and the rear idler wheels 26 may be configured in a similar fashion to the front idler wheel 23 described hereinbelow to accommodate the sensor 84, relationships between characteristics of the rear idler wheels 26 and characteristics of the track 22 may be similar to relationships between characteristics of the front idler wheel 23 and characteristics of the track 22 described hereinbelow, and the processing apparatus 86 may interact with the sensor 84 of the other one of the front idler wheels 23 and the sensors 84 of the rear idler wheels 26 similarly to how it may interact with the sensor 84 of the front idler wheel 23 described hereinbelow.

In this embodiment, the sensor 84 of the idler wheel 23 is mountable to part of the idler wheel 23. In particular, in this embodiment, the sensor 84is mountable to the projection-contacting region 35 of the idler wheel 23. The sensor 84 may be configured to be located on the idler wheel 23 within a distance Ds from a periphery of the idler wheel 23 that is no more than the height H of the lugs 48 of the track 22.

More specifically, in this embodiment, the sensor 84 is mounted to the rigid body 60 of the idler wheel 23. In this example, the sensor 84 is mounted to the rigid body 60 of the idler wheel 23 in the internal hollow space 37 of the rigid body 60 and spaced from the covering 62 of the idler wheel 23.

In this embodiment, the sensor 84 is fastenable to the rigid body 60 of the idler wheel 23. In this embodiment, the sensor 84 is also removably attachable to (I.e., attachable to and removable from) the rigid body 60 of the idler wheel 23. For instance, the sensor 84 may be fastenable to the rigid body 60 the idler wheel 23 by a mechanical fastener 92. For example, in some embodiments, the mechanical fastener 92 may be a threaded fastener that can be actuated (e.g., turned) to connect, release, tighten or loosen the sensor 84 to the idler wheel 23. In some embodiments, also, the sensor 84 may be fastenable to the idler wheel 23 by an adhesive. In some embodiments, the sensor 84 may be fastenable to the idler wheel 23 by both the mechanical fastener 92 and the adhesive.

More specifically, in this embodiment, the sensor 84 of the idler wheel 23 is interchangeable such that it can be removed from the idler wheel 23 (e.g., by being detached from the rigid body 60) and replaced by another similar sensor. This may be done to replace a defective or damaged sensor, to replace a sensor 84 by a more sensible and/or performant sensor, or to add or remove sensors to or from the idler wheel 23. This may also permit using the sensor 84 on more than one vehicle. For instance, in some cases, the vehicle 10 may be used only during specific periods and another vehicle that may be used during different specific periods may also comprise track systems that are configured to comprise the sensor 84, and the sensor 84 may be swapped from the track system of one vehicle to another to be used on each vehicle during their respective specific periods.

In this embodiment, the rigid body 60 may comprise an opening 88 and the sensor 84 is mountable in the opening 88 of the idler wheel 23. The opening 88 may extend through the rigid body 60 from the outer lateral side 30₁ of the idler wheel 23 to the inner lateral side 30₂ of the idler wheel 23 opposite to the outer lateral side 30₁ and configured to face the drive/guide lugs 48.

More specifically, in this embodiment, the opening 88 is located at a pre-determined location of the rigid body 60 and is created during manufacturing of the idler wheel 23 such that the rigid body 60 immediately after manufacturing, is capable of accommodating the sensor 84 only at the pre-determined location.

As a result, in this embodiment, the sensor 84 may be substantially flush with a lateral surface 44 of the outer lateral side 30₁ of the idler wheel 23.

The sensor 84 may comprise a wireless transmitter 94 configured to wirelessly communicate with the processing apparatus 86.

In this embodiment, the sensor 84 is weatherproof. In particular, the sensor 84 may be configured to resist to abrasive and/or wet surrounding elements such as water, mud, sand, snow, ice, salt, etc., and to sense the characteristic of the idler wheel 23 even when the sensor 84 is exposed to the abrasive and/or wet surrounding elements. For example, the sensor 84 may be configured to sense the characteristic of the idler wheel 23 even when at least part of (i.e., part of, a majority of, or an entirety of) the sensor 84 is exposed to the abrasive and/or wet surrounding elements. This may be achieved by any suitable means. For example, in this embodiment, the opening 88 of the rigid body 60 may isolate the sensor 84 and protect the sensor 84 from abrasive and/or wet surrounding elements. Further, in some embodiments, the sensor 84 may comprise a sensing device 91 configured to sense the characteristic of the idler wheel 23, and a housing 96 that houses and protects the sensing device 91. In particular, the housing 96 may comprise a protective substance 97 over the sensing device 91. More specifically, in this embodiment, the protective substance may hermetically seal the sensing device 91. The protective substance 97 may be malleable during application of the protective substance 97 onto the sensing device 91. For example, the protective substance 97 may comprise an elastomeric substance and/or rubber. The protective substance 97 may also comprise a paste or a liquid which solidifies after application of the paste or liquid over the sensing device. For example, the protective substance may comprise epoxy resin.

In this embodiment, the sensor 84 is a temperature sensor configured to sense a temperature of the idler wheel 23. The processing apparatus 86 may be configured to generate a signal 90 based on the temperature of the idler wheel 23.

In particular, it has been found that characteristics of the idler wheel 23 (e.g., stress, strain, temperature) may be indicative of characteristics (e.g., stress, strain, temperature, alignment) of the track 22 and of presence or absence of malfunctions of the track system 16. For example, the track 22 may sometimes be misaligned with the track-engaging assembly 21. In particular, it has been found that track misalignments, which are damageable and may cause blowout of the track 22, may cause the idler wheel 23 to overheat. A method for monitoring alignment of the tracks 22 of the vehicle 10 may thus comprise the steps of using the sensor 84 to sense the temperature of the idler wheel 23, and generating the signal 90 relating to alignment of the tracks 22 based on the temperature of the wheel 23. This is the case in this embodiment: the processing apparatus 86 may be configured to assess alignment of the track 22 based on the temperature of the idler wheel 23.

Accordingly, in this embodiment, the processing apparatus 86 is configured to generate a signal 90 relating to the alignment of the track 22 based on the temperature of the idler wheel 23. In order to do so, the processing apparatus may compare the temperature of the idler wheel 23. For example, in this embodiment, the processing apparatus 86 may compare the sensed temperature of the idler wheel 23 with a sensed temperature of the laterally aligned idler wheel. If a difference of the sensed temperature is above a pre-determined threshold, the processing apparatus 86 may be configured to generate the signal 90 indicating that there is misalignment at the idler wheel 23.

In this embodiment, the processing apparatus 86 comprises an interface 102, a processing portion 108, and a memory portion 110, which are implemented by suitable hardware and/or software.

The interface 102 comprises one or more inputs and outputs allowing the processing apparatus 86 to receive input signals from and send output signals to other components to which the processing apparatus 86 is connected (i.e., directly or indirectly connected), including, in this embodiment, the sensor 84 For example, in this embodiment, an input of the interface 102 is implemented by a wireless receiver 104 to receive a sensor signal from the sensor 84 An output of the interface 102 is implemented by a transmitter 112 to transmit the signal 90.

The processing portion 108 comprises one or more processors for performing processing operations that implement functionality of the processing apparatus 86. A processor of the processing portion 108 may be a general-purpose processor executing program code stored in the memory portion 110. Alternatively, a processor of the processing portion 108 may be a specific-purpose processor comprising one or more preprogrammed hardware or firmware elements (e.g., application-specific integrated circuits (ASICs), electrically erasable programmable read-only memories (EEPROMs), etc.) or other related elements.

The memory portion 110 comprises one or more memories for storing program code executed by the processing portion 108 and/or data used during operation of the processing portion 108. The memory portion 110 could also be used for storing data (e.g., temperature readings, reference temperatures). A memory of the memory portion 110 may be a semiconductor medium (including, e.g., a solid- state memory), a magnetic storage medium, an optical storage medium, and/or any other suitable type of memory. A memory of the memory portion 110 may be read-only memory (ROM) and/or randomaccess memory (RAM), for example.

In some embodiments, two or more elements of the processing apparatus 86 may be implemented by devices that are physically distinct from one another and may be connected to one another via a bus (e.g., one or more electrical conductors or any other suitable bus) or via a communication link which may be wired, wireless, or both. In other embodiments, two or more elements of the processing apparatus 86 may be implemented by a single integrated device. In some embodiments, the processing apparatus 86 is integrated into the vehicle itself during original manufacturing of the vehicle. In some embodiments, at least part of the processing apparatus 86 in integrated into a remote device such as a smartphone or a remote computer.

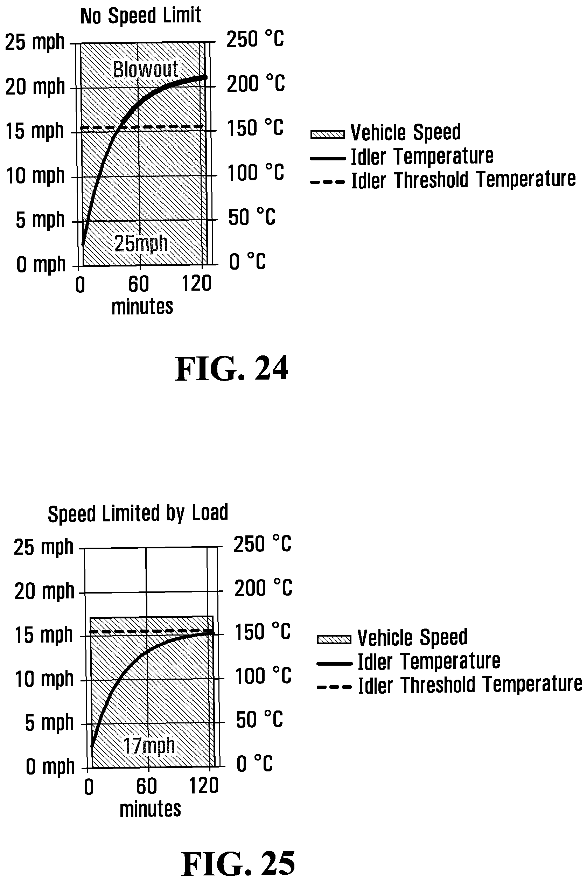

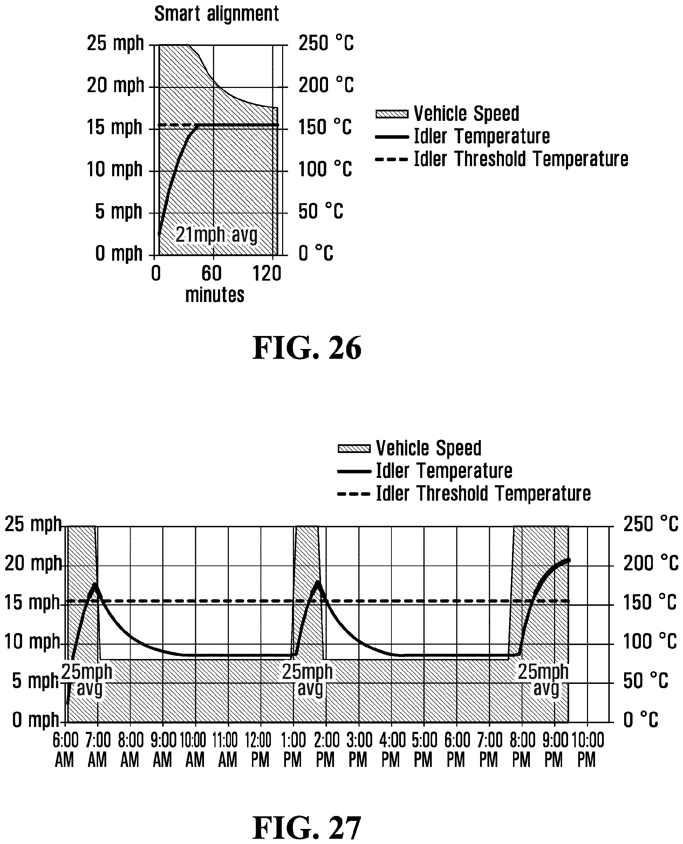

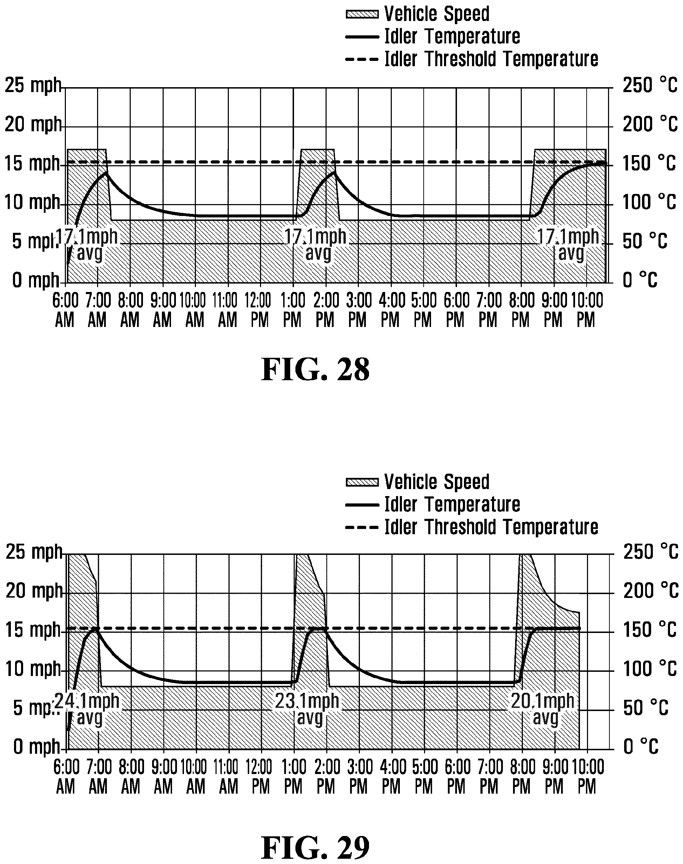

In this embodiment, the interface 102 may be configured to receive a speed signal indicative of the speed of the vehicle 10 and the processing apparatus 86 may be configured to assess the alignment of the track 22 and generate the signal 90 relating to alignment of the track 22 based on the speed of the vehicle 10 and the temperature of the idler wheel 23. Specifically, in this example, the processing apparatus 86 may be configured to assess the alignment of the track 22 based on comparison of the temperature of the idler wheel 23 to reference data, and generate the signal 90 relating to the alignment of the track 22 when the temperature of the idler wheel 23 at least reaches a reference value. As shown in Figures 24 to 29, the reference data may comprise temperature thresholds of the idler wheel 23 depending on certain parameters, such as speed of the vehicle 10 and duration: if the temperature of the idler wheel 23 indicates that the sensed temperature of the idler wheel 23 is above the threshold, then the processing apparatus 86 may assess a misalignment of the track 22 and generate the signal 90.

In this embodiment, the memory portion 110 may also comprise data to associate the output signal of the sensor 84 with the sensor 84, with the wheel 23, with the track system 16 and with models of the vehicle 10, of the track system 16 and of the track 22. In this example, the reference data of the memory portion 110 may be related to the model of the vehicle 10, of the track system 16 and of the track 22, and/or the reference data of the memory portion 110 may contain reference data related to a plurality of vehicle models, of track system models and of track models. For instance, in some embodiments, the user may be requested to associate the sensor 84 (e.g., by entering a series number of the sensor 84) to the idler wheel 23, and/or to select a corresponding model of the vehicle 10, a corresponding model of the track system 16, and/or a corresponding model of the track 22 during a set-up phase of the monitoring system 82 and prior to a use of the monitoring system 82. In other embodiments, this may be achieved automatically (e.g., the monitoring system 82 may automatically associate the output signal of the sensor 84 to the idler wheel 23, and/or automatically identify the model of the vehicle 10, the model of the track system 16 and/or the model of the track 22).

The signal 90 may indicate when the track 22 is misaligned or otherwise not being properly used or is malfunctioning. For example, when a speed of the vehicle 10 is too great for a too long period of time, the track 22 may overheat and blowout. In such circumstances, the signal 90 may indicate to an operator of the vehicle 10 or to an owner of the vehicle 10 that there are track blowing risks, and/or may automatically reduce or at least limit the speed of the vehicle 10 to ensure that the track 22 does not blow. The signal 90 may thus relate to a speed of the vehicle 10 and, more particularly, may relate to a speed reduction and/or speed limit of the vehicle 10.

The signal 90 may be directed to any system of the vehicle 10.

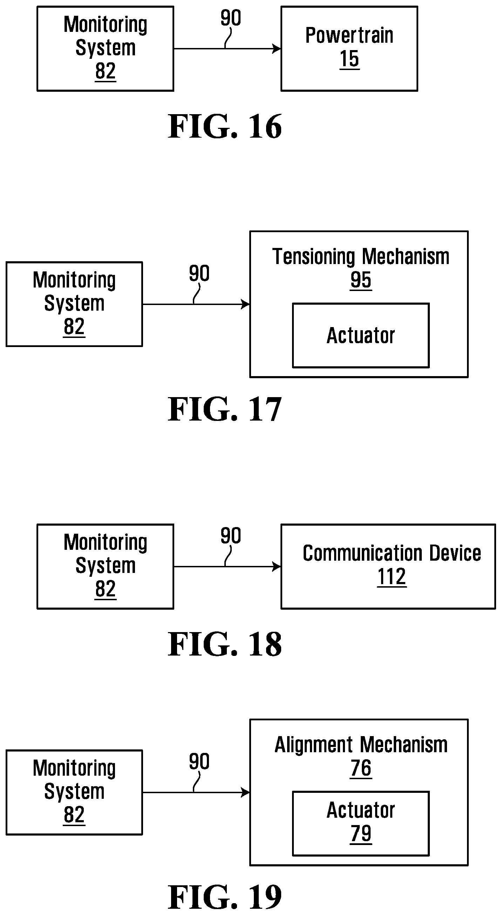

For example, in some embodiments, as shown in Figure 16, the signal 90 may be directed to the powertrain 15 of the vehicle 10 to control the powertrain 15 of the vehicle 10. More specifically, in this example, the signal 90 may be directed to the powertrain 15 to control, limit and/or reduce the speed of the vehicle 10.

As another example, as shown in Figure 17, in some embodiments, the signal 90 may be directed to the tensioning mechanism 95 to control the tensioning mechanism 95. More specifically, in this example, the signal 90 may be directed to the actuator of the tensioning mechanism 95 to control a tension of the track 22.

As another example, as shown in Figure 19, in some embodiments, the signal 90 may be directed to the alignment mechanism 76 to control the alignment mechanism 76 and to actively maintain a proper alignment of the track 22 during use. More specifically, in this example, the signal 90 may be directed to the actuator 79 of the alignment mechanism 76 to control a tension of the track 22. For instance, the signal 90 may be indicative of a magnitude of the adjustment to be made to adjust the alignment of the track 22, and may accordingly command the actuator 79 of the alignment mechanism 76 to adjust the alignment of the track 22 to a specific degree of adjustment (e.g., a distance, a number of turns or of fractions of turn).

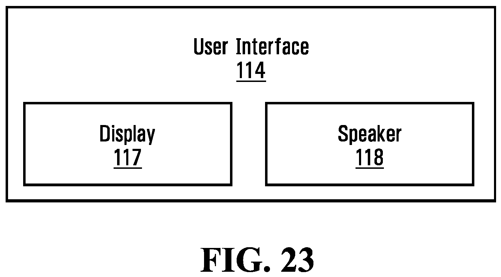

As another example, as shown in Figures 18 and 21 to 23, in some embodiments, the signal 90 is directed to a communication device 112 for conveying information to a user of the communication device 112. More specifically, in this example, the communication device 112 may comprise a user interface 114 for interacting with a user and a processing entity 116 for processing the signal 90 and generate a suitable user interaction depending on the signal 90. In this embodiment, the user interface 114 comprises a display 117 for displaying the information to the user and a speaker 118 for alerting the user of a notification or an alert.

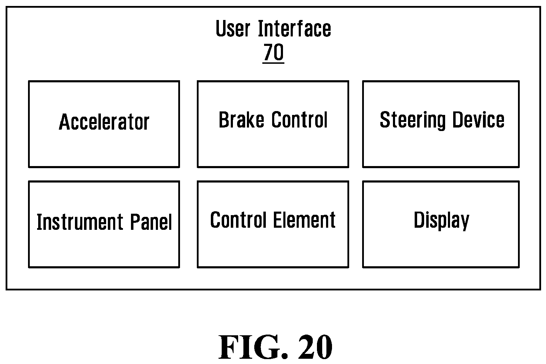

In some embodiments, the communication device 112 including he user interface 114 may be part of the user interface 70 of the operator cabin 20 of the vehicle 10, as shown in Figure 20.

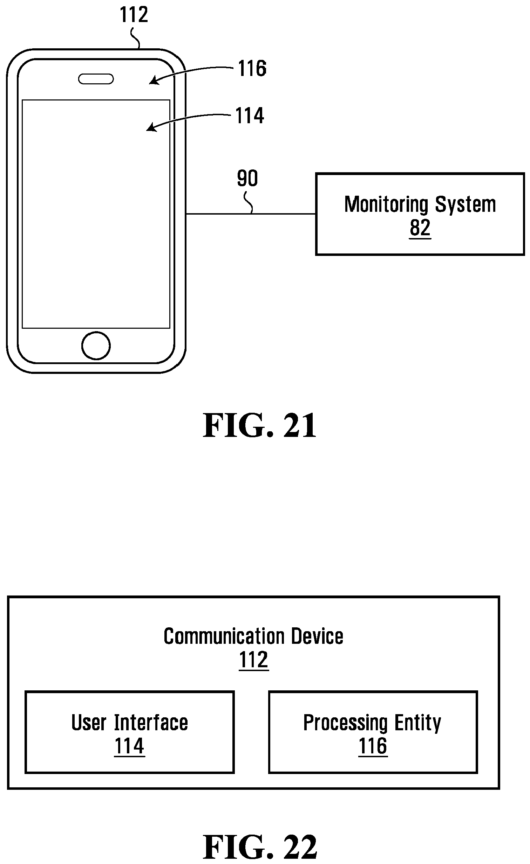

In other embodiments, the communication device 112 may be a smartphone or other user device separate from the vehicle 10, as shown in Figure 21. For example, in some embodiments, the communication device 112 may be a smartphone on which an app has been downloaded so as to interact with the monitoring system 82.

The information conveyed by the communication device 112 may comprise an indication of the temperature of the idler wheel 23 and/or a notification based on the temperature of the idler wheel 23. In this example, the notification may notify of an adjustment to be made to adjust alignment of the track 22, indicate a magnitude of the adjustment to be made to adjust the alignment of the track 22, request an authorization from the user to automatically adjust an alignment setting of the track system 16 (e.g. an actuation parameter of the actuator 79 of the alignment system 76, an tension parameter of the tensioner 95, etc.), notify of potential damage to the track 22, etc. More specifically, in this example, the indication of the magnitude of the adjustment to be made to adjust the alignment of the track 22 may comprise instructions such as a degree of adjustment (e.g., a number of turns or of fractions of turn) required on the actuator of the alignment mechanism 76. More specifically, in this embodiment, the communication device 112 may be configured to notify the user that an adjustment of the adjusting element 78 of the alignment system 76 of ¼ turn, ½ turn, ¾ turn, 1 turn, 2 turns or any suitable magnitude in any suitable direction (e.g., inboard or outboard, clockwise or counterclockwise, etc.) is required when the signal 90 is indicative of such a required adjustment. In some embodiments, the communication device 112 may display instructions (e.g., images) describing the required adjustment of the adjusting element 78, while in some embodiments, the communication device 112 may request an authorisation from a user to automatically make the adjustment (e.g., using the actuator 79), while in some embodiments, the communication device 112 may inform a user to that the required adjusted was automatically made and/or is automatically being made (e.g., using the actuator 79). In some embodiments, the information conveyed by the communication device 112 may be predictive. That is, the information conveyed by the communication device 112 may comprise an indication that an adjustment of the actuator of the alignment mechanism 76 will be required before a certain time limit (e.g., within 5 minutes, within 10 minutes, within 15 minutes, within 30 minutes, within 45 minutes, within 60 minutes, etc.) and the processing apparatus 86 may automatically or manually (e.g., using a user input through the communication device 112) adjust the alignment mechanism 76 at any time before the time limit.

In addition to being weatherproof, in this embodiment, the monitoring system 82 may determine when the sensor 84 is covered by wet and/or abrasive surrounding elements such as mud. For example, if the output signal the sensor 84 indicates a sudden change in the temperature of the sensor 84 or if the output signal of the sensor 84 is indicative of a temperature difference between the idler wheel 23 and the other front idler wheel 23 of the same track system 16 that is too great, the monitoring system 82 may conclude that a surrounding element prevent the sensor 84 from sensing the actual temperature of the idler wheel 23 and the monitoring system 82 may generate the signal 90 indicating that the sensor 84 needs to be cleaned from the wet and/or abrasive surrounding elements. In some embodiments, also, the monitoring system 82 may continue to sense the temperatures of the other one of the idler wheels 23 having an unobstructed sensor and the monitoring system 82 may continue to assess alignment of the track 22 using the sensed temperature of the other one of the idler wheels 23.

The vehicle 10, including the track systems 16 and the monitoring system 82, may be configured in various other ways in other embodiments.

For example, the processing apparatus 86 may be configured to generate the signal 90 based on characteristics of the track system 16 other than a temperature. In particular, the sensor 84 may be configured to sense a motional characteristic of the track system 16 (i.e., a characteristic of motion of the track system 16, e.g., a characteristic of motion of the track 22, such as linear speed of the track 22, or a characteristic of motion of the idler wheel 23, such as a rotational speed or acceleration of the wheel, etc.), and the processing apparatus 86 may be configured to generate the signal 90 based on the motional characteristic sensed by the sensor 84. More specifically, the processing apparatus 86 may be configured to generate the signal 90 based on characteristics including: an acceleration of the vehicle 10, of the track system 16, of the idler wheel 23 and/or of the track 22; a speed of the vehicle 10, of the track system 16, of the idler wheel 23 and/or of the track 22; a vibration of the idler wheel 23 and/or of the track 22; etc. For instance, in some cases, the sensors 84 may comprise an accelerometer.

In particular, in some embodiments, the sensor 84 may comprise more than one sensing elements 91. For instance, in this case, the first sensing element 91 of the sensor 84 may be configured to sense acceleration of the idler wheel 23 and the sensor 84 comprises a second sensing element 91 configured to sense a different characteristic (e.g., a vibration, an acceleration, a speed, a temperature, etc.) of the idler wheel 23 and the processing apparatus 86 may be configured to generate the signal 90 based on the acceleration of the idler wheel 23 and the different characteristic (e.g., speed, temperature, etc.) of the idler wheel 23.

More specifically, in some cases, the signal 90 may be indicative of a wear of the track system 16 (i.e., at least a part of the signal 90 may relate to a wear of the track system 16). In this example, the wear of the track system 16 may be a wear of the track 22, and more specifically a wear of the traction projections 58. The accelerometer may be located on the idler wheel 23 or in the track 22. The processing apparatus 86 may implement a smart algorithm which, based on the measurement data of the sensors 84 (e.g., measurement data of the accelerometer) and/or based on user input (e.g., a selection of a track type, a selection of a ground type, etc.), is configured to assess, estimate or predict the wear of the traction projections 58.

In some cases, the signal 90 may be indicative of a wear of the idler wheel 23, e.g., a wear of the covering 62 of the idler wheel 23. The accelerometer may be located on the idler wheel 23 and may be configured for measuring the acceleration of the idler wheel 23. The processing apparatus 86 may implement a smart algorithm which, based on the measurement data of the sensors 84 (e.g., measurement data of the accelerometer) and/or based on user input (e.g., a selection of a wheel type, a selection of a ground type, etc.), is configured to assess, estimate or predict the wear of the covering 62.

In some cases, also, the signal 90 may be indicative of a compression set of the elastomeric material (i.e., permanent compression of the elastomeric material, such as measured by ASTM D395 - 18) of the track 22. The processing apparatus 86 may implement a smart algorithm which, based on the measurement data of the sensors 84 (e.g., measurement data of the accelerometer) and/or based on user input (e.g., a selection of a track type, a selection of a ground type, etc.), is configured to measure the wear of the compression set of the elastomeric material of the track 22.

In some cases, also, the signal 90 may relate to and be indicative of a slip of the track 22. Some accelerometers may be disposed in the idler wheel 23 and some accelerometers may be disposed in the track 22. The processing apparatus 86 may implement a smart algorithm which, based on the measurement data of the sensors 84 (e.g., measurement data of the accelerometer) and/or based on user input (e.g., a selection of a track type and a wheel type, a selection of a ground type, etc.), is configured to measure the slip of the track 22, e.g., by measuring a difference between linear (e.g., tangential) acceleration profiles of the idler wheel 23 and the track 22.

In some cases, also, the signal 90 may relate to a vibration of the track system 16 and be indicative of a power output of the vehicle 10. In particular, the sensor 84 may be located in the idler wheel 23 and may be configured to sense a resonance frequency or a vibrational response of the idler wheel 23. Without being bound by any theory, a power output of the vehicle 10 may impact the tension of the track 22, which may apply a force on the idler wheel 23, causing the vibrational response of the idler wheel 23 to change based on the power output of the vehicle 10. In some embodiments, the processing apparatus 86 may implement a smart algorithm which, based on and/or based on user input (e.g., a selection of a track type and a wheel type, a selection of a ground type, etc.), is configured to measure the power output of the vehicle 10 at the track system 16. This may be useful, e.g., for determining an actual efficiency of the vehicle 10, for determining a traction capability of the track system 16, and so on.

In some cases, also, the signal 90 may relate to and be indicative of an evaluation of a weight of the vehicle 10 and/or a load of the track system 16. In particular, the sensor 84 may be located in the idler wheel 23 and may be configured to sense a resonance frequency or a vibrational response of the idler wheel 23. Without being bound by any theory, the weight of the vehicle 10 may impact the tension of the track 22, which may apply a load on the idler wheel 23, and because at least part of the weight of the vehicle 10 is distributed between the wheels of the track system 16, the vibrational response of the idler wheel 23 may change based on the weight of the vehicle 10. In some embodiments, the processing apparatus 86 may implement a smart algorithm which, based on the measurement data of the sensors 84 (e.g., measurement data of the vibration sensor) and/or based on user input (e.g., a selection of a track type and a wheel type, a selection of a ground type, etc.), is configured to measure the weight of the vehicle 10 at the track system 16. This may be useful, e.g., for determining an actual efficiency of the vehicle 10, for determining a traction capability of the track system 16, and so on.

In some cases, also, the signal 90 may relate to a vibration of the track system 16 and may be indicative of a vibrational stability of the track system 16. In particular, the sensor 84 may be configured to sense a resonance frequency or a vibrational response of a part of the track system 16, which notably depends on loads applied thereon. In particular, in this embodiment, the sensors 84 of the monitoring system 82 may comprise at least two vibrational sensors configured to sense vibrations on different portions of an element of the track system 16, e.g., the idler wheel 23, such as by being located at different portions of the idler wheel 23. In some embodiments, the processing apparatus 86 may implement a smart algorithm which, based on the measurement data of the sensors 84 (e.g., measurement data of the vibration sensors) and/or based on user input (e.g., a selection of a track type and a wheel type, a selection of a ground type, etc.), is configured to assess, estimate or predict a vibrational stability of the track system 16.

In some cases, also, the signal 90 may relate to a vibration of the track system 16 and may be indicative of a condition of a component of the track system 16. In particular, the sensor 84 may be configured to sense a resonance frequency or a vibrational response of the idler wheel 23, which may depend on the condition of an internal bearing of the idler wheel 23. In some embodiments, the processing apparatus 86 may implement a smart algorithm which, based on the measurement data of the sensors 84 (e.g., measurement data of the vibration sensor) and/or based on user input (e.g., a selection of a track a wheel type, a selection of a ground type, etc.), is configured to determine the condition (e.g. a wear level) of the idler wheel 23.

In some cases, also, the signal 90 may relate to a usage of the track system 16 and may be indicative of a condition of a component of the track system 16. In particular, the sensor 84 may be configured to sense an acceleration of idler wheel 23, and to record running data of the idler wheel 23 (e.g., run time of the idler wheel 23). For instance, the accelerometer may be disposed in the idler wheel 23. In some embodiments, the processing apparatus 86 may implement a smart algorithm which, based on the measurement data of the sensors 84 (e.g., measurement data of the vibration sensor) and/or based on user input (e.g., a selection of a track a wheel type, a selection of a ground type, etc.), is configured to assess, estimate or predict the condition (e.g. a wear level) of the idler wheel 23 and the condition of the track 22, and to plan maintenance tasks and optionally notify the user when a maintenance task is required. In particular, in some embodiments, the processing apparatus 86 may be capable of predicting an endof-life of the idler wheel 23 and of the track 22 of the track system 16 based on the measurement data of the sensors 84 and/or based on user input.

In some cases, also, the signal 90 may relate to a usage of the track system 16 and may be indicative of a duty cycle of the track system 16. In particular, the sensor 84 may be located in the idler wheel 23 and may be configured to sense an acceleration of idler wheel 23 and to record running data of the idler wheel 23 (e.g., run time of the idler wheel 23). In some embodiments, the processing apparatus 86 may implement a smart algorithm which, based on the measurement data of the sensors 84 (e.g., measurement data of the vibration sensor) and/or based on user input (e.g., a selection of a track a wheel type, a selection of a ground type, etc.), is configured to evaluate speed, running times and other parameters, and to automatically generate duty cycles of the track system 16 and its components.

In some cases, also, the signal 90 may relate to working conditions of the vehicle 10 and may be indicative of a load distribution and to a load magnitude one a component of the track system 16. In particular, the sensor 84 may be configured to sense a force or a load on a component of the track system 16, e.g., the idler wheel 23. In some embodiments, the processing apparatus 86 may implement a smart algorithm which, based on the measurement data of the sensors 84 (e.g., measurement data of the vibration sensor) and/or based on user input (e.g., a selection of a track a wheel type, a selection of a ground type, etc.), is configured to measure an angle of the ground (e.g., an angle of a side hill, an angle of a uphill or downhill), a turning radius of the vehicle 10, a speed of the vehicle 10, an acceleration of the vehicle 10, and so on. This may be useful for the operator of the vehicle 10 to allow the operator to operate the vehicle 10 efficiently. This may also be useful to evaluate the performances of the vehicle 10 under different conditions (e.g., different slopes, different types of ground, different trajectories, etc.).

In some cases, also, the signal 90 may relate to and be indicative of a configuration of the track 22 and/or a motion of the frame 13. The processing apparatus 86 may implement a smart algorithm which, based on the measurement data of the sensors 84 (e.g., measurement data of the accelerometer) and/or based on user input (e.g., a selection of a track type and a wheel type, a selection of a ground type, etc.), is configured to measure a configuration parameter of the track system 16, such as a pitching angle and/or a rocking angle of a lower frame member of the frame 13 relative to an upper frame member of the frame 13, and to measure a pivoting motion of the frame 13 of the track system 16 about the pivot axis generally parallel to the longitudinal direction of the track system 16.

In some cases, also, the signal 90 may relate to an intensity of a wheel-lug rubbing and may be indicative of alignment of the track 22. In particular, the sensor 84 may be configured to sense an acceleration of idler wheel 23, which may be used to measure if the idler wheel 23 is orthogonal relative to its axis of rotation to assess whether there is lateral friction between the idler wheel 23 and the drive/guide lugs 48. In some embodiments, also, the sensor 84 may comprise a force sensor disposed on the idler wheel 23 to measure a force applied laterally between the guide/drive lugs 48 and the idler wheel 23. The processing apparatus 86 may implement a smart algorithm which, based on the measurement data of the sensors 84 (e.g., measurement data of the accelerometer) and/or based on user input (e.g., a selection of a track type and a wheel type, a selection of a ground type, etc.), is configured to measure the presence and level of friction between the idler wheel 23 and the drive/guide lugs 48 and to indicate if there is misalignment of the track 22.

As another example, in some embodiments, the one or more openings 88 may be created after manufacturing of the idler wheel 23 such that a user or owner of the vehicle 10 may decide the location of the opening 88 and create the opening 88 (e.g., by drilling the opening 88).

As another example, in some embodiments, at least part of the processing apparatus 86 may be disposed in the same device as the communication device 112. For instance, in some embodiments, a smartphone or remote controller may implement part of the processing apparatus 86 (e.g. the smartphone or remote controller may comprise the reference data) and the communication device 112 in order to determine the alignment of the track 22 and display the information to the user.

As another example, in some embodiments, the sensor 84 may be configured to be useable in specific, pre-determined idler wheel type, track system model series, track model series, and/or types of vehicles. For instance, the sensor 84 may be configured to be only useable in a front idler wheel, in a rear idler wheel and/or in a roller wheel. As another example, the sensor 84 may be only useable with a specific brand of tracks, of tracks systems and/or of vehicles. In this embodiment, the output signal of the sensor 84 may comprise an identification of a wheel type (e.g., front idler wheel, rear idler wheel, roller wheel), of a track system model series (e.g., a brand of the track system 16), of a track model series (e.g., a brand of the track 22), and/or of a type of vehicle (e.g., a model of the vehicle 10).

As another example, in some embodiments, the sensor 84 may not be removable from the idler wheel 23, i.e., may be permanently affixed to the rigid body 60.

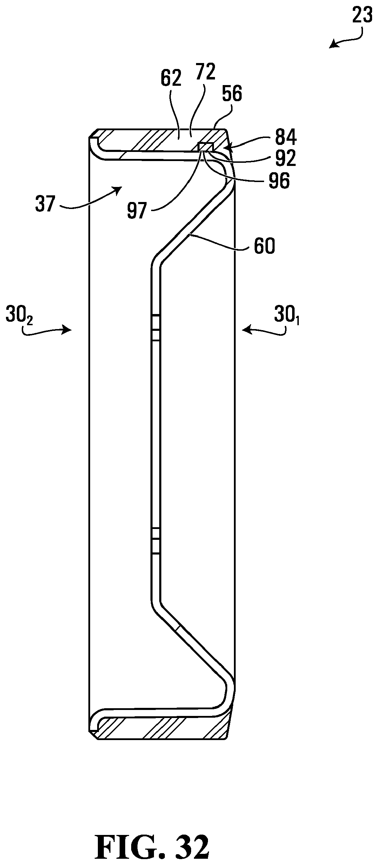

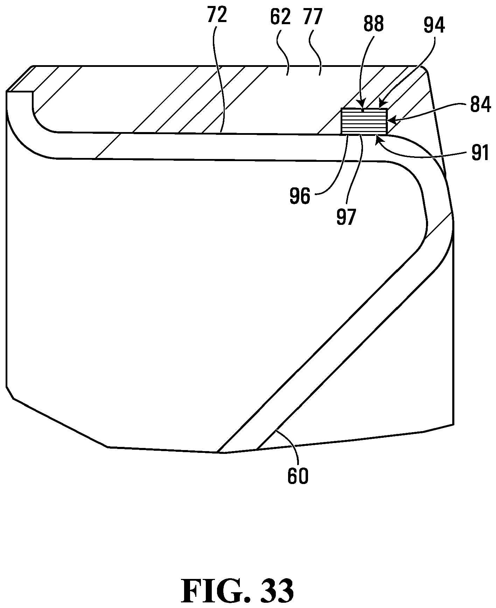

As another example, as shown in Figures 32 and 33, in some embodiments, rather than being affixable to the rigid body 60, the sensor 84 may be affixable to the covering 62. As another example, in some embodiments, the sensor 84 may be disposed over the surface 72 of the rigid body 60 and buried in the elastomeric material 77 of the covering 62, which houses and protects the sensor 84 from harmful surrounding elements. In some embodiments, the sensor 84 may be disposed over the surface 72 of the rigid body 60 and the covering 62 may be molded over the sensor 84. In some embodiment, the opening 88 may be made through the covering 62 (e.g., by being drilled into the material 77 of the covering).

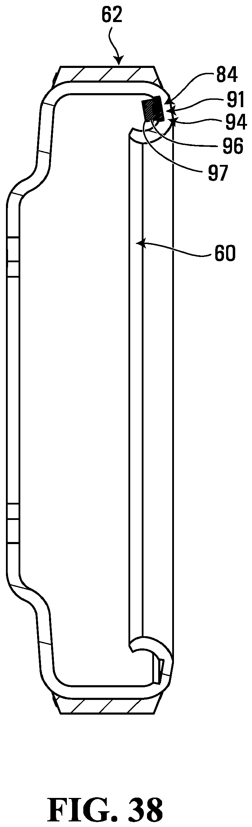

As another example, as shown in Figure 38, the sensor 84 may be attached to the rigid body 60 fastenerlessly. That is, the sensor 84 may be attached to the rigid body 60 without any fastener. For example, in some embodiments, the hollow space 37 of the rigid body 60 defines a concave volume which allows the sensor 84 to clip in position and retain the sensor 84 into place during use.

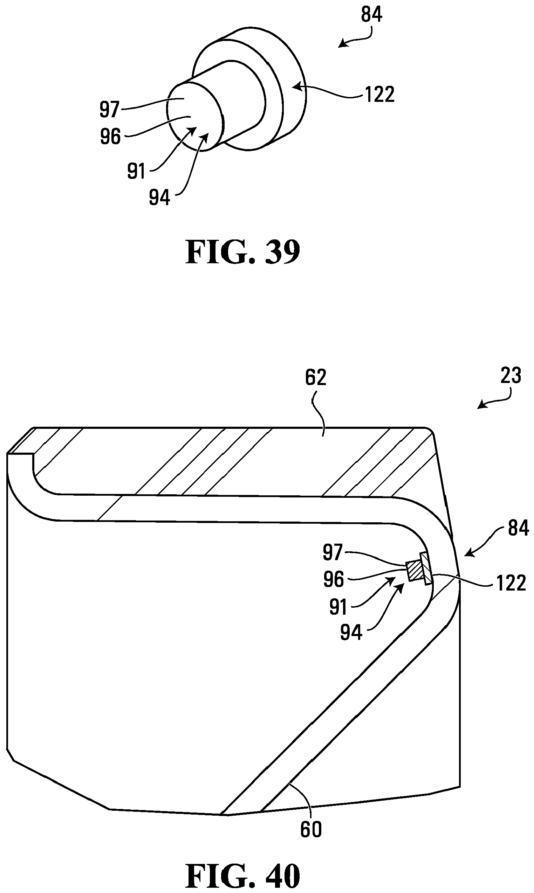

As another example, in some embodiments, with additional reference to Figures 39 to 42, the sensor 84 may comprise a quick connector 68 configured to attach the sensor 84 to and detach the sensor 84 from a connecting part 89 (e.g., of the rigid body 60) of the idler wheel 23 quickly and easily. This facilitates installation and removal of the sensor 84, such as to replace the sensor 84, assemble the idler wheel 23, and/or other purposes.

For instance, in this embodiment, the quick connector 68 of the sensor 84 is configured to connect the sensor 84 to and disconnect the sensor 84 from the connecting part 89 (e.g., of the rigid body 60) of the idler wheel 23 without using a screwdriver. In this example, the quick connector 68 is configured to connect the sensor 84 to and disconnect the sensor 84 from the connecting part 89 (e.g., of the rigid body 60) of the idler wheel 23 screwlessly (i.e., without using any screws).

In this embodiment, the quick connector 68 of the sensor 84 is configured to connect the sensor 84 to and disconnect the sensor 84 from the connecting part 89 (e.g., of the rigid body 60) of the idler wheel 23 toollessly (i.e., manually without using any tool). That is, the sensor 84 is attachable to and detachable from the connecting part 89 (e.g., of the rigid body 60) of the idler wheel 23 manually without using any tool (i.e., a screwdriver or any other tool).

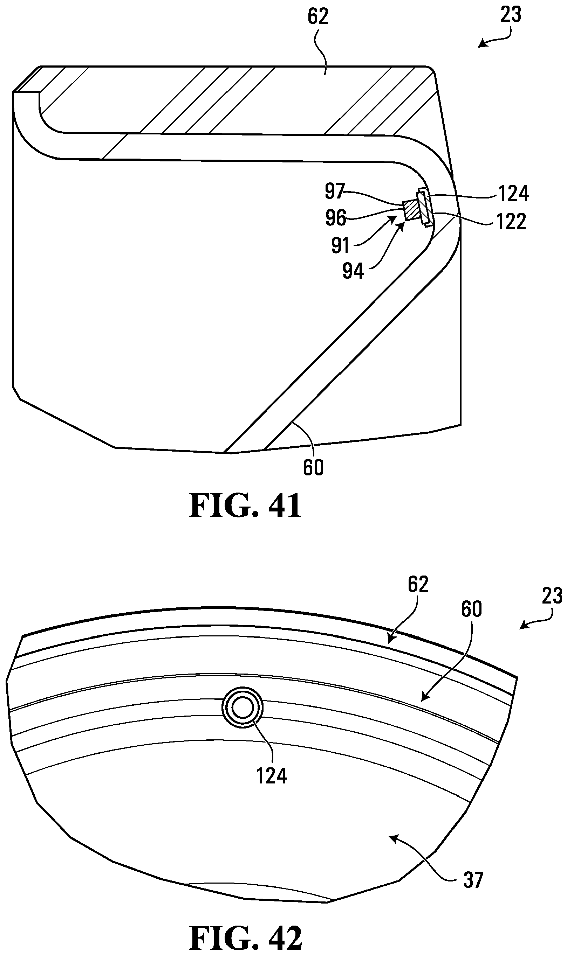

More particularly, in this embodiment, the quick connector 68 of the sensor 84 comprises a magnetic element 122 configured to magnetically connect to the connecting part 89 (e.g., of the rigid body 60) of the idler wheel 23 such that the sensor 84 may be connected to the connecting part 89 (e.g., of the rigid body 60) of the idler wheel 23 by magnetism. For instance, in some embodiments, as shown in Figures 39 and 40, the magnetic element 122 of the sensor 84 can be removably and directly attached to the rigid body 60 of the idler wheel 23 magnetically. In some embodiments, as shown in Figures 41 and 42, the connecting part 89 of the rigid body 60 of the idler wheel 23 comprises a magnetic element 124 forming a first magnetic pole while the magnetic element 122 of the sensor 84 forms a second opposite magnetic pole, such that the magnetic elements 122, 124 are attracted to one another and can be removably connected.

The magnetic element 124 of the connecting part 89 of the rigid body 60 of the idler wheel 23 may be provided in any suitable way. For instance, in some embodiments, the magnetic element 124 of the connecting part 89 of the rigid body 60 of the idler wheel 23 may be implemented by metallic material 130 of the rigid body 60 of the idler wheel 23, which constitutes at least a majority of the rigid body 60 and may be ferromagnetic. That is, the magnetic element 124 of the connecting part 89 of the rigid body 60 of the idler wheel 23 may be inherent to a nature of a basic structure of the rigid body 60. In other embodiments, the magnetic element 124 of the idler wheel 23 may be affixed to an underlying portion of the rigid body 60 of the idler wheel 23, such as by being mechanically fastened (e.g., with one or more screws, rivets, or other mechanical fasteners) or adhesively fastened to the underlying portion of the rigid body 60 the idler wheel 23 via adhesive.

The magnetic element 122 of the sensor 84 may be provided in any suitable way. For instance, in some embodiments, the magnetic element 122 of the sensor 84 may be implemented by metallic material the 134 of the housing 96 of the sensor 84, which constitutes at least a majority of the housing 96 and may be ferromagnetic. In other embodiments, the magnetic element 122 of the sensor 84 may be affixed to an underlying portion of the housing 96 of the sensor 84, such as by being mechanically fastened (e.g., with one or more screws, rivets, or other mechanical fasteners) or adhesively fastened to the underlying portion of the housing 96 of the sensor 84 (e.g., via adhesive backing or any other suitable adhesive).

The quick connector 68 of the sensor 84 may be implemented in various other ways in other embodiments.

In other embodiments, the quick connector 68 of the sensor 84 may comprise a clip, a snap button, a hook-and-loop (e.g., Velcro) fastener, etc., which is configured to connect with a complementary portion of the connecting part 89 (e.g., of the rigid body 60) of the idler wheel 23.

As another example, in some embodiments, the track system 86 may comprise the monitoring system 82 without comprising the alignment mechanism 76. In this embodiment, if misalignment (or any other problem detectable by the monitoring system 82) is detected by the monitoring system 82, the monitoring system 82 may generate the signal 90 to stop the vehicle 10 and/or inform the user of the vehicle 10 and/or the user of the communication device 112 that there is misalignment (or any other problem detectable by the monitoring system 82).

Although in the embodiments described above each one of the idler wheels 23, 26 comprises one sensor 84, in some embodiments, each one of the wheels 23, 26 may comprise two or more sensors 84. In some embodiments, the sensors 84 present in each idler wheel 23 may sense the same characteristic (e.g., temperature, stress, strain) of the idler wheel 23, while in other embodiments, the sensors 84 present in each idler wheel 23 may sense different characteristics of the idler wheel 23.

Although in some embodiments described above the sensors 84 are disposed in or on the idler wheels 23, 26, in some embodiments, the sensors 84 may be disposed in the mid-rollers 28 in a similar fashion as discussed above. That is, in some embodiments, the mid-rollers 28 and the idler wheels 23, 26 may comprise sensors 84, while in some embodiments the mid-rollers 28 may comprise sensors 84 while at least some of (i.e., some of, a majority of or all of) the idler wheels 23, 26 may not comprise any sensor 84.

Although in some embodiments described above the communication device 112 is configured to convey instructions such as a degree of adjustment required on the actuators 79 of the alignment mechanisms 76 of the wheels 23, 26, 28, in some embodiments, the communication device 112 is configured to convey instructions such as a degree of adjustment required on the actuator 79 of the alignment mechanism 76 of specific ones of the wheels 23, 26, 28 and/or specific ones of the track systems 16, relative to, or independent from, settings of the alignment mechanism 76 of other specific ones of the wheels 23, 26, 28 and/or other specific ones of the track systems 16.

For instance, in a specific example, the indication of the magnitude of the adjustment to be made to adjust the alignment of the track 22 may comprise instructions such as a degree of adjustment required on the actuator of the alignment mechanism 76 of the idler wheel 23 relative to, or independent from, settings of the actuator of the alignment mechanism 76 of the laterally adjacent idler wheel 23.

In another specific example, the indication of the magnitude of the adjustment to be made to adjust the alignment of the track 22 may comprise instructions such as a degree of adjustment required on the actuators of the alignment mechanisms 76 of the idler wheel 23 and its laterally adjacent idler wheel 23 relative to, or independent from, settings of the actuators of the alignment mechanisms 76 of the rear idler wheels 26.

In another specific example, the indication of the magnitude of the adjustment to be made to adjust the alignment of the track 22 may comprise instructions such as a degree of adjustment required on the actuator of the alignment mechanism 76 of the idler wheel 23 of the track system 16 located on a given lateral side (e.g., left or right) of the vehicle 10 relative to, or independent from, settings of the actuator of the alignment mechanism 76 of the idler wheel 23 of the track system 16 located on the opposite lateral side of the vehicle 10.

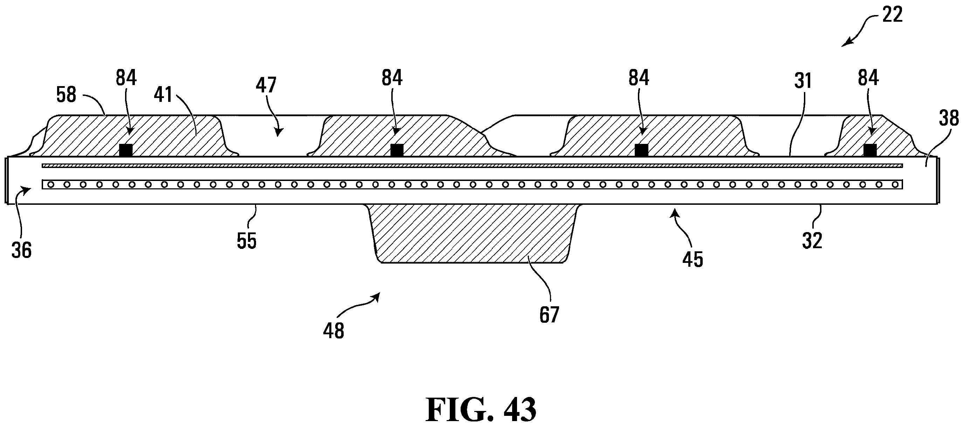

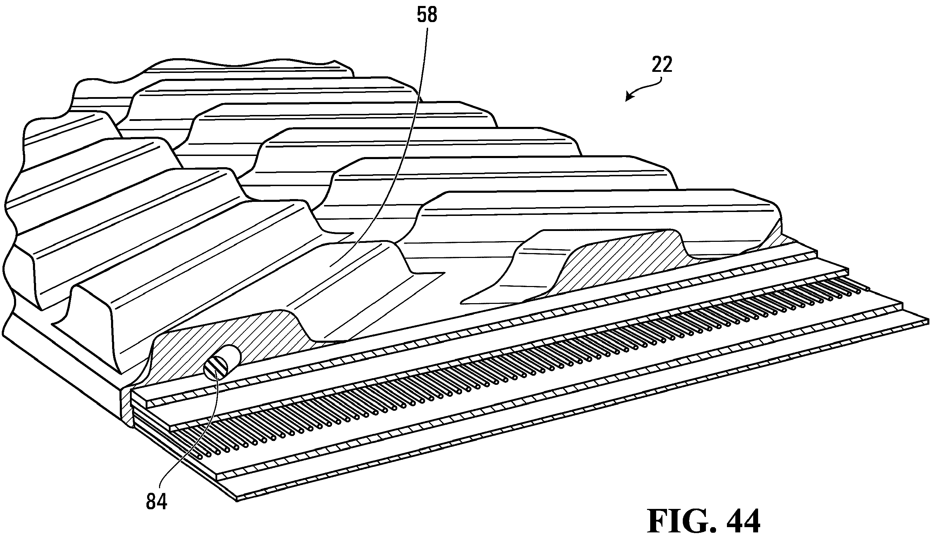

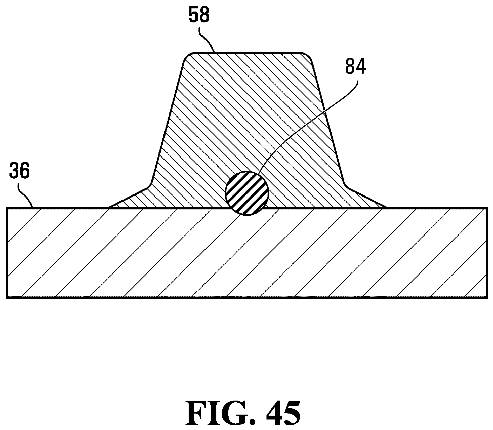

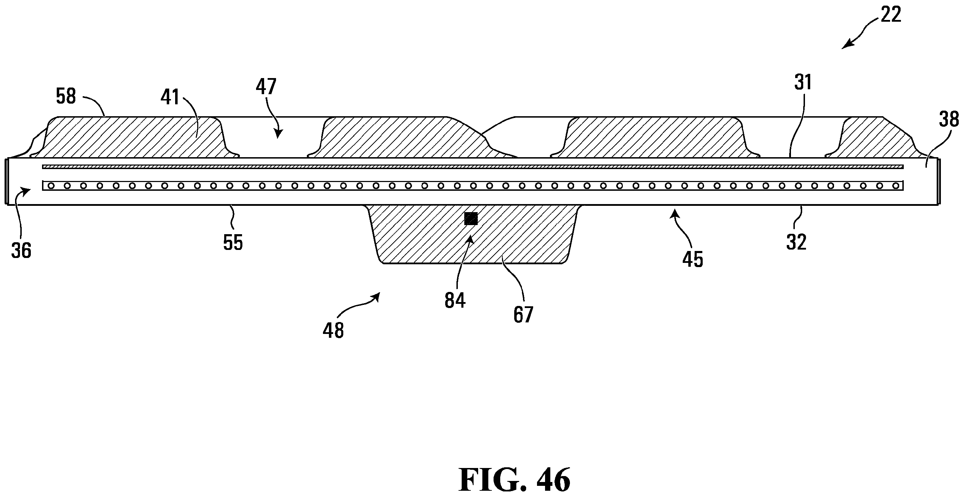

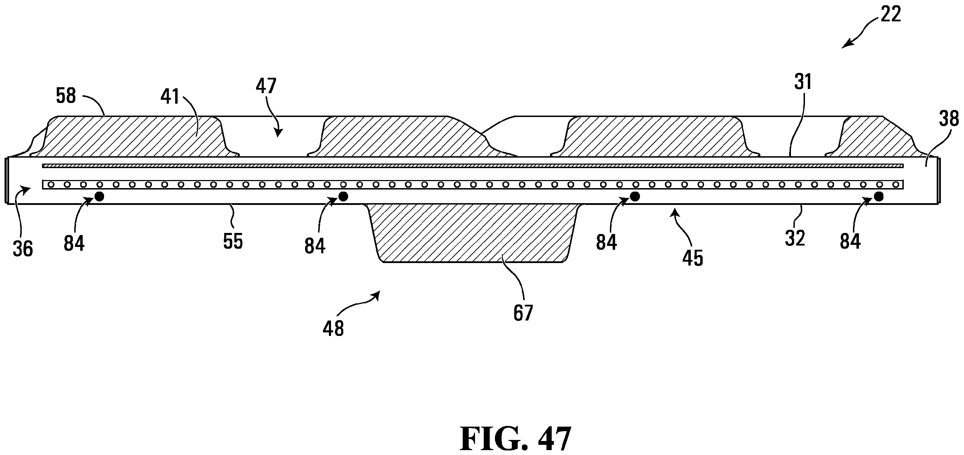

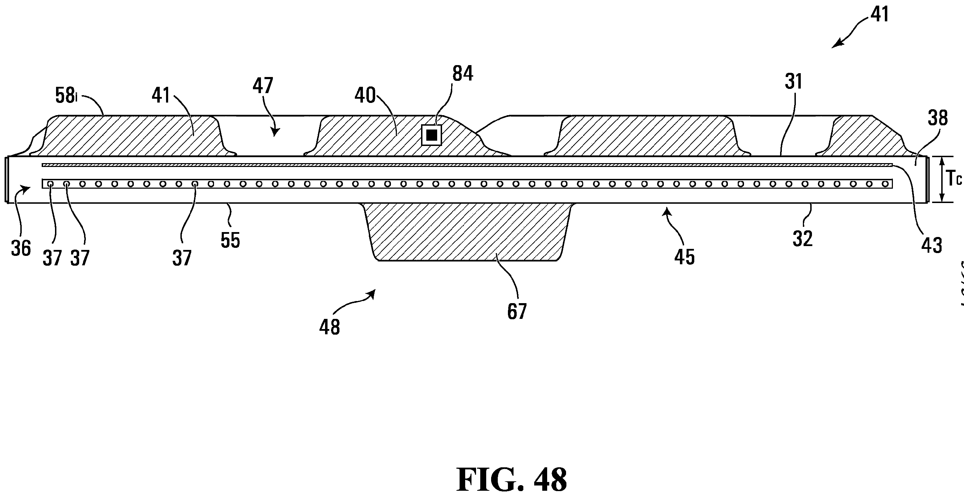

In some embodiments, in addition to or instead of the sensors 84 of the idler wheels 23, 26 and mid-rollers 28, as shown in Figures 43 to 48, the track 22 may comprise one or more of the sensors 84 of the monitoring system 82. Each sensor 84 of the track 22 is configured to sense a characteristic (e.g., a temperature) of the track 22, and the processing apparatus 86 may be configured to generate the signal 90 based on the characteristic of the track 22 sensed by that sensor 84. This may be used to monitor and adjust alignment of the track 22, according to principles described above in respect of the sensors 84 of the idler wheels 23, 26 and mid-rollers 28.

In various embodiments, the one or more sensors 44 of the track 22 may be disposed within elastomeric material of the track 22. For example, in some embodiments, the one or more sensors 44 of the track 22 may be disposed in the elastomeric material 67 or one or more of the drive/guide lugs 48, in the elastomeric material 41 of one or more of the traction lugs 58, and/or in the elastomeric material 38 of the carcass 36.

For instance, in various embodiments, the track 22 including the one or more sensors 84 may be implemented as described in U.S. Patent Application Publication 2018/0190045 and/or International Application Publication WO2019/109191 that are incorporated by reference herein.

Although the agricultural vehicle 10 illustrated in Figure 1 is an agricultural tractor comprising two drive wheels 17 and two track systems 16, different types of agricultural vehicles configured differently (e.g., having a different number of track systems) may implement improvements based on principles disclosed herein.

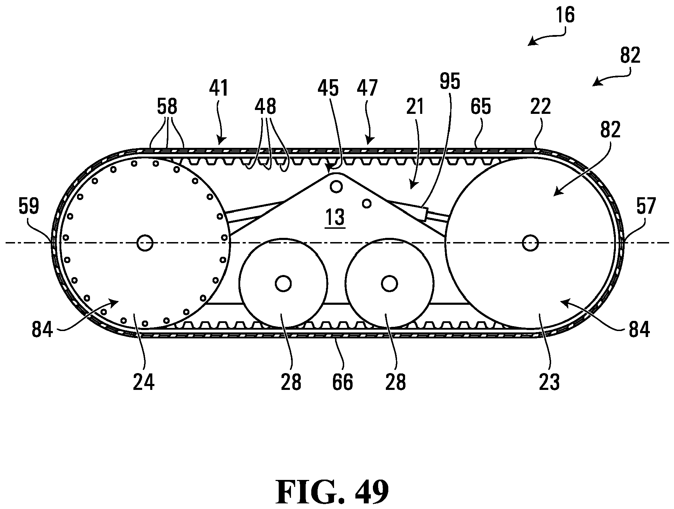

For example, with additional reference to Figure 49, in some embodiments, the track systems 16 may be motorized. Thus, the track-contacting wheels of each track system 16 may comprise a drive wheel 24. In this example, the powertrain 15 may transmit motive power generated by the prime mover 14 to the track systems 16 in order to drive (i.e., impart motion to) the track systems 16. The powertrain 15 may transmit power from the prime mover 14 to the track systems 16 in any suitable way. In this embodiment, the powertrain 15 comprises a transmission between the prime mover 14 and final drive axles 56 for transmitting motive power from the prime mover 14 to the track systems 16. The transmission may be an automatic transmission (e.g., a continuously variable transmission (CVT)) or any other suitable type of transmission. The drive wheel 24 may be rotatable by power derived from the prime mover 14 to drive the track 22. That is, power generated by the prime mover 14 and delivered over the powertrain 15 of the agricultural vehicle 10 can rotate a final drive axle 56, which causes rotation of the drive wheel 24, which in turn imparts motion to the track 22. In this examples, the drive/guide lugs 48 may interact with the drive wheel 24, in this case with drive members 52 of the drive wheel 24 that are distributed around a periphery of the drive wheel 24, in order to cause the track 22 to be driven. Alternatively, in other embodiments, the drive wheel 24 may frictionally drive the track 22.

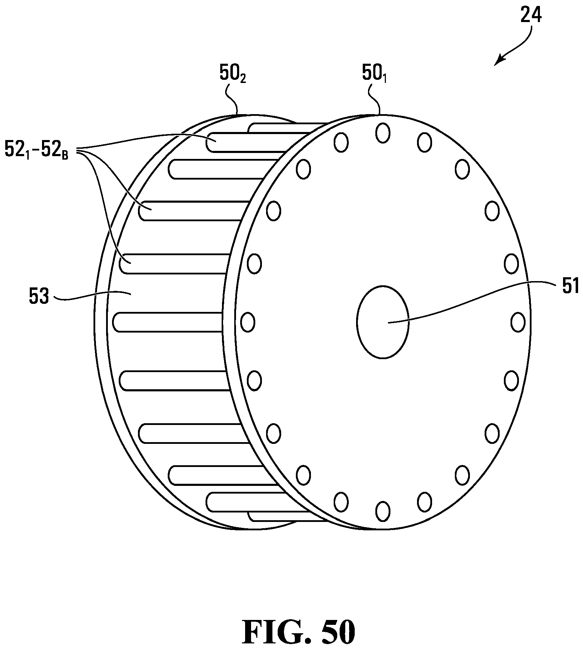

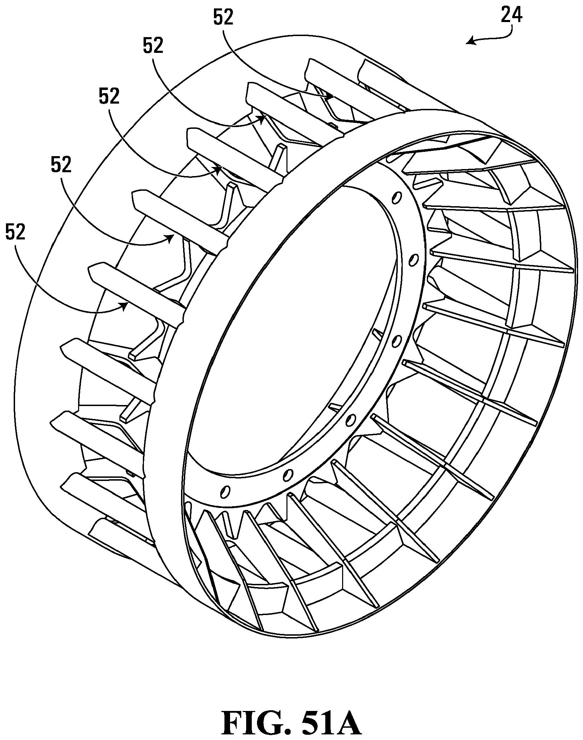

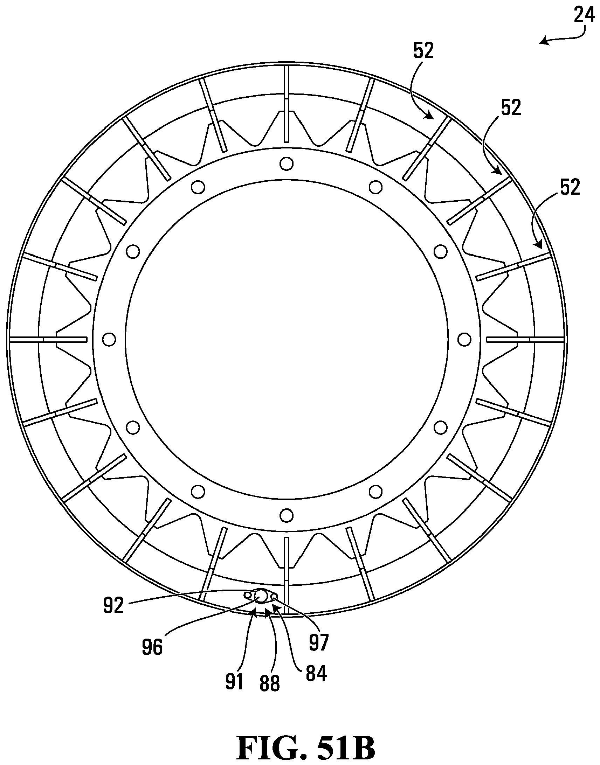

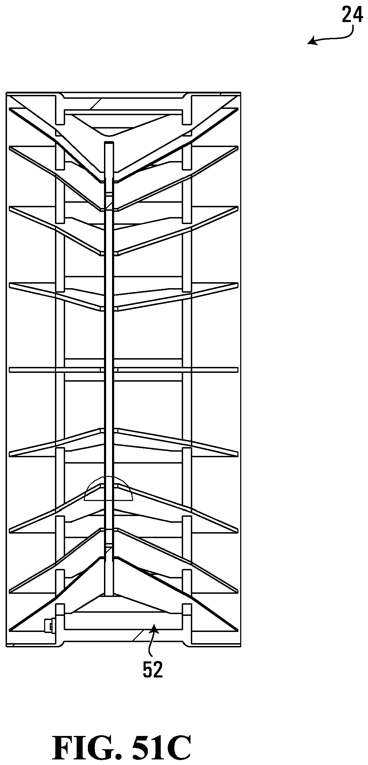

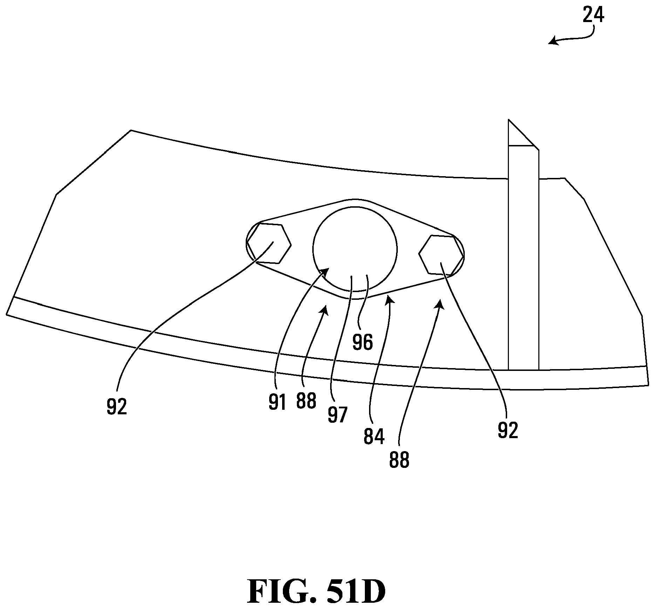

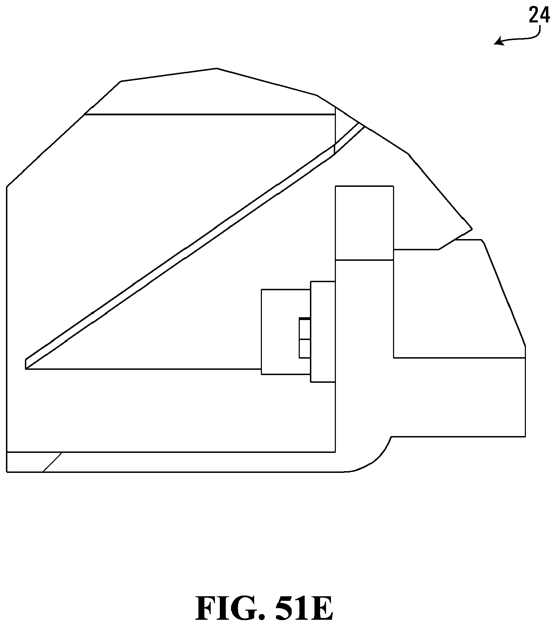

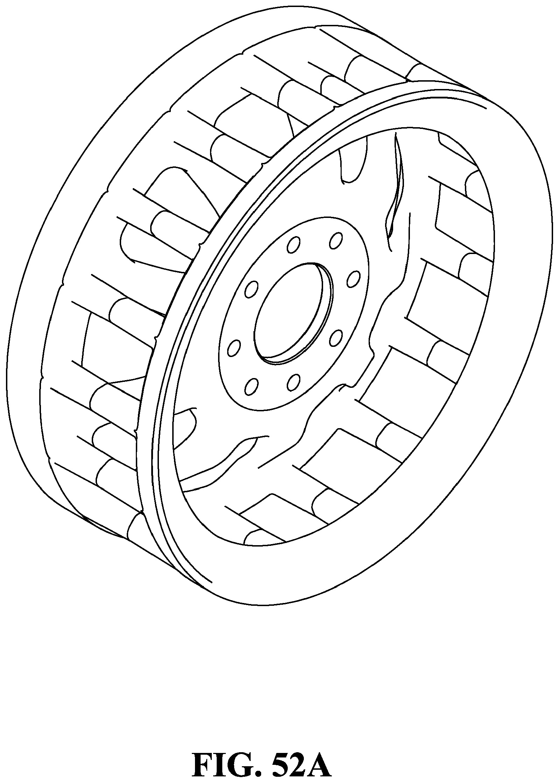

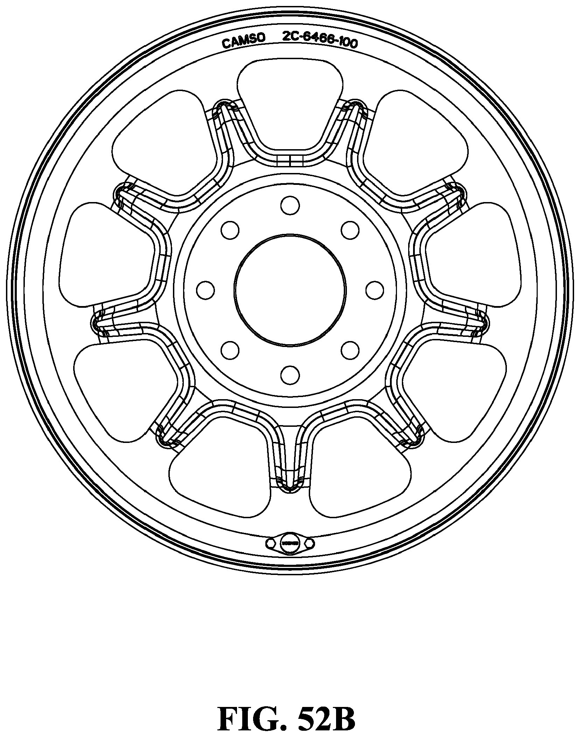

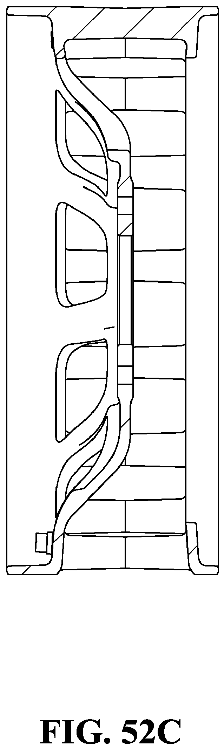

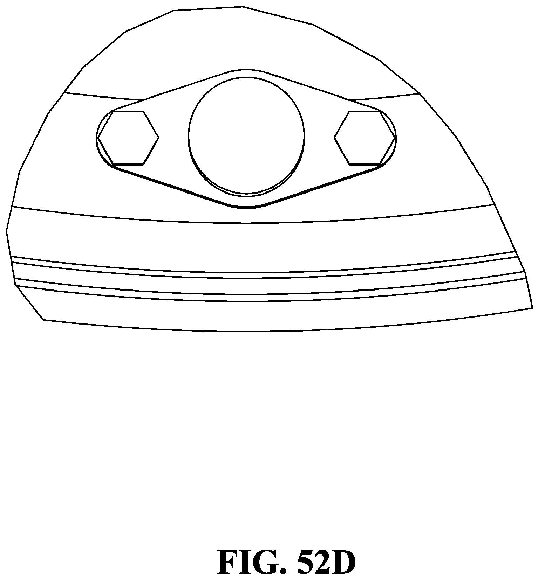

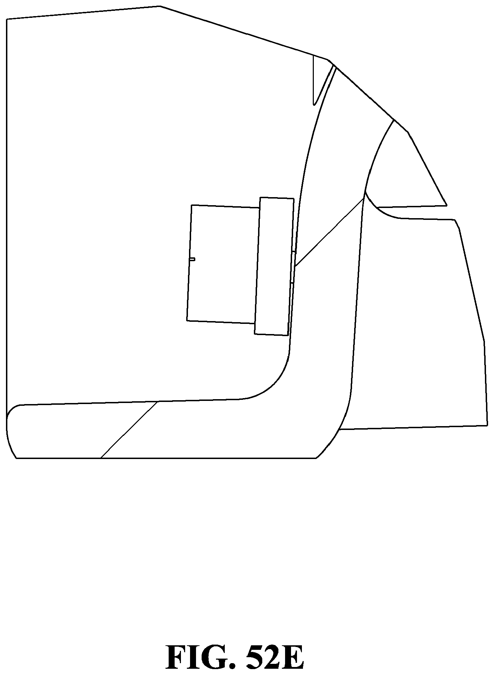

In some embodiments, as shown in Figures 50 to 52E, the drive wheel 24 may comprise one or more of the sensors 84 of the monitoring system 82 according to principles discussed above. For example, in some embodiments, a sensor 84 may be disposed between adjacent ones of the drive members 52 of the drive wheel 24.

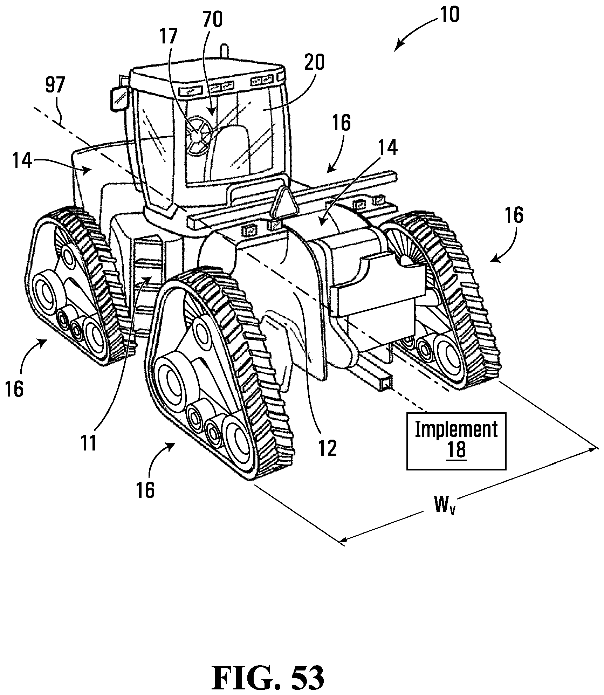

As another example, with additional reference to Figure 53, the agricultural vehicle 10 may be provided comprising four track systems 16 rather than two (i.e., two track system 16 at each side of the agricultural vehicle 10). The agricultural vehicle 10 also comprises the frame 12, the prime mover 14, and the operator cabin 20 and can be equipped with the work implement 18 to perform agricultural work. Each track system 16 comprises the drive wheel 24, the idler wheel 23 at a first longitudinal end portion of the track system 16, the idler wheel 26 at the second longitudinal end portion of the track system 16 opposite to the first longitudinal end portion, and a plurality of mid-rollers 28 intermediate the idler wheels 23, 26. The track system 16 further comprises a track 22 disposed around the wheels 23, 24, 26, 28 and driven by the drive wheel 24. The track system 16 may implement the monitoring system 82 as described above. Additionally or alternatively, the track 22 may be configured in a manner similar to the track 22 as described above.

In this example, in some embodiments, the communication device 112 may be configured to provide an indication of the magnitude of the adjustment to be made to adjust the alignment of the track 22 which may comprise instructions such as a degree of adjustment required on the actuator of the alignment mechanism 76 of the idler wheel 23 of the track system 16 located on a given longitudinal position (e.g., front or rear) of the vehicle 10 relative to, or independent from, settings of the actuator of the alignment mechanism 76 of the idler wheel 23 of the track system 16 located on the opposite longitudinal position of the vehicle 10.

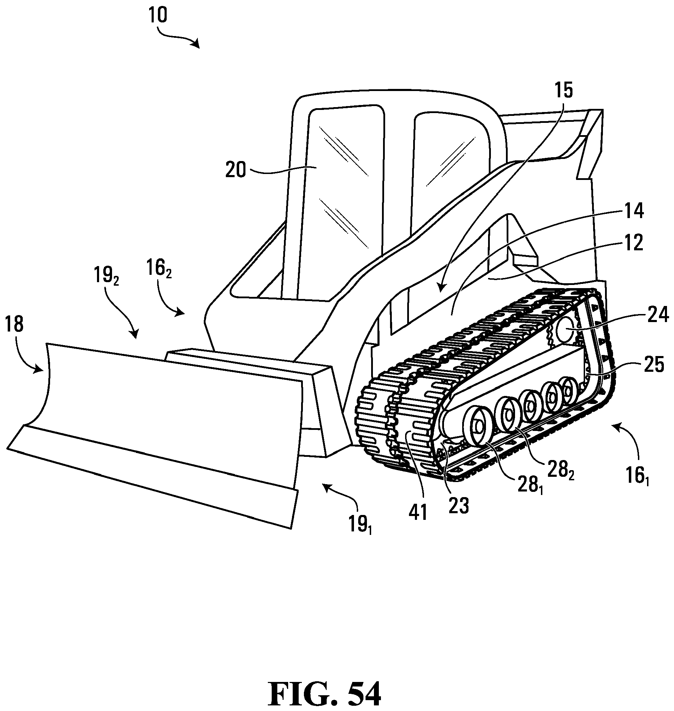

As another example, with additional reference to Figure 54, the agricultural vehicle 10 may be provided comprising two track systems 16 which entirely support and propel the vehicle 10 (i.e., without the wheels 17). The agricultural vehicle 10 also comprises the frame 12, the prime mover 14, and the operator cabin 20 and can be equipped with the work implement 18 to perform agricultural work. Each track system 16 comprises the drive wheel 24 at the first longitudinal end portion of the track system 16, the idler wheel 26 at the second longitudinal end portion of the track system 16 opposite to the first longitudinal end portion, and the plurality of mid-rollers 28 intermediate the idler wheels 23, 26. The track system 16 further comprises the track 22 disposed around the wheels 23, 24, 26, 28 and driven by the drive wheel 24. The track system 16 may implement the monitoring system 82 as described above. Additionally or alternatively, the track 22 may be configured in a manner similar to the track 22 as described above.

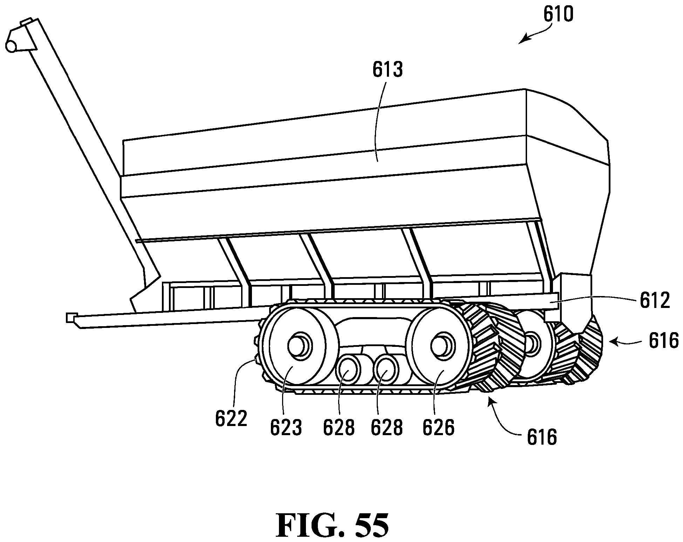

Furthermore, the work implement 18 that is drawn by the agricultural vehicle 10 or the agricultural vehicle 510 may implement the improvements disclosed herein. For instance, with additional reference to Figure 55, the work implement 18 may comprise a trailed vehicle 610 comprising a frame 612, a body 613 (e.g., a container) and track systems 616₁, 616₂. In this example, the trailed vehicle 610 is a harvest cart. In other examples, the trailed vehicle 610 may be a fertilizer cart, a sprayer, a planter or any other suitable type of trailed vehicle. Each track system 616i of the trailed vehicle 610 comprises front (i.e., leading) idler wheels 623₁, 623₂ at a first longitudinal end portion of the track system 616i, rear (i.e., trailing) idler wheels 626₁, 626₂ at a second longitudinal end portion of the track system 616i opposite the first longitudinal end portion, and a plurality of mid-rollers 628₁-628₄ intermediate the front idler wheels 623₁, 623₂ and the rear idler wheels 626₁, 626₂. The track system 616i further comprises a track 622 disposed around the wheels 626₁, 626₂, 626₁, 626₂, 628₁-628₄. The track system 616i may implement the monitoring system 82 as described above. Additionally or alternatively, the track 622 may be configured in a manner similar to the track 22 as described above.

In this example, the trailed vehicle 610 is not motorized in that it does not comprise a prime mover for driving the track systems 616. Rather, the trailed vehicle 610 is displaced by the agricultural vehicle 10 or the agricultural vehicle 510 to which the trailed vehicle 610 is attached. However, in some examples, the trailed vehicle 610 may be motorized. That is, the trailed vehicle 610 may comprise a prime mover for driving a drive wheel of each track system 616. For example, instead of comprising rear idler wheels 626, the track system 616 may comprise a drive wheel for driving the track 622.

Although in embodiments considered above the vehicle 10 is an agricultural vehicle operable by a user from the operator cabin 20, in some embodiments, the vehicle 10 may be operable by a user remotely. In some embodiments, the vehicle 10 may comprise autonomy features, allowing the vehicle 10 to be semi-autonomous and/or entirely autonomous. In some embodiments, the vehicle 10 may be free of any operator cabin.

While in embodiments considered above the vehicle 10 is an agricultural vehicle, in other embodiments, the vehicle 10 may be an industrial vehicle such as a construction vehicle (e.g., a loader, a telehandler, a bulldozer, an excavator, etc.) for performing construction work or a forestry vehicle (e.g., a feller-buncher, a tree chipper, a knuckleboom loader, etc.) for performing forestry work, a military vehicle (e.g., a combat engineering vehicle (CEV), etc.) for performing military work, an all-terrain vehicle (ATV), a snowmobile, or any other vehicle operable off paved roads. Although operable off paved roads, the vehicle 10 may also be operable on paved roads in some cases.

In some examples of implementation, any feature of any embodiment described herein may be used in combination with any feature of any other embodiment described herein.

Certain additional elements that may be needed for operation of some embodiments have not been described or illustrated as they are assumed to be within the purview of those of ordinary skill in the art. Moreover, certain embodiments may be free of, may lack and/or may function without any element that is not specifically disclosed herein.

In case of any discrepancy, inconsistency, or other difference between terms used herein and terms used in any document incorporated by reference herein, meanings of the terms used herein are to prevail and be used.

Although various embodiments and examples have been presented, this was for purposes of description, but should not be limiting. Various modifications and enhancements will become apparent to those of ordinary skill in the art.

Further, the disclosure provides the following non-limiting examples according to the following clauses.
Clause 1. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels; and
   - a processing apparatus configured to generate a signal relating to alignment of the track based on the characteristic of the given one of the wheels.
Clause 2. The monitoring system of clause 1, wherein: the wheels includes a front idler wheel and a rear idler wheel spaced from one another in a longitudinal direction of the track system; and the given one of the wheels is a given one of the front idler wheel and the rear idler wheel.
Clause 3. The monitoring system of clause 2, wherein the given one of the front idler wheel and the rear idler wheel is the front idler wheel.
Clause 4. The monitoring system of any one of clauses 1 to 3, wherein the sensor is mountable to the given one of the wheels.
Clause 5. The monitoring system of clause 4, wherein: the track comprises a plurality of wheel-contacting projections projecting from the inner surface of the track; the given one of the wheels comprises a projection-contacting region configured to contact respective ones of the wheel-contacting projections of the track; and the sensor is mountable in the projection-contacting region of the given one of the wheels.
Clause 6. The monitoring system of clause 4, wherein: the track comprises a plurality of wheel-contacting projections projecting from the inner surface of the track; and the sensor is configured to be located on the given one of the wheels within a distance from a periphery of the given one of the wheels that is no more than a height of an individual one of the wheel-contacting projections of the track.
Clause 7. The monitoring system of any one of clauses 1 to 6, wherein: the given one of the wheels comprises a rigid body comprising a hub portion, a rim portion, and a radially-extending portion between the hub portion and the rim portion; and the sensor is mountable to the rigid body of the given one of the wheels.
Clause 8. The monitoring system of clause 7, wherein the given one of the wheels comprises a covering on the rigid body of the given one of the wheels.
Clause 9. The monitoring system of clause 8, wherein the sensor is spaced from the covering of the given one of the wheels.
Clause 10. The monitoring system of any one of clauses 8 and 9, wherein the covering is an elastomeric covering.
Clause 11. The monitoring system of any one of clauses 4 to 10, wherein the sensor is fastenable to the given one of the wheels.
Clause 12. The monitoring system of clause 11, wherein the sensor is fastenable to the given one of the wheels by a mechanical fastener.
Clause 13. The monitoring system of clause 12, wherein the mechanical fastener is a threaded fastener.
Clause 14. The monitoring system of clause 11, wherein the sensor is fastenable to the given one of the wheels by an adhesive.
Clause 15. The monitoring system of any one of clauses 4 to 10, wherein the sensor comprises a quick connector configured to connect the sensor to and disconnect the sensor from a connecting part of the given one of the wheels.
Clause 16. The monitoring system of clause 15, wherein the quick connector of the sensor is configured to toollessly connect the sensor to and toollessly disconnect the sensor from the connecting part of the given one of the wheels.
Clause 17. The monitoring system of any one of clauses 15 and 16, wherein the quick connector of the sensor comprises a magnetic element configured to magnetically connect to the connecting part of the given one of the wheels.
Clause 18. The monitoring system of any one of clauses 4 to 17, wherein: the given one of the wheels comprises an opening; and the sensor is mountable in the opening of the given one of the wheels.
Clause 19. The monitoring system of clause 18, wherein the opening extends through the given one of the wheels from a first lateral side of the given one of the wheels to a second lateral side of the given one of the wheels opposite to the first lateral side of the given one of the wheels.
Clause 20. The monitoring system of any one of clauses 4 to 19, wherein the sensor is substantially flush with a lateral surface of the given one of the wheels.
Clause 21. The monitoring system of any one of clauses 4 to 20, wherein: the given one of the wheels includes a hollow internal space; and at least part of the sensor is configured to be disposed in the hollow internal space of the given one of the wheels.
Clause 22. The monitoring system of any one of clauses 1 to 21, wherein: the given one of the wheels is a first one of the wheels; the sensor is a first sensor; the monitoring system comprises a second sensor configured to sense a characteristic of a second one of the wheels; and the processing apparatus is configured to generate the signal relating to the alignment of the track based on the characteristic of the first one of the wheels and the characteristic of the second one of the wheels.
Clause 23. The monitoring system of clause 22, wherein the first one of the wheels and the second one of the wheels are spaced apart in a widthwise direction of the track system.
Clause 24. The monitoring system of any one of clauses 1 to 23, wherein: the sensor is a temperature sensor; and the characteristic of the given one of the wheels is a temperature of the given one of the wheels.
Clause 25. The monitoring system of any one of clauses 22 and 23, wherein: the first sensor is a first temperature sensor; the second sensor is a second temperature sensor; the characteristic of the first one of the wheels is a temperature of the first one of the wheels; and the characteristic of the second one of the wheels is a temperature of the second one of the wheels.
Clause 26. The monitoring system of clause 25, wherein: the processing apparatus is configured to compare the temperature of the first one of the wheels and the temperature of the second one of the wheels to generate the signal relating to the alignment of the track.
Clause 27. The monitoring system of any one of clauses 1 to 26, wherein the sensor comprises a wireless transmitter configured to wirelessly communicate with the processing apparatus.
Clause 28. The monitoring system of any one of clauses 1 to 27, wherein the signal relating to the alignment of the track is directed to a powertrain of the vehicle to control the powertrain of the vehicle.
Clause 29. The monitoring system of clause 28, wherein the signal relating to the alignment of the track is directed to the powertrain of the vehicle to control a speed of the vehicle.
Clause 30. The monitoring system of clause 29, wherein the signal relating to the alignment of the track is directed to the powertrain of the vehicle to limit the speed of the vehicle.
Clause 31. The monitoring system of clause 29, wherein the signal relating to the alignment of the track is directed to the powertrain of the vehicle to reduce the speed of the vehicle.
Clause 32. The monitoring system of any one of clauses 1 to 31, wherein: the vehicle comprises a tensioner configured to control a tension of the track; and the signal relating to the alignment of the track is directed to the tensioner to control the tensioner.
Clause 33. The monitoring system of any one of clauses 1 to 32, wherein: the vehicle comprises an alignment mechanism configured to adjust the wheels relative to the track; and the signal relating to the alignment of the track is directed to the alignment mechanism to control the alignment mechanism.
Clause 34. The monitoring system of any one of clauses 1 to 33, wherein the signal relating to the alignment of the track is directed to a communication device for conveying information to a user of the communication device.
Clause 35. The monitoring system of clause 34, wherein the communication device comprises a display for displaying the information to the user.
Clause 36. The monitoring system of any one of clauses 34 and 35, wherein the information includes an indication of the characteristic of the given one of the wheels.
Clause 37. The monitoring system of any one of clauses 34 to 36, wherein the information comprises a notification based on the characteristic of the given one of the wheels.
Clause 38. The monitoring system of clause 37, wherein the notification notifies of an adjustment to be made to adjust the alignment of the track.
Clause 39. The monitoring system of clause 38, wherein the notification indicates a magnitude of the adjustment to be made to adjust the alignment of the track.
Clause 40. The monitoring system of any one of clauses 37 to 39, wherein the notification notifies of potential damage to the track.
Clause 41. The monitoring system of any one of clauses 34 to 40, wherein the communication device is part of a user interface of an operator cabin of the vehicle.
Clause 42. The monitoring system of any one of clauses 1 to 27, wherein the signal relating to the alignment of the track relates to a speed of the vehicle.
Clause 43. The monitoring system of clause 42, wherein the signal relating to the alignment of the track relates to a reduction of the speed of the vehicle.
Clause 44. The monitoring system of clause 42, wherein the signal relating to the alignment of the track relates to a limit on the speed of the vehicle.
Clause 45. The monitoring system of any one of clauses 1 to 44, wherein the processing apparatus is configured to assess the alignment of the track based on the characteristic of the given one of the wheels.
Clause 46. The monitoring system of clause 45, wherein the processing apparatus is configured to assess the alignment of the track based on comparison of the characteristic of the given one of the wheels to reference data.
Clause 47. The monitoring system of clause 45, wherein the processing apparatus is configured to generate the signal relating to the alignment of the track when the characteristic of the given one of the wheels at least reaches a reference value.
Clause 48. The monitoring system of any one of clauses 1 to 47, wherein the sensor is weatherproof.
Clause 49. The monitoring system of any one of clauses 1 to 48, wherein the sensor comprises a sensing device configured to sense the characteristic of the given one of the wheels and a housing that houses and protects the sensing device.
Clause 50. The monitoring system of clause 49, wherein the housing comprises a protective substance over the sensing device.
Clause 51. The monitoring system of clause 50, wherein the protective substance is malleable during application of the protective substance onto the sensing device.
Clause 52. The monitoring system of any one of clauses 1 to 51, wherein the sensor is configured to sense the characteristic of the given one of the wheels even when the sensor is exposed to mud.
Clause 53. The monitoring system of clause 52, wherein the sensor is configured to sense the characteristic of the given one of the wheels even when at least part of the sensor is covered by mud.
Clause 54. The monitoring system of any one of clauses 1 to 53, wherein the processing apparatus is configured to assess the alignment of the track based on the characteristic of the given one of the wheels even when the sensor is exposed to mud.
Clause 55. The monitoring system of clause 54, wherein the processing apparatus is configured to assess the alignment of the track based on the characteristic of the given one of the wheels even when the at least part of the sensor is covered by mud.
Clause 56. The monitoring system of any one of clauses 1 to 55, wherein: the vehicle comprises a first track system comprising the track and the wheels; the vehicle comprises a second track system comprising a track comprising a ground-engaging outer surface and an inner surface opposite to the ground-engaging outer surface and mounted around a track-engaging assembly configured to move the track of the second track system around the track-engaging assembly of the second track system; the track-engaging assembly of the second track system comprises a plurality of wheels for engaging the track of the second track system; the track of the second track system is elastomeric to flex around the track-engaging assembly of the second track system; the sensor is a first sensor; the monitoring system comprises a second sensor configured to sense a characteristic of a given one of the wheels of the second track system; and the processing apparatus is configured to generate a signal relating to alignment of the track of the second track system based on the characteristic of the given one of the wheels of the second track system.
Clause 57. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels, the given one of the wheels comprising a rigid body comprising a hub portion, a rim portion, and a radially-extending portion between the hub portion and the rim portion, the sensor being mountable to the rigid body of the given one of the wheels; and
   - a processing apparatus configured to generate a signal relating to alignment of the track based on the characteristic of the given one of the wheels.
Clause 58. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the wheels including a front idler wheel and a rear idler wheel spaced from one another in a longitudinal direction of the track system, the monitoring system comprising:
   - a sensor configured to sense a characteristic of a given one of the front idler wheel and the rear idler wheel; and
   - a processing apparatus configured to generate a signal relating to alignment of the track based on the characteristic of the given one of the front idler wheel and the rear idler wheel.
Clause 59. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the track comprising a plurality of wheel-contacting projections projecting from the inner surface of the track, the monitoring system comprising:
   - a sensor configured to sense a characteristic of a given one of the wheels, the given one of the wheels comprising a projection-contacting region configured to contact respective ones of the wheel-contacting projections of the track, the sensor being located in the projection-contacting region of the given one of the wheels; and
   - a processing apparatus configured to generate a signal relating to alignment of the track based on the characteristic of the given one of the wheels.
Clause 60. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the track comprising a plurality of wheel-contacting projections projecting from the inner surface of the track, the monitoring system comprising:
   - a sensor configured to sense a characteristic of a given one of the wheels, the sensor being located on the given one of the wheels within a distance from a periphery of the given one of the wheels that is no more than a height of an individual one of the wheel-contacting projections of the track; and
   - a processing apparatus configured to generate a signal relating to alignment of the track based on the characteristic of the given one of the wheels.
Clause 61. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a first sensor configured to sense a characteristic of a first one of the wheels;
   - a second sensor configured to sense a characteristic of a second one of the wheels; and
   - a processing apparatus configured to generate a signal relating to alignment of the track based on the characteristic of the first one of the wheels and the characteristic of the second one of the wheels.
Clause 62. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels, the sensor comprising a quick connector configured to connect the sensor to and disconnect the sensor from a connecting part of the given one of the wheels; and
   - a processing apparatus configured to generate a signal relating to alignment of the track based on the characteristic of the given one of the wheels.
Clause 63. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels, the sensor comprising a connector configured to toollessly connect the sensor to and toollessly disconnect the sensor from a connecting part of the given one of the wheels; and
   - a processing apparatus configured to generate a signal relating to alignment of the track based on the characteristic of the given one of the wheels.
Clause 64. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels, the sensor comprising a magnetic element configured to magnetically connect the sensor to a connecting part of the given one of the wheels; and
   - a processing apparatus configured to generate a signal relating to alignment of the track based on the characteristic of the given one of the wheels.
Clause 65. A monitoring system for a vehicle comprising a track system for traction of the vehicle on a ground, the track system comprising a track that comprises ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of the track system, the sensor comprising a quick connector configured to connect the sensor to and disconnect the sensor from a connecting part of the track system; and
   - a processing apparatus configured to generate a signal relating to alignment of the track based on the characteristic of the track system.
Clause 66. A monitoring system for a vehicle comprising a track system for traction of the vehicle on a ground, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of the track system, the sensor comprising a connector configured to toollessly connect the sensor to and toollessly disconnect the sensor from a connecting part of the track system; and
   - a processing apparatus configured to generate a signal relating to alignment of the track based on the characteristic of the track system.
Clause 67. A monitoring system for a vehicle comprising a track system for traction of the vehicle on a ground, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of the track system; and
   - a processing apparatus configured to generate a signal based on the characteristic of the track system and notifying a user of a magnitude of an adjustment to be made to adjust alignment of the track.
Clause 68. A monitoring system for a vehicle comprising a track system for traction of the vehicle on a ground, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a first sensor configured to sense a characteristic of a first component of the track system;
   - a second sensor configured to sense a characteristic of a second component of the track system; and
   - a processing apparatus configured to generate a signal relating to alignment of the track based the characteristic of the first component of the track system and the characteristic of the second component of the track system.
Clause 69. A monitoring system for a vehicle comprising track systems for traction of the vehicle on a ground, each track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a first sensor configured to sense a characteristic of a first one of the track systems;
   - a second sensor configured to sense a characteristic of a second one of the track systems; and
   - a processing apparatus configured to generate a signal relating to alignment of at least one of the track of the first one of the track systems and the track of the second one of the track systems based on the characteristic of the first one of the track systems and the characteristic of the second one of the track systems.
Clause 70. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor being configured to interact with a processing apparatus configured to generate a signal relating to alignment of the track based on the characteristic of the given one of the wheels.
Clause 71. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the given one of the wheels comprising a rigid body comprising a hub portion, a rim portion, and a radially-extending portion between the hub portion and the rim portion, the sensor being mounted to the rigid body of the given one of the wheels.
Clause 72. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track, the wheels including a front idler wheel and a rear idler wheel spaced from one another in a longitudinal direction of the track system; and
   - a sensor mounted to a given one of the front idler wheel and the rear idler wheel and configured to sense a characteristic of the given one of the front idler wheel and the rear idler wheel.
Clause 73. A track system for traction of a vehicle, the track system comprising:
   - a track comprising a ground-engaging outer surface, an inner surface opposite to the ground-engaging outer surface, and a plurality of wheel-contacting projections projecting from the inner surface of the track;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the given one of the wheels comprising a projection-contacting region configured to contact respective ones of the wheel-contacting projections of the track, the sensor being located in the projection-contacting region of the given one of the wheels.
Clause 74. A track system for traction of a vehicle, the track system comprising:
   - a track comprising a ground-engaging outer surface, an inner surface opposite to the ground-engaging outer surface, and a plurality of wheel-contacting projections projecting from the inner surface of the track;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor being located on the given one of the wheels within a distance from a periphery of the given one of the wheels that is no more than a height of an individual one of the wheel-contacting projections of the track.
Clause 75. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track;
   - a first sensor configured to sense a characteristic of a first one of the wheels and a second sensor configured to sense a characteristic of a second one of the wheels, the first sensor and the second sensor being configured to interact with a processing apparatus configured to generate a signal relating to alignment of the track based on the characteristic of the first one of the wheels and the characteristic of the second one of the wheels.
Clause 76. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor comprising a quick connector configured to connect the sensor to and disconnect the sensor from a connecting part of the given one of the wheels, the sensor being configured to interact with a processing apparatus configured to generate a signal relating to alignment of the track based on the characteristic of the given one of the wheels.
Clause 77. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor comprising a connector configured to toollessly connect the sensor to and toollessly disconnect the sensor from a connecting part of the given one of the wheels, the sensor being configured to interact with a processing apparatus configured to generate a signal relating to alignment of the track based on the characteristic of the given one of the wheels.
Clause 78. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor comprising a magnetic element configured to magnetically connect the sensor to a connecting part of the given one of the wheels, the sensor being configured to interact with a processing apparatus configured to generate a signal relating to alignment of the track based on the characteristic of the given one of the wheels.
Clause 79. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of the track system, the sensor comprising a quick connector configured to connect the sensor to and disconnect the sensor from a connecting part of the track system, the sensor being configured to interact with a processing apparatus configured to generate a signal relating to alignment of the track based on the characteristic of the track system.
Clause 80. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of the track system, the sensor comprising a connector configured to toollessly connect the sensor to and toollessly disconnect the sensor from a connecting part of the track system, the sensor being configured to interact with a processing apparatus configured to generate a signal relating to alignment of the track based on the characteristic of the track system.
Clause 81. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of the track system, the sensor being configured to interact with a processing apparatus configured to generate a signal based on the characteristic of the track system and notifying a user of a magnitude of an adjustment to be made to adjust alignment of the track.
Clause 82. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a first sensor configured to sense a characteristic of a first component of the track system; and
   - a second sensor configured to sense a characteristic of a second component of the track system;
   the first sensor and the second sensor being configured to interact with a processing apparatus configured to generate a signal relating to alignment of the track based the characteristic of the first component of the track system and the characteristic of the second component of the track system.
Clause 83. A set of track systems for traction of a vehicle, each track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of the track system;
   the sensors of the track systems being configured to interact with a processing apparatus configured to generate a signal relating to alignment of at least one of the track of a first one of the track systems and the track of a second one of the track systems based on the characteristic of the first one of the track systems and the characteristic of the second one of the track systems.
Clause 84. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor being configured to interact with a processing apparatus configured to generate a signal relating to alignment of the track based on the characteristic of the wheel.
Clause 85. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor mounted to the rigid body and configured to sense a characteristic of the wheel.
Clause 86. A wheel for a track system for traction of a vehicle, the track system comprising a track that comprises a ground-engaging outer surface, an inner surface opposite to the ground-engaging outer surface, and a plurality of wheel-contacting projections projecting from the inner surface of the track, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the wheel comprising a projection-contacting region configured to contact respective ones of the wheel-contacting projections of the track, the sensor being located in the projection-contacting region of the wheel.
Clause 87. A wheel for a track system for traction of a vehicle, the track system comprising a track that comprises a ground-engaging outer surface, an inner surface opposite to the ground-engaging outer surface, and a plurality of wheel-contacting projections projecting from the inner surface of the track, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor being located on the wheel within a distance from a periphery of the wheel that is no more than a height of an individual one of the wheel-contacting projections of the track.
Clause 88. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor comprising a quick connector configured to connect the sensor to and disconnect the sensor from the rigid body of the wheel, the sensor being configured to interact with a processing apparatus configured to generate a signal relating to alignment of the track based on the characteristic of the wheel.
Clause 89. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor comprising a connector configured to toollessly connect the sensor to and toollessly disconnect the sensor from the rigid body of the wheel, the sensor being configured to interact with a processing apparatus configured to generate a signal relating to alignment of the track based on the characteristic of the wheel.
Clause 90. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor comprising a magnetic element configured to magnetically connect the sensor to the rigid body of the wheel, the sensor being configured to interact with a processing apparatus configured to generate a signal relating to alignment of the track based on the characteristic of the wheel.
Clause 91. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels; and
   - generating a signal relating to alignment of the track based on the characteristic of the given one of the wheels.
Clause 92. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels, the given one of the wheels comprising a rigid body comprising a hub portion, a rim portion, and a radially-extending portion between the hub portion and the rim portion, the sensor being mounted to the rigid body of the given one of the wheels; and
   - generating a signal relating to alignment of the track based on the characteristic of the given one of the wheels.
Clause 93. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the wheels including a front idler wheel and a rear idler wheel spaced from one another in a longitudinal direction of the track system, the method comprising:
   - using a sensor to sense a characteristic of a given one of the front idler wheel and the rear idler wheel; and
   - generating a signal relating to alignment of the track based on the characteristic of the given one of the front idler wheel and the rear idler wheel.
Clause 94. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the track comprising a plurality of wheel-contacting projections projecting from the inner surface of the track, the method comprising:
   - using a sensor to sense a characteristic of a given one of the wheels, the given one of the wheels comprising a projection-contacting region configured to contact respective ones of the wheel-contacting projections of the track, the sensor being located in the projection-contacting region of the given one of the wheels; and
   - generating a signal relating to alignment of the track based on the characteristic of the given one of the wheels.
Clause 95. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the track comprising a plurality of wheel-contacting projections projecting from the inner surface of the track, the method comprising:
   - using a sensor to sense a characteristic of a given one of the wheels, the sensor being located on the given one of the wheels within a distance from a periphery of the given one of the wheels that is no more than a height of an individual one of the wheel-contacting projections of the track; and
   - generating a signal relating to alignment of the track based on the characteristic of the given one of the wheels.
Clause 96. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a first sensor to sense a characteristic of a first one of the wheels;
   - using a second sensor to sense a characteristic of a second one of the wheels; and
   - generating a signal relating to alignment of the track based on the characteristic of the first one of the wheels and the characteristic of the second one of the wheels.
Clause 97. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels, the sensor comprising a quick connector configured to connect the sensor to and disconnect the sensor from a connecting part of the given one of the wheels; and
   - generating a signal relating to alignment of the track based on the characteristic of the given one of the wheels.
Clause 98. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels, the sensor comprising a connector configured to toollessly connect the sensor to and toollessly disconnect the sensor from a connecting part of the given one of the wheels; and
   - generating a signal relating to alignment of the track based on the characteristic of the given one of the wheels.
Clause 99. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels, the sensor comprising a magnetic element configured to magnetically connect the sensor to a connecting part of the given one of the wheels; and
   - generating a signal relating to alignment of the track based on the characteristic of the given one of the wheels.
Clause 100. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of the track system, the sensor comprising a quick connector configured to connect the sensor to and disconnect the sensor from a connecting part of the track system; and
   - generating a signal relating to alignment of the track based on the characteristic of the track system.
Clause 101. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of the track system, the sensor comprising a connector configured to toollessly connect the sensor to and toollessly disconnect the sensor from a connecting part of the track system; and
   - generating a signal relating to alignment of the track based on the characteristic of the track system.
Clause 102. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of the track system; and
   - generating a signal based on the characteristic of the track system and notifying a user of a magnitude of an adjustment to be made to adjust alignment of the track.
Clause 103. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a first sensor configured to sense a characteristic of a first component of the track system;
   - using a second sensor configured to sense a characteristic of a second component of the track system; and
   - generating a signal relating to alignment of the track based the characteristic of the first component of the track system and the characteristic of the second component of the track system.
Clause 104. A method for monitoring a vehicle comprising track systems, each track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a first sensor configured to sense a characteristic of a first one of the track systems;
   - using a second sensor configured to sense a characteristic of a second one of the track systems; and
   - generating a signal relating to alignment of at least one of the track of the first one of the track systems and the track of the second one of the track systems based on the characteristic of the first one of the track systems and the characteristic of the second one of the track systems.
Clause 105. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a temperature sensor configured to sense a temperature of a given one of the wheels; and
   - a processing apparatus configured to generate a signal relating to alignment of the track based on the temperature of the given one of the wheels.
Clause 106. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a temperature sensor configured to sense a temperature of a given one of the wheels, the given one of the wheels comprising a rigid body comprising a hub portion, a rim portion, and a radially-extending portion between the hub portion and the rim portion, the temperature sensor being mountable to the rigid body of the given one of the wheels; and
   - a processing apparatus configured to generate a signal relating to alignment of the track based on the temperature of the given one of the wheels.
Clause 107. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the wheels including a front idler wheel and a rear idler wheel spaced from one another in a longitudinal direction of the track system, the monitoring system comprising:
   - a temperature sensor configured to sense a temperature of a given one of the front idler wheel and the rear idler wheel; and
   - a processing apparatus configured to generate a signal relating to alignment of the track based on the temperature of the given one of the front idler wheel and the rear idler wheel.
Clause 108. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the track comprising a plurality of wheel-contacting projections projecting from the inner surface of the track, the monitoring system comprising:
   - a temperature sensor configured to sense a temperature of a given one of the wheels, the given one of the wheels comprising a projection-contacting region configured to contact respective ones of the wheel-contacting projections of the track, the temperature sensor being located in the projection-contacting region of the given one of the wheels; and
   - a processing apparatus configured to generate a signal relating to alignment of the track based on the temperature of the given one of the wheels.
Clause 109. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the track comprising a plurality of wheel-contacting projections projecting from the inner surface of the track, the monitoring system comprising:
   - a temperature sensor configured to sense a temperature of a given one of the wheels, the temperature sensor being located on the given one of the wheels within a distance from a periphery of the given one of the wheels that is no more than a height of an individual one of the wheel-contacting projections of the track; and
   - a processing apparatus configured to generate a signal relating to alignment of the track based on the temperature of the given one of the wheels.
Clause 110. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a first temperature sensor configured to sense a temperature of a first one of the wheels;
   - a second temperature sensor configured to sense a temperature of a second one of the wheels; and
   - a processing apparatus configured to generate a signal relating to alignment of the track based on the temperature of the first one of the wheels and the temperature of the second one of the wheels.
Clause 111. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a temperature sensor configured to sense a temperature of a given one of the wheels, the temperature sensor comprising a quick connector configured to connect the sensor to and disconnect the temperature sensor from a connecting part of the given one of the wheels; and
   - a processing apparatus configured to generate a signal relating to alignment of the track based on the temperature of the given one of the wheels.
Clause 112. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a temperature sensor configured to sense a temperature of a given one of the wheels, the temperature sensor comprising a connector configured to toollessly connect the temperature sensor to and toollessly disconnect the temperature sensor from a connecting part of the given one of the wheels; and
   - a processing apparatus configured to generate a signal relating to alignment of the track based on the temperature of the given one of the wheels.
Clause 113. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a temperature sensor configured to sense a temperature of a given one of the wheels, the temperature sensor comprising a magnetic element configured to magnetically connect the temperature sensor to a connecting part of the given one of the wheels; and
   - a processing apparatus configured to generate a signal relating to alignment of the track based on the temperature of the given one of the wheels.
Clause 114. A monitoring system for a vehicle comprising a track system for traction of the vehicle on a ground, the track system comprising a track that comprises ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a temperature sensor configured to sense a temperature of the track system, the temperature sensor comprising a quick connector configured to connect the temperature sensor to and disconnect the temperature sensor from a connecting part of the track system; and
   - a processing apparatus configured to generate a signal relating to alignment of the track based on the temperature of the track system.
Clause 115. A monitoring system for a vehicle comprising a track system for traction of the vehicle on a ground, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a temperature sensor configured to sense a temperature of the track system, the temperature sensor comprising a connector configured to toollessly connect the temperature sensor to and toollessly disconnect the temperature sensor from a connecting part of the track system; and
   - a processing apparatus configured to generate a signal relating to alignment of the track based on the temperature of the track system.
Clause 116. A monitoring system for a vehicle comprising a track system for traction of the vehicle on a ground, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a temperature sensor configured to sense a temperature of the track system; and
   - a processing apparatus configured to generate a signal based on the temperature of the track system and notifying a user of a magnitude of an adjustment to be made to adjust alignment of the track.
Clause 117. A monitoring system for a vehicle comprising a track system for traction of the vehicle on a ground, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a first temperature sensor configured to sense a temperature of a first component of the track system;
   - a second temperature sensor configured to sense a temperature of a second component of the track system; and
   - a processing apparatus configured to generate a signal relating to alignment of the track based the temperature of the first component of the track system and the temperature of the second component of the track system.
Clause 118. A monitoring system for a vehicle comprising track systems for traction of the vehicle on a ground, each track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a first temperature sensor configured to sense a temperature of a first one of the track systems;
   - a second temperature sensor configured to sense a temperature of a second one of the track systems; and
   - a processing apparatus configured to generate a signal relating to alignment of at least one of the track of the first one of the track systems and the track of the second one of the track systems based on the temperature of the first one of the track systems and the temperature of the second one of the track systems.
Clause 119. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of a given one of the wheels, the temperature sensor being configured to interact with a processing apparatus configured to generate a signal relating to alignment of the track based on the temperature of the given one of the wheels.
Clause 120. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of a given one of the wheels, the given one of the wheels comprising a rigid body comprising a hub portion, a rim portion, and a radially-extending portion between the hub portion and the rim portion, the temperature sensor being mounted to the rigid body of the given one of the wheels.
Clause 121. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track, the wheels including a front idler wheel and a rear idler wheel spaced from one another in a longitudinal direction of the track system; and
   - a temperature sensor mounted to a given one of the front idler wheel and the rear idler wheel and configured to sense a temperature of the given one of the front idler wheel and the rear idler wheel.
Clause 122. A track system for traction of a vehicle, the track system comprising:
   - a track comprising a ground-engaging outer surface, an inner surface opposite to the ground-engaging outer surface, and a plurality of wheel-contacting projections projecting from the inner surface of the track;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of a given one of the wheels, the given one of the wheels comprising a projection-contacting region configured to contact respective ones of the wheel-contacting projections of the track, the temperature sensor being located in the projection-contacting region of the given one of the wheels.
Clause 123. A track system for traction of a vehicle, the track system comprising:
   - a track comprising a ground-engaging outer surface, an inner surface opposite to the ground-engaging outer surface, and a plurality of wheel-contacting projections projecting from the inner surface of the track;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of a given one of the wheels, the temperature sensor being located on the given one of the wheels within a distance from a periphery of the given one of the wheels that is no more than a height of an individual one of the wheel-contacting projections of the track.
Clause 124. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track;
   - a first temperature sensor configured to sense a temperature of a first one of the wheels and a second temperature sensor configured to sense a temperature of a second one of the wheels, the first temperature sensor and the second temperature sensor being configured to interact with a processing apparatus configured to generate a signal relating to alignment of the track based on the temperature of the first one of the wheels and the temperature of the second one of the wheels.
Clause 125. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of a given one of the wheels, the temperature sensor comprising a quick connector configured to connect the temperature sensor to and disconnect the temperature sensor from a connecting part of the given one of the wheels, the temperature sensor being configured to interact with a processing apparatus configured to generate a signal relating to alignment of the track based on the temperature of the given one of the wheels.
Clause 126. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of a given one of the wheels, the temperature sensor comprising a connector configured to toollessly connect the temperature sensor to and toollessly disconnect the temperature sensor from a connecting part of the given one of the wheels, the temperature sensor being configured to interact with a processing apparatus configured to generate a signal relating to alignment of the track based on the temperature of the given one of the wheels.
Clause 127. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of a given one of the wheels, the temperature sensor comprising a magnetic element configured to magnetically connect the temperature sensor to a connecting part of the given one of the wheels, the temperature sensor being configured to interact with a processing apparatus configured to generate a signal relating to alignment of the track based on the temperature of the given one of the wheels.
Clause 128. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of the track system, the temperature sensor comprising a quick connector configured to connect the temperature sensor to and disconnect the temperature sensor from a connecting part of the track system, the temperature sensor being configured to interact with a processing apparatus configured to generate a signal relating to alignment of the track based on the temperature of the track system.
Clause 129. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of the track system, the temperature sensor comprising a connector configured to toollessly connect the temperature sensor to and toollessly disconnect the temperature sensor from a connecting part of the track system, the temperature sensor being configured to interact with a processing apparatus configured to generate a signal relating to alignment of the track based on the temperature of the track system.
Clause 130. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of the track system, the temperature sensor being configured to interact with a processing apparatus configured to generate a signal based on the temperature of the track system and notifying a user of a magnitude of an adjustment to be made to adjust alignment of the track.
Clause 131. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a first temperature sensor configured to sense a temperature of a first component of the track system; and
   - a second temperature sensor configured to sense a temperature of a second component of the track system;
   the first temperature sensor and the second temperature sensor being configured to interact with a processing apparatus configured to generate a signal relating to alignment of the track based the temperature of the first component of the track system and the temperature of the second component of the track system.
Clause 132. A set of track systems for traction of a vehicle, each track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a temperature sensor configured to sense a temperature of the track system;
   the temperature sensors of the track systems being configured to interact with a processing apparatus configured to generate a signal relating to alignment of at least one of the track of a first one of the track systems and the track of a second one of the track systems based on the temperature of the first one of the track systems and the temperature of the second one of the track systems.
Clause 133. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a temperature sensor configured to sense a temperature of the wheel, the temperature sensor being configured to interact with a processing apparatus configured to generate a signal relating to alignment of the track based on the temperature of the wheel.
Clause 134. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a temperature sensor mounted to the rigid body and configured to sense a temperature of the wheel.
Clause 135. A wheel for a track system for traction of a vehicle, the track system comprising a track that comprises a ground-engaging outer surface, an inner surface opposite to the ground-engaging outer surface, and a plurality of wheel-contacting projections projecting from the inner surface of the track, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a temperature sensor configured to sense a temperature of the wheel, the wheel comprising a projection-contacting region configured to contact respective ones of the wheel-contacting projections of the track, the temperature sensor being located in the projection-contacting region of the wheel.
Clause 136. A wheel for a track system for traction of a vehicle, the track system comprising a track that comprises a ground-engaging outer surface, an inner surface opposite to the ground-engaging outer surface, and a plurality of wheel-contacting projections projecting from the inner surface of the track, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a temperature sensor configured to sense a temperature of the wheel, the temperature sensor being located on the wheel within a distance from a periphery of the wheel that is no more than a height of an individual one of the wheel-contacting projections of the track.
Clause 137. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a temperature sensor configured to sense a temperature of the wheel, the temperature sensor comprising a quick connector configured to connect the temperature sensor to and disconnect the temperature sensor from the rigid body of the wheel, the temperature sensor being configured to interact with a processing apparatus configured to generate a signal relating to alignment of the track based on the temperature of the wheel.
Clause 138. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a temperature sensor configured to sense a temperature of the wheel, the temperature sensor comprising a connector configured to toollessly connect the temperature sensor to and toollessly disconnect the temperature sensor from the rigid body of the wheel, the temperature sensor being configured to interact with a processing apparatus configured to generate a signal relating to alignment of the track based on the temperature of the wheel.
Clause 139. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a temperature sensor configured to sense a temperature of the wheel, the temperature sensor comprising a magnetic element configured to magnetically connect the temperature sensor to the rigid body of the wheel, the temperature sensor being configured to interact with a processing apparatus configured to generate a signal relating to alignment of the track based on the temperature of the wheel.
Clause 140. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a temperature sensor to sense a temperature of a given one of the wheels; and
   - generating a signal relating to alignment of the track based on the temperature of the given one of the wheels.
Clause 141. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a temperature sensor to sense a temperature of a given one of the wheels, the given one of the wheels comprising a rigid body comprising a hub portion, a rim portion, and a radially-extending portion between the hub portion and the rim portion, the temperature sensor being mounted to the rigid body of the given one of the wheels; and
   - generating a signal relating to alignment of the track based on the temperature of the given one of the wheels.
Clause 142. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the wheels including a front idler wheel and a rear idler wheel spaced from one another in a longitudinal direction of the track system, the method comprising:
   - using a temperature sensor to sense a temperature of a given one of the front idler wheel and the rear idler wheel; and
   - generating a signal relating to alignment of the track based on the temperature of the given one of the front idler wheel and the rear idler wheel.
Clause 143. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the track comprising a plurality of wheel-contacting projections projecting from the inner surface of the track, the method comprising:
   - using a temperature sensor to sense a temperature of a given one of the wheels, the given one of the wheels comprising a projection-contacting region configured to contact respective ones of the wheel-contacting projections of the track, the temperature sensor being located in the projection-contacting region of the given one of the wheels; and
   - generating a signal relating to alignment of the track based on the temperature of the given one of the wheels.
Clause 144. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the track comprising a plurality of wheel-contacting projections projecting from the inner surface of the track, the method comprising:
   - using a temperature sensor to sense a temperature of a given one of the wheels, the temperature sensor being located on the given one of the wheels within a distance from a periphery of the given one of the wheels that is no more than a height of an individual one of the wheel-contacting projections of the track; and
   - generating a signal relating to alignment of the track based on the temperature of the given one of the wheels.
Clause 145. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a first temperature sensor to sense a temperature of a first one of the wheels;
   - using a second temperature sensor to sense a temperature of a second one of the wheels; and
   - generating a signal relating to alignment of the track based on the temperature of the first one of the wheels and the temperature of the second one of the wheels.
Clause 146. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a temperature sensor to sense a temperature of a given one of the wheels, the temperature sensor comprising a quick connector configured to connect the temperature sensor to and disconnect the temperature sensor from a connecting part of the given one of the wheels; and
   - generating a signal relating to alignment of the track based on the temperature of the given one of the wheels.
Clause 147. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a temperature sensor to sense a temperature of a given one of the wheels, the temperature sensor comprising a connector configured to toollessly connect the temperature sensor to and toollessly disconnect the temperature sensor from a connecting part of the given one of the wheels; and
   - generating a signal relating to alignment of the track based on the temperature of the given one of the wheels.
Clause 148. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a temperature sensor to sense a temperature of a given one of the wheels, the temperature sensor comprising a magnetic element configured to magnetically connect the temperature sensor to a connecting part of the given one of the wheels; and
   - generating a signal relating to alignment of the track based on the temperature of the given one of the wheels.
Clause 149. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a temperature sensor to sense a temperature of the track system, the temperature sensor comprising a quick connector configured to connect the temperature sensor to and disconnect the temperature sensor from a connecting part of the track system; and
   - generating a signal relating to alignment of the track based on the temperature of the track system.
Clause 150. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a temperature sensor to sense a temperature of the track system, the temperature sensor comprising a connector configured to toollessly connect the temperature sensor to and toollessly disconnect the temperature sensor from a connecting part of the track system; and
   - generating a signal relating to alignment of the track based on the temperature of the track system.
Clause 151. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a temperature sensor to sense a temperature of the track system; and
   - generating a signal based on the temperature of the track system and notifying a user of a magnitude of an adjustment to be made to adjust alignment of the track.
Clause 152. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a first temperature sensor configured to sense a temperature of a first component of the track system;
   - using a second temperature sensor configured to sense a temperature of a second component of the track system; and
   - generating a signal relating to alignment of the track based the temperature of the first component of the track system and the temperature of the second component of the track system.
Clause 153. A method for monitoring a vehicle comprising track systems, each track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a first temperature sensor configured to sense a temperature of a first one of the track systems;
   - using a second temperature sensor configured to sense a temperature of a second one of the track systems; and
   - generating a signal relating to alignment of at least one of the track of the first one of the track systems and the track of the second one of the track systems based on the temperature of the first one of the track systems and the temperature of the second one of the track systems.
Clause 154. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels; and
   - a processing apparatus configured to generate a signal indicative of wear of the track system based on the characteristic of the given one of the wheels.
Clause 155. The monitoring system of clause 154, wherein the signal indicative of the wear of the track system is indicative of wear of the track.
Clause 156. The monitoring system of clause 155, wherein the track comprises a plurality of traction projections projecting from the ground-engaging outer surface; and the signal indicative of the wear of the track is indicative of wear of the traction projections of the track.
Clause 157. The monitoring system of clause 155, wherein: the track comprises a rolling path configured such that roller ones of the wheels roll on the rolling path of the track; and the signal indicative of the wear of the track is indicative of wear of the rolling path of the track.
Clause 158. The monitoring system of any one of clauses 155 to 157, wherein the signal indicative of the wear of the track is indicative of attrition of elastomeric material of the track.
Clause 159. The monitoring system of any one of clauses 155 to 157, wherein the signal indicative of the wear of the track is indicative of compression set of elastomeric material of the track.
Clause 160. The monitoring system of any one of clauses 154 to 159, wherein the signal indicative of the wear of the track system is indicative of wear of the given one of the wheels.
Clause 161. The monitoring system of clause 160, wherein the given one of the wheels comprises a rigid body and a covering on the rigid body; and the signal indicative of the wear of the given one of the wheels is indicative of wear of the covering of the given one of the wheels.
Clause 162. The monitoring system of any one of clauses 154 to 161, wherein the characteristic of the given one of the wheels is a motional characteristic of the given one of the wheels.
Clause 163. The monitoring system of any one of clauses 154 to 161, wherein the characteristic of the given one of the wheels is an acceleration of the given one of the wheels.
Clause 164. The monitoring system of any one of clauses 154 to 163, wherein the sensor comprises an accelerometer.
Clause 165. The monitoring system of any one of clauses 154 to 164, wherein the processing apparatus is configured to generate the signal indicative of the wear of the track system based on the characteristic of the given one of the wheels and a speed of the vehicle.
Clause 166. The monitoring system of any one of clause 154 to 165, wherein: the characteristic of the given one of the wheels is a first characteristic of the given one of the wheels that is an acceleration of the given one of the wheels; the accelerometer is configured to sense the acceleration of the given one of the wheels; the sensor comprises a sensing element distinct from the accelerometer and configured to sense a second characteristic of the given one of the wheels; and the processing apparatus is configured to generate a signal relating to the track system based on the second characteristic of the given one of the wheels.
Clause 167. The monitoring system of clause 166, wherein the signal relating to the track system relates to alignment of the track.
Clause 168. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor being configured to interact with a processing apparatus configured to generate a signal indicative of wear of the track system based on the characteristic of the given one of the wheels.
Clause 169. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor being configured to interact with a processing apparatus configured to generate a signal indicative of wear of the track system based on the characteristic of the wheel.
Clause 170. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels; and
   - generating a signal indicative of wear of the track system based on the characteristic of the given one of the wheels.
Clause 171. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels; and
   - a processing apparatus configured to generate a signal indicative of slip of the track relative to the ground based on the characteristic of the given one of the wheels.
Clause 172. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor being configured to interact with a processing apparatus configured to generate a signal indicative of slip of the track relative to the ground based on the characteristic of the given one of the wheels.
Clause 173. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor being configured to interact with a processing apparatus configured to generate a signal indicative of slip of the track relative to the ground based on the characteristic of the wheel.
Clause 174. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels; and
   - generating a signal indicative of slip of the track relative to the ground based on the characteristic of the given one of the wheels.
Clause 175. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels; and
   - a processing apparatus configured to generate a signal relating to vibration of the given one of the wheels based on the characteristic of the given one of the wheels.
Clause 176. The monitoring system of clause 175, wherein the signal relating to the vibration of the given one of the wheels relates to a resonant frequency of the given one of the wheels.
Clause 177. The monitoring system of clause 175, wherein the signal relating to the vibration of the given one of the wheels is indicative of power output of the vehicle.
Clause 178. The monitoring system of clause 175, wherein the signal relating to the vibration of the given one of the wheels is indicative of loading of the vehicle.
Clause 179. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor being configured to interact with a processing apparatus configured to generate a signal relating to vibration of the given one of the wheels based on the characteristic of the given one of the wheels.
Clause 180. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor being configured to interact with a processing apparatus configured to generate a signal relating to vibration of the wheel based on the characteristic of the wheel.
Clause 181. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels; and
   - generating a signal relating to vibration of the given one of the wheels based on the characteristic of the given one of the wheels.
Clause 182. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels; and
   - a processing apparatus configured to generate a signal indicative of power output of the vehicle based on the characteristic of the given one of the wheels.
Clause 183. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor being configured to interact with a processing apparatus configured to generate a signal indicative of power output of the vehicle based on the characteristic of the given one of the wheels.
Clause 184. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor being configured to interact with a processing apparatus configured to generate a signal indicative of power output of the vehicle based on the characteristic of the wheel.
Clause 185. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels; and
   - generating a signal indicative of power output of the vehicle based on the characteristic of the given one of the wheels.
Clause 186. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
   - a sensor configured to sense a characteristic of a given one of the wheels; and
   - a processing apparatus configured to generate a signal indicative of loading on the vehicle based on the characteristic of the given one of the wheels.
Clause 187. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor being configured to interact with a processing apparatus configured to generate a signal indicative of loading on the vehicle based on the characteristic of the given one of the wheels.
Clause 188. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor being configured to interact with a processing apparatus configured to generate a signal indicative of loading on the vehicle based on the characteristic of the wheel.
Clause 189. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels; and
   - generating a signal indicative of loading on the vehicle based on the characteristic of the given one of the wheels.
Clause 190. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track system comprising a frame supporting the wheels, the track being elastomeric to flex around the track-engaging assembly, the monitoring system comprising:
   - a sensor configured to sense a characteristic of a given one of the wheels; and
   - a processing apparatus configured to generate a signal relating to the frame of the track system based on the characteristic of the given one of the wheels.
Clause 191. The monitoring system of clause 190, wherein the signal relating to the frame of track system relates to motion of the frame of the track system.
Clause 192. The monitoring system of clause 191, wherein the signal relating to the motion of frame of track system is indicative of pivoting of the frame of the track system about a pivot axis transverse to a longitudinal direction of the track system.
Clause 193. The monitoring system of clause 191, wherein the signal relating to the motion of frame of track system is indicative of pivoting of the frame of the track system about a pivot axis generally parallel to a longitudinal direction of the track system.
Clause 194. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track;
   - a frame supporting the wheels; and
   - a sensor configured to sense a characteristic of a given one of the wheels, the sensor being configured to interact with a processing apparatus configured to generate a signal relating to the frame of the track system based on the characteristic of the given one of the wheels.
Clause 195. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the track system comprising a frame configured to support the wheels, the wheel comprising:
   - a rigid body comprising a hub portion, a rim portion, and a radially-extending portion between the hub portion and the rim portion; and
   - a sensor configured to sense a characteristic of the wheel, the sensor being configured to interact with a processing apparatus configured to generate a signal relating to the frame of the track system based on the characteristic of the wheel.
Clause 196. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the track system comprising a frame supporting the wheels, the method comprising:
   - using a sensor to sense a characteristic of a given one of the wheels; and
   - generating a signal relating to the frame of the track system based on the characteristic of the given one of the wheels.
Clause 197. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track system comprising a frame supporting the wheels, the track being elastomeric to flex around the track-engaging assembly, the monitoring system comprising:
   - a sensor configured to sense a characteristic of a given one of the wheels; and
   - a processing apparatus configured to generate a signal relating to a duty cycle of the vehicle based on the characteristic of the given one of the wheels.
Clause 198. A track system for traction of a vehicle, the track system comprising:
   - a track comprising a ground-engaging outer surface and an inner surface opposite to the ground-engaging outer surface;
   - a track-engaging assembly configured to move the track around the track-engaging assembly, the track being elastomeric to flex around the track-engaging assembly, the track-engaging assembly comprising a plurality of wheels for engaging the track; and
   - a sensor configured to sense a characteristic of a given one of the wheels, the sensor being configured to interact with a processing apparatus configured to generate a signal relating to a duty cycle of the vehicle based on the characteristic of the given one of the wheels.
Clause 199. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
   - a rigid body comprising a hub portion, a rim portion, and a radially-extending portion between the hub portion and the rim portion; and
   - a sensor configured to sense a characteristic of the wheel, the sensor being configured to interact with a processing apparatus configured to generate a signal relating to a duty cycle of the vehicle based on the characteristic of the wheel.
Clause 200. A method for monitoring a vehicle comprising a track system, the track system comprising a track that comprises a ground-engaging outer surface and an inner surface opposite to the ground-engaging outer surface and is mounted around a track-engaging assembly configured to move the track around the track-engaging assembly, the track-engaging assembly comprising a plurality of wheels for engaging the track, the track being elastomeric to flex around the track-engaging assembly, the method comprising:
   - using a sensor to sense a characteristic of a given one of the wheels; and
   - generating a signal relating to a duty cycle of the vehicle based on the characteristic of the given one of the wheels.

## Claims

1. A monitoring system for a vehicle comprising a track for traction of the vehicle on a ground, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the monitoring system comprising:
- a sensor configured to sense a characteristic of a given one of the wheels; and
- a processing apparatus configured to generate a signal relating to alignment of the track based on the characteristic of the given one of the wheels.

2. The monitoring system of claim 1, wherein: the wheels includes a front idler wheel and a rear idler wheel spaced from one another in a longitudinal direction of the track system; and the given one of the wheels is a given one of the front idler wheel and the rear idler wheel.

3. The monitoring system of any one of claims 1 and 2, wherein: the given one of the wheels comprises a rigid body comprising a hub portion, a rim portion, and a radially-extending portion between the hub portion and the rim portion; and the sensor is mountable to the rigid body of the given one of the wheels.

4. The monitoring system of claim 1, wherein the sensor is fastenable to the given one of the wheels by at least one of a mechanical fastener and an adhesive.

5. The monitoring system claim 4, wherein: the sensor comprises a quick connector configured to connect the sensor to and disconnect the sensor from a connecting part of the given one of the wheels; and the quick connector of the sensor comprises a magnetic element configured to magnetically connect to the connecting part of the given one of the wheels.

6. The monitoring system of any one of claims 1 to 5, wherein: the given one of the wheels is a first one of the wheels; the sensor is a first sensor; the monitoring system comprises a second sensor configured to sense a characteristic of a second one of the wheels; the processing apparatus is configured to generate the signal relating to the alignment of the track based on the characteristic of the first one of the wheels and the characteristic of the second one of the wheels; and the first one of the wheels and the second one of the wheels are spaced apart in a widthwise direction of the track system.

7. The monitoring system of any one of claims 1 to 6, wherein: the sensor is a temperature sensor; and the characteristic of the given one of the wheels is a temperature of the given one of the wheels.

8. The monitoring system of claim 6, wherein: the first sensor is a first temperature sensor; the second sensor is a second temperature sensor; the characteristic of the first one of the wheels is a temperature of the first one of the wheels; and the characteristic of the second one of the wheels is a temperature of the second one of the wheels.

9. The monitoring system of claim 8, wherein: the processing apparatus is configured to compare the temperature of the first one of the wheels and the temperature of the second one of the wheels to generate the signal relating to the alignment of the track.

10. The monitoring system of any one of claims 1 to 9, wherein the sensor comprises a wireless transmitter configured to wirelessly communicate with the processing apparatus.

11. The monitoring system of claim 1, wherein the signal relating to the alignment of the track is directed to a powertrain of the vehicle to control a speed of the vehicle.

12. The monitoring system of any one of claims 1 to 11, wherein: the vehicle comprises an alignment mechanism configured to adjust the wheels relative to the track; and the signal relating to the alignment of the track is directed to the alignment mechanism to control the alignment mechanism.

13. The monitoring system of any one of claims 1 to 12, wherein the signal relating to the alignment of the track is directed to a communication device for conveying information to a user of the communication device.

14. A wheel for a track system for traction of a vehicle, the track system comprising a track that comprises a ground-engaging outer surface and an inner surface opposite to the ground-engaging outer surface, the track system comprising a track-engaging assembly configured to move the track around the track-engaging assembly, the track being elastomeric to flex around the track-engaging assembly, the wheel being configured to be one of a plurality of wheels of the track-engaging assembly, the wheel comprising:
- a rigid body comprising a hub portion, a rim portion, and a radially-extending portion between the hub portion and the rim portion; and
- a sensor configured to sense a characteristic of the wheel, the sensor being configured to interact with a processing apparatus configured to generate a signal relating to alignment of the track based on the characteristic of the wheel.

15. A method for monitoring a vehicle comprising a track, the track comprising a ground-engaging outer surface and an inner surface opposite to the ground-engaging outer surface and being mounted around a track-engaging assembly configured to move the track around the track-engaging assembly, the track-engaging assembly comprising a plurality of wheels for engaging the track, the track being elastomeric to flex around the track-engaging assembly, the method comprising:
- using a sensor to sense a characteristic of a given one of the wheels; and
- generating a signal relating to alignment of the track based on the characteristic of the given one of the wheels.
